# EUROPEAN PATENT APPLICATION

(11) **EP 4 838 855 A1**
(43) Date of publication of application: **11.11.2026**
(21) Application number: 24914677.0
(22) Date of filing: 05.01.2024
(51) Int. Cl.: H04L 41/16, H04W 24/02, H04W 16/22

(54) **COMMUNICATION METHOD, APPARATUS, DEVICE, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN)
(74) Representative: Grassi, Stefano
(86) International application number: PCT/CN2024/070948
(87) International publication number: WO 2025/145448

(57) **Abstract**

Provided are communication methods and apparatuses, devices, a chip, and a storage medium. The method includes: transmitting, to a network device, first capability, wherein the first capability is indicative of a parameter configuration range corresponding to one or more AI models supported by a terminal device; receiving the parameter configuration from the network device; and communicating with the network device based on the parameter configuration.

## Description

### TECHNICAL FIELD

The present disclosure relates to the technical field of communication, and in particular to communication methods and apparatuses, devices, a chip, and a storage medium.

### BACKGROUND

In the related art, a terminal device may apply an Artificial Intelligence (AI) model to uplink transmission (such as uplink channel coding) and/or downlink transmission (such as downlink channel decoding). During uplink and downlink transmission performed by the terminal device using the AI model, it may be necessary to switch the AI model based on parameter configuration indicated by a network device. However, switching of the AI model may exceed the capability of the terminal device, or may degrade the performance of uplink and downlink transmission based on the AI model due to frequent switching of the AI model.

### SUMMARY

The present disclosure provides communication methods and apparatus, devices, a chip, and a storage medium.

In a first aspect, a communication method provided by the present disclosure is implemented by a terminal device, and the method includes:
transmitting, to a network device, a first capability, where the first capability is indicative of a parameter configuration range corresponding to one or more AI models supported by the terminal device;
receiving a parameter configuration from the network device, and communicating with the network device based on the parameter configuration.

In a second aspect, a communication method provided by the present disclosure is implemented by a network device, and the method includes:
receiving a first capability from a terminal device, where the first capability is indicative of a parameter configuration range corresponding to one or more AI models supported by the terminal device;
transmitting, to the terminal device, a parameter configuration based on the first capability, where the parameter configuration is used for communication between the terminal device and the network device.

In a third aspect, a terminal apparatus provided by the present disclosure includes:
a first communication unit configured to transmit, to a network device, a first capability, where the first capability is indicative of a parameter configuration range corresponding to one or more AI models supported by the terminal device;
the first communication unit is further configured to receive a parameter configuration from the network device, and communicate with the network device based on the parameter configuration.

In a fourth aspect, a network apparatus provided by the present disclosure includes:
a second communication unit configured to receive a first capability from a terminal device, where the first capability is indicative of a parameter configuration range corresponding to one or more AI models supported by the terminal device;
the second communication unit is further configured to transmit, to the terminal device, a parameter configuration based on the first capability, where the parameter configuration is used for communication between the terminal device and the network device.

In a fifth aspect, a terminal device provided by the present disclosure includes a memory, a processor, and a transceiver. The memory is configured to store a computer program; the processor is connected to the memory, and configured to invoke and run the computer program from the memory to implement the method of the first aspect; and the transceiver is configured to receive and transmit information during information exchange with other external devices.

In a sixth aspect, a network device provided by the present disclosure includes a memory, a processor, and a transceiver. The memory is configured to store a computer program; the processor is connected to the memory, and configured to invoke and run the computer program from the memory to implement the method of the second aspect; and the transceiver is configured to receive and transmit information during information exchange with other external devices.

In a seventh aspect, a chip provided by the present disclosure includes a memory, a processor, and a transceiver. The memory is configured to store a computer program; the processor is connected to the memory, and configured to invoke and run the computer program from the memory, so that a device equipped with the chip performs the method of the first aspect or the second aspect; and the transceiver is configured to receive and transmit information during information exchange between devices or chips.

In an eighth aspect, a computer-readable storage medium provided by the present disclosure has stored a computer program that, when executed by at least one processor, implements the method of the first aspect or the second aspect.

In a ninth aspect, a computer program product provided by the present disclosure includes a computer storage medium storing a computer program, where the computer program includes instructions executable by at least one processor, and the instructions, when executed by the at least one processor, may implement the method of the first aspect or the second aspect.

In a tenth aspect, a computer program provided by the present disclosure, when run on a computer, may cause the computer to perform the method of the first aspect or the second aspect.

Embodiments of the present disclosure provide communication methods and apparatuses, devices, a chip, and a storage medium. A terminal device may transmit, to a network device, a first capability, where the first capability is indicative of a parameter configuration range corresponding to one or more AI models supported by the terminal device; the terminal device may receive a parameter configuration from the network device, and communicate with the network device based on the parameter configuration. In this way, by transmitting the first capability to the network device, the terminal device enables the network device to perform reasonable parameter configuration, so that switching of an AI model performed by the terminal device based on the parameter configuration is prevented from exceeding the capability of the terminal device (such as dynamic AI model switching), and frequent AI model switching caused by the parameter configuration is avoided as much as possible, thereby ensuring the performance of uplink and downlink transmission based on the AI model.

### BRIEF DESCRIPTION OF THE DRAWINGS

The accompanying drawings described herein are provided for further understanding of the present disclosure, and constitute a part of the present disclosure. The exemplary embodiments of the present disclosure and descriptions thereof are used to explain the present disclosure, and do not constitute an improper limitation to the present disclosure. In the accompanying drawings:
FIG. 1 is a schematic diagram of a communication architecture;
FIG. 2 is a schematic diagram of a neuron structure;
FIG. 3 is a schematic diagram of a neural network structure;
FIG. 4 is a schematic flowchart of a communication method according to an embodiment of the present disclosure;
FIG. 5 is a schematic structural composition diagram of a terminal apparatus 500 according to an embodiment of the present disclosure;
FIG. 6 is a schematic structural composition diagram of a network apparatus 600 according to an embodiment of the present disclosure;
FIG. 7 is a schematic structural composition diagram of a communication device according to an embodiment of the present disclosure;
FIG. 8 is a schematic structural composition diagram of a chip according to an embodiment of the present disclosure;
FIG. 9 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure. The described embodiments are part of the embodiments of the present disclosure, rather than all of the embodiments. Based on the embodiments in the present disclosure, all other embodiments obtained by a person of ordinary skill in the art without creative efforts shall fall within the scope of protection of the present disclosure.

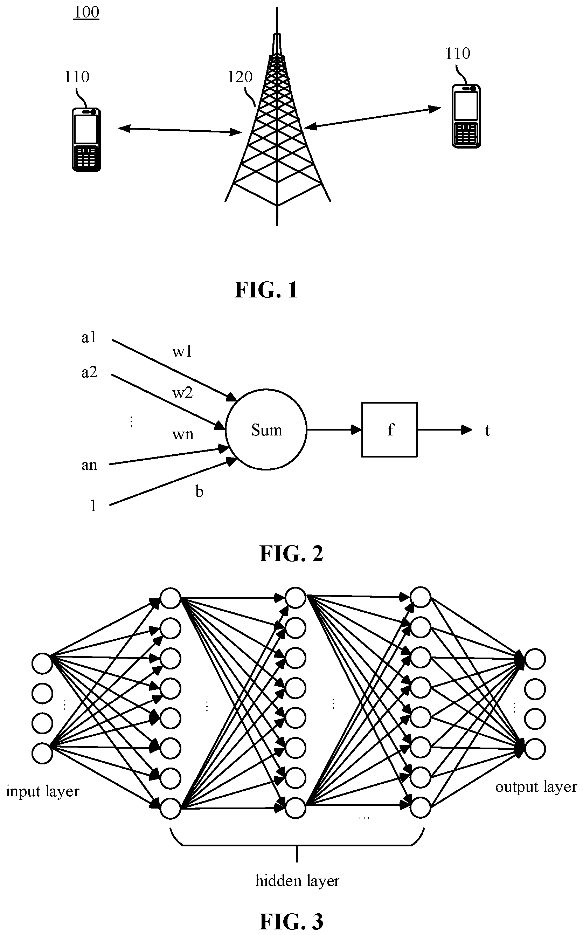

FIG. 1 is a schematic diagram of an application scenario of embodiments of the present disclosure.

As shown in FIG. 1, a communication system 100 may include a terminal device 110 and a network device 120. The network device 120 may communicate with the terminal device 110 over an air interface. Multi-service transmission is supported between the terminal device 110 and the network device 120.

It should be understood that the embodiments of the present disclosure are exemplarily described with the communication system 100 only, but the embodiments of the present disclosure are not limited thereto. That is, the technical solutions of the embodiments of the present disclosure may be applied to various communication systems, for example: a Long Term Evolution (LTE) system, LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), or a future communication system.

In the communication system 100 shown in FIG. 1, the network device 120 may be an access network device that communicates with the terminal device 110. The access network device may provide communication coverage for a specific geographical area, and may communicate with the terminal device 110 located within the coverage area.

The network device 120 may be an Evolutional Node B (eNB or eNodeB) in an LTE system, or a Next Generation Radio Access Network (NG RAN) device, or a base station (gNB) in an NR system, or a radio controller in a Cloud Radio Access Network (CRAN), or the network device 120 may be a relay station, an access point, a vehicle-mounted device, a wearable device, a hub, a switch, a bridge, a router, or a network device in a future evolved Public Land Mobile Network (PLMN).

The terminal device 110 may be any terminal device, including but not limited to a terminal device connected to the network device 120 or another terminal device in a wired or wireless manner.

For example, the terminal device 110 may refer to an access terminal, User Equipment (UE), a subscriber unit, a subscriber station, a mobile station, a mobile platform, a remote station, a remote terminal, a mobile device, a subscriber terminal, a terminal, a wireless communication device, a user agent, or a user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device or another processing device connected to a wireless modem, a vehicle-mounted device, a wearable device, a terminal device in a 5G network, or a terminal device in a future evolved network.

The terminal device 110 may be used for Device to Device (D2D) communication.

FIG. 1 exemplarily shows one network device and two terminal devices. Optionally, the communication system 100 may include a plurality of network devices, and the coverage area of each network device may include other numbers of terminal devices, which is not limited in the embodiments of the present disclosure.

It should also be understood that the "predefined" or "predefined rule" mentioned in the embodiments of the present disclosure may be implemented by pre-storing corresponding codes, tables in devices (for example, including terminal devices and network devices) or in other manners for indicating relevant information, and the specific implementation manner of the present disclosure is not limited thereto.

To facilitate understanding of the technical solutions of the embodiments of the present disclosure, related technologies of the embodiments of the present disclosure are described below. The following related technologies may be optionally combined with the technical solutions of the embodiments of the present disclosure, all of which fall within the scope of protection of the embodiments of the present disclosure.

An AI model is a model capable of handling various tasks, which has self-learning and self-adaptation capabilities, and can perform dynamic adjustment and decision-making according to changes in the environment. An AI model may also be referred to as a Machine Learning (ML) model, and the two are equivalent or interchangeable.

In practical applications, an AI model may be composed of a neural network. A neural network is an operation model composed of a plurality of interconnected neuron nodes, where connections between nodes represent weighted values from input signals to output signals, referred to as weights; each node may perform weighted summation on different input signals and output a result through a specific activation function. Referring to the schematic diagram of the neuron structure shown in FIG. 2, a1, a2, ..., an and 1 are inputs of the neuron, w1, w2, ..., wn and b represent weights, Sum represents a summation function, f represents an activation function, and t is an output result.

A simple neural network is shown in FIG. 3, which includes an input layer, a hidden layer and an output layer. Different outputs can be generated through different connection modes, weights and activation functions of a plurality of neurons, so as to fit the mapping relationship from input to output. Each upper-level node is connected to all its lower-level nodes. Such a fully connected model may also be called a Deep Neural Network (DNN).

An AI model can be trained and obtained through processes such as dataset construction, training, verification and testing. In the case where a neural network is used for wireless communication between a terminal device and a network device, training can be divided into offline training and online training. The network device may obtain a static training result through offline training on a dataset, which may be referred to as offline training herein. During use of the AI model by the network device or the terminal device, as the terminal device performs further measurement and/or reporting, the network device may continue to collect more data and perform real-time online training to optimize parameters of the AI model, so as to achieve better inference and prediction results. After the AI model is obtained, corresponding model output can be inferred by inputting currently obtained information into the AI model.

When an AI model is used for wireless communication, it can be divided into a single-end AI model and a dual-end AI model. The single-end AI model can be used after being deployed on one side of a terminal device or a network device, and training of the AI model can also be performed on a single side. The dual-end AI model needs to be deployed in pairs on the terminal device side and the network device side, and the AI models on both sides need to be trained together, that is, the AI models deployed on both sides are corresponding and cannot be used or updated independently.

To implement different functions, different AI models can be introduced with corresponding inputs and outputs defined. For example, when an AI model is used for Channel State Information (CSI) feedback, channel information (such as eigenvectors, beam information, delay information, etc.) obtained based on reference signal measurement can be used as an input of the AI model, so as to infer corresponding CSI quantization bits. A corresponding AI model may be provided on the network device side, and corresponding channel information can be inferred by taking the CSI quantization bits as input.

Exemplarily, when an AI model is used for beam management, the terminal device may take Reference Signal Receiving Power (RSRP) corresponding to a plurality of beams (CSI-RS resources) in a measured second beam (Channel State Information-Reference Signal (CSI-RS) resource) set as input, infer a best beam (CSI-RS resource index) in a first beam set and corresponding RSRP based on a first AI model, and report the inference result to the network device. In addition, the AI model can also be used for other processes such as positioning, channel coding, data channel decoding, modulation and demodulation, and channel estimation.

Generalization capability of an AI model is one of the most important concepts in machine learning, which determines the practical value of the AI model, and the generalization capability of an AI model serves as an important indicator for evaluating the quality of an AI model. The generalization capability of an AI model refers to the ability of knowledge learned from a training set by the AI model to be applied to a test set or a new dataset. That is, an AI model with good generalization capability can be applied to different datasets (such as a test set or a new dataset), while an AI model with poor generalization capability is prone to overfitting, that is, it performs well on the training set but poorly on the test set or the new dataset.

In the embodiments of the present disclosure, the generalization capability of an AI model used by a terminal device may be represented by a parameter configuration range corresponding to the AI model. If the terminal device can use a same AI model for processing different values of a parameter configuration indicated by a network device, that is, the same AI model can support different values of the parameter configuration, it indicates that the AI model has good generalization capability; otherwise, if the terminal device needs to switch between different AI models, that is, different AI models are used to support different values of the parameter configuration, it indicates that these AI models have poor generalization capability.

Exemplarily, in a case where the terminal device trains a same AI model for different values of a parameter configuration, the terminal device can use the same AI model for the parameter configuration indicated by the network device, and the AI model has good generalization capability in this case.

Exemplarily, in a case where the terminal device trains different AI models for different values of a parameter configuration, the terminal device may need to use different AI models for the parameter configuration indicated by the network device, and the AI models have poor generalization capability in this case.

In the related art, a terminal device may apply an AI model to uplink transmission (such as uplink channel coding, uplink precoding, or uplink modulation) and/or downlink transmission (such as downlink channel decoding, downlink channel estimation, or downlink data detection). During uplink and downlink transmission performed by the terminal device using the AI model, generalization capabilities of AI models used by different terminal devices may be different. Since the network device does not know the generalization capability of the AI model used by the terminal device, it cannot determine whether the indicated parameter configuration will cause switching of the AI model. In a case where the generalization capability of the AI model is poor (for example, the terminal device trains different AI models for different values of the parameter configuration), the terminal device may need to switch the AI model based on the parameter configuration indicated by the network device. However, switching of the AI model may exceed the capability of the terminal device, or may degrade the performance of uplink and downlink transmission based on the AI model due to frequent switching of the AI model.

Based on this, the embodiments of the present disclosure provide a communication method. A terminal device may transmit a first capability to a network device, where the first capability is indicative of a parameter configuration range corresponding to one or more AI models supported by the terminal device; the terminal device may receive a parameter configuration from the network device, and communicate with the network device based on the parameter configuration. In this way, by transmitting the first capability to the network device, the terminal device enables the network device to perform reasonable parameter configuration, so that AI model switching performed by the terminal device based on the parameter configuration is prevented from exceeding the capability of the terminal device (such as dynamic AI model switching), and frequent AI model switching caused by the parameter configuration is avoided as much as possible, thereby ensuring the performance of AI model-based uplink and downlink transmission.

To facilitate understanding of the technical solutions of the embodiments of the present disclosure, the technical solutions of the present disclosure are described in detail below through specific embodiments. The above related technologies may be optionally combined with the technical solutions of the embodiments of the present disclosure, all of which fall within the scope of protection of the embodiments of the present disclosure. The embodiments of the present disclosure include at least part of the following content.

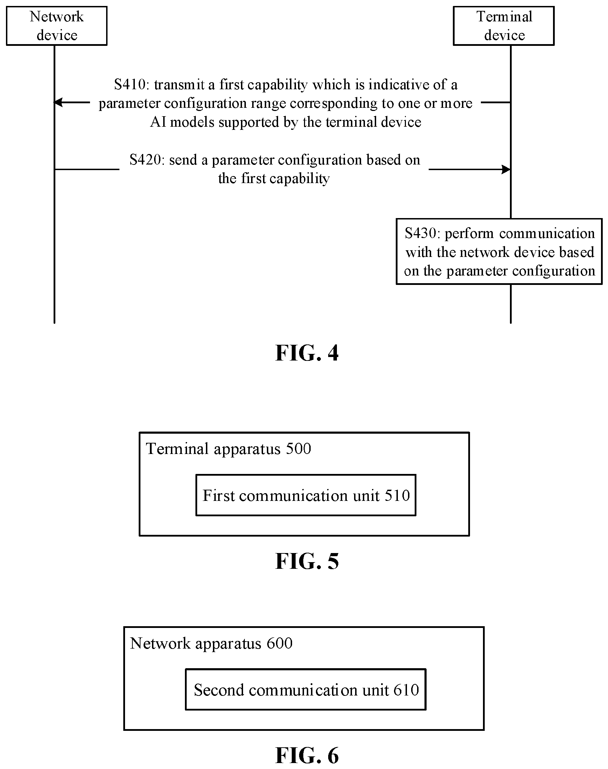

FIG. 4 is a schematic flowchart of a communication method according to an embodiment of the present disclosure. As shown in FIG. 4, the method may include the following operations.

S410: A terminal device transmits a first capability to a network device, where the first capability is indicative of a parameter configuration range corresponding to one or more AI models supported by the terminal device.

Correspondingly, the network device receives the first capability reported by the terminal device.

It should be noted that the operation of transmitting the first capability by the terminal device to the network device may be understood as that the terminal device transmits generalization capabilities of one or more AI models to the network device, where the generalization capabilities of the one or more AI models may be indicated by the parameter configuration range corresponding to the one or more AI models supported by the terminal device.

Correspondingly, the network device may receive the generalization capabilities of one or more AI models from the terminal device.

It should be noted that the parameter configuration range corresponding to one or more AI models may be understood as a range of parameter configurations corresponding to one AI model when the number of AI models is one, or ranges of parameter configurations respectively corresponding to a plurality of AI models when the number of AI models is multiple.

In some embodiments, the parameter configuration may include a configuration of one or more of the following parameters: Demodulation Reference Signal (DMRS), CSI-RS, CSI report content, Modulation and Coding Scheme (MCS), transport block size, the number of transmission layers, transmission bandwidth, the number of antenna ports, carrier frequency, subcarrier spacing, Transmission Configuration Indicator (TCI) state, cell Identity (ID), and Multiple-Input Multiple-Output (MIMO) transmission scheme.

In some embodiments, AI models corresponding to ranges of different parameter configurations may be independent or correlated, which is not limited in the embodiments of the present disclosure.

It should be noted that AI models corresponding to ranges of different parameter configurations may be independent, that is, ranges of different parameter configurations may correspond to different AI models. For example, AI model 1, AI model 2 and AI model 3 are three different AI models respectively, a DMRS configuration range may correspond to AI model 1, a CSI-RS configuration range may correspond to AI model 2, and a CSI report content configuration range may correspond to AI model 3.

It should also be noted that AI models corresponding to ranges of different parameter configurations may also be correlated, that is, ranges of different parameter configurations may correspond to the same AI model. For example, a transport block size configuration range, a transmission layer number configuration range, a transmission bandwidth configuration range and an antenna port number configuration range may all correspond to AI model 1; for another example, a carrier frequency configuration range, a subcarrier spacing configuration range and a TCI state configuration range may all correspond to AI model 2.

In some embodiments, the parameter configuration range corresponding to one or more AI models may include whether the terminal device uses the same AI model for different values of the parameter configuration.

That is, the parameter configuration range corresponding to one or more AI models may include: when the number of AI models supported by the terminal device is one, the terminal device may use the one AI model for different values of the parameter configuration; and when the number of AI models supported by the terminal device is multiple, the terminal device may use different AI models for different values of the parameter configuration.

It should be noted that the terminal device may indicate, to the network device by using 1 bit, whether the AI model deployed on the terminal device side supports different values of the parameter configuration.

Exemplarily, it is assumed that the parameter configuration has P values, denoted as value 1, value 2, ..., value P respectively. When the number of AI models supported by the terminal device is one, the terminal device may use the one AI model for value 1, value 2, ..., value P.

For example, in a case where the parameter configuration is DMRS configuration, it is assumed that the AI model supported by the terminal device is AI model 1, and the terminal device may use AI model 1 for three values of a DMRS base sequence: sequence ID1, sequence ID2 and sequence ID3.

For another example, in a case where the parameter configuration is CSI-RS configuration, it is assumed that the AI model supported by the terminal device is AI model 2, and the terminal device may use AI model 2 for three values of a CSI-RS symbol number: symbol number 1, symbol number 2 and symbol number 3.

For another example, in a case where the parameter configuration is CSI report content configuration, it is assumed that the AI model supported by the terminal device is AI model 3, and the terminal device may use AI model 3 for RSRP reporting and CSI reporting.

For another example, in a case where the parameter configuration is MCS configuration, it is assumed that the AI model supported by the terminal device is AI model 4, and the terminal device may use AI model 4 for MCS indexes 0-12 and 12-27.

Exemplarily, it is assumed that the parameter configuration has Q values, denoted as value 1, value 2, ..., value Q respectively. When the number of AI models supported by the terminal device is multiple, the terminal device may use different AI models for value 1, value 2, ..., value Q.

For example, in a case where the parameter configuration is DMRS configuration, it is assumed that the AI models supported by the terminal device are AI model 1 and AI model 2, and the terminal device may use AI model 1 and AI model 2 respectively for two values of a DMRS base sequence: sequence ID1 and sequence ID2.

For another example, in a case where the parameter configuration is CSI-RS configuration, it is assumed that the AI models supported by the terminal device are AI model 3 and AI model 4, and the terminal device may use AI model 3 and AI model 4 respectively for two values of a CSI-RS symbol number: symbol number 1 and symbol number 2.

For another example, in a case where the parameter configuration is CSI report content configuration, it is assumed that the AI models supported by the terminal device are AI model 5 and AI model 6, and the terminal device may use AI model 5 and AI model 6 respectively for RSRP reporting and CSI reporting.

For another example, in a case where the parameter configuration is MCS configuration, it is assumed that the AI models supported by the terminal device are AI model 7 and AI model 8, and the terminal device may use AI model 7 and AI model 8 for MCS indexes 0-12 and 12-27.

Whether the terminal device uses the same AI model for different values of the parameter configuration is described in detail below in conjunction with several possible implementations.

In a possible implementation, the DMRS configuration range corresponding to one or more AI models may include whether the terminal device uses the same AI model for different values of the DMRS configuration.

Since AI model training relies on received data/signals of DMRS as input, different DMRS configurations may correspond to different AI models, and different DMRS inputs may also obtain outputs of different AI models.

The terminal device may train all DMRS configurations possibly indicated by the network device (such as DMRS base sequence, DMRS Code Division Multiplexing (CDM) group, DMRS port multiplexing mode, number of DMRS ports, DMRS port set, etc.) on one AI model, so that the trained AI model has good generalization capability, and the terminal device does not need to switch the AI model for any DMRS configuration indicated by the network device. However, such a training manner requires a large data/signal set, model parameter adjustment is complex, and it is difficult to ensure the accuracy of obtained channel estimation or detection performance.

The terminal device may also train different AI models for different DMRS configurations (such as different DMRS base sequences, different DMRS CDM groups, or different DMRS port multiplexing modes), with each AI model targeting part of the configurations, which not only reduces training complexity but also improves channel estimation performance or detection performance. However, the AI model obtained based on this solution has poor generalization capability, and when the network device adopts different DMRS configurations, the terminal device may need to switch the corresponding AI model, so as to be able to use the AI model corresponding to the current DMRS configuration for channel estimation or detection.

Exemplarily, it is assumed that the DMRS base sequence has two values, denoted as value 1 and value 2 respectively, then the range of the DMRS base sequence corresponding to one or more AI models may include whether the terminal device uses the same AI model for the two values of the DMRS base sequence. For example, the terminal device uses the same AI model for value 1 and value 2; for another example, the terminal device uses different AI models for value 1 and value 2 respectively.

With this method, different terminal devices may adopt different AI model training methods, so as to obtain AI models with different generalization capabilities. Since the network device does not know the generalization capability of one or more AI models used by a terminal device, it cannot determine whether the indicated DMRS configuration will cause AI model switching. Therefore, the terminal device may report the generalization capability of the one or more AI models to the network device (that is, the terminal device may transmit the first capability to the network device), so that the network device may determine whether adjustment of the DMRS configuration (such as adjustment of a DMRS base sequence or a DMRS CDM group) will cause AI model switching on the terminal device side based on the generalization capability of the AI model reported by the terminal device.

In another possible implementation, the CSI-RS configuration range corresponding to one or more AI models may include whether the terminal device uses the same AI model for different values of the CSI-RS configuration.

Since CSI measurement is performed based on CSI-RS, AI model training relies on received data/signals of CSI-RS as input, different CSI-RS configurations may correspond to different AI models, and different CSI-RS data/signal inputs may also result in outputs of the different AI models.

The terminal device may train all CSI-RS configurations possibly indicated by the network device (such as CSI-RS base sequence, CSI-RS port number set, CSI-RS port multiplexing mode, the number of CSI-RS symbols, CSI-RS transmission bandwidth, etc.) on one AI model, so that the trained AI model has good generalization capability, and the terminal device does not need to switch the AI model for any CSI-RS configuration indicated by the network device. However, such a training manner requires a large data/signal set, model parameter adjustment is complex, and it is difficult to ensure the accuracy of obtained CSI feedback.

The terminal device may also train different AI models for different CSI-RS configurations (such as different CSI-RS base sequences, different CSI-RS port number sets, or different CSI-RS port multiplexing modes), with each AI model targeting part of the configurations, which not only reduces training complexity but also improves CSI feedback performance. However, the AI models obtained based on this solution have poor generalization capability, and when the network device adopts different CSI-RS configurations, the terminal device may need to switch the corresponding AI model, so as to be able to use the AI model corresponding to the current CSI-RS configuration for CSI measurement.

Exemplarily, it is assumed that the CSI-RS base sequence has two values, denoted as value 1 and value 2 respectively, then the range of the CSI-RS base sequence corresponding to one or more AI models may include whether the terminal device uses the same AI model for the two values of the CSI-RS base sequence. For example, the terminal device uses the same AI model for value 1 and value 2; for another example, the terminal device uses different AI models for value 1 and value 2 respectively.

With this method, different terminal devices may adopt different AI model training methods, so as to obtain AI models with different generalization capabilities. Since the network device does not know the generalization capability of one or more AI models used by the terminal device, it cannot determine whether the indicated CSI-RS configuration will cause AI model switching. Therefore, the terminal device may report the generalization capability of the one or more AI models to the network device (that is, the terminal device may transmit the first capability to the network device), so that the network device may determine whether adjustment of the CSI-RS configuration (such as adjusting the CSI-RS base sequence or the CSI-RS CDM group) will cause AI model switching on the terminal device side based on the generalization capability of the AI model reported by the terminal device.

In another possible implementation, the CSI report content configuration range corresponding to one or more AI models may include whether the terminal device uses the same AI model for different values of the CSI report content configuration.

When the CSI report content configuration output by an AI model is different, the AI model used by the terminal device may also be different, and training of the AI model relies on the CSI report content configuration as output.

The terminal device may train all CSI report content configurations possibly indicated by the network device (such as RSRP reporting and CSI reporting, CSI compression and CSI prediction, CSI compression, CSI prediction as well as CSI prediction and compression, etc.) on one AI model, so that the trained AI model has good generalization capability, and the terminal device does not need to switch the AI model for any CSI report content configuration indicated by the network device. However, such a training manner requires a large data/signal set, model parameter adjustment is complex, and it is difficult to ensure the accuracy of CSI feedback obtained.

The terminal device may also train different AI models for different CSI report content configurations (such as different AI models for RSRP reporting and CSI reporting respectively, different AI models for CSI compression and CSI prediction respectively, or different AI models for CSI compression, CSI prediction as well as CSI prediction and compression respectively), with each AI model targeting one type of CSI report content configurations, which not only reduces training complexity but also improves CSI feedback performance. However, the AI model obtained based on this solution has poor generalization capability, and when the network device adopts different CSI report content configurations, the terminal device may need to switch the corresponding AI model, so as to be able to use the AI model corresponding to the current CSI report content configuration for CSI feedback.

Exemplarily, the CSI report content configuration range corresponding to one or more AI models may include whether the terminal device uses the same AI model for RSRP reporting and CSI reporting. For example, the terminal device uses the same AI model for RSRP reporting and CSI reporting; for another example, the terminal device uses different AI models for RSRP reporting and CSI reporting respectively.

With this method, different terminal devices may adopt different AI model training methods, so as to obtain AI models with different generalization capabilities. Since the network device does not know the generalization capability of one or more AI models used by the terminal device, it cannot determine whether the indicated CSI report content configuration will cause AI model switching. Therefore, the terminal device may report the generalization capability of the one or more AI models to the network device (that is, the terminal device may transmit the first capability to the network device), so that the network device may determine whether adjustment of the CSI report content configuration (such as adjustment of RSRP reporting and CSI reporting, or adjustment of CSI compression and CSI prediction) will cause AI model switching on the terminal device side based on the generalization capability of the AI model reported by the terminal device.

In another possible implementation, the MCS configuration range corresponding to one or more AI models may include whether the terminal device uses the same AI model for different values of the MCS configuration.

Training of an AI model relies on the MCS configuration of uplink and downlink data/signals, and the number of antenna ports and the number of transmission layers influence the input of training data/signals for the AI model. That is, the terminal device may train different AI models for different MCS configurations.

The terminal device may train all MCS configurations supported in the protocol (such as MCS index range, modulation scheme, modulation scheme set, code rate range, etc.) on a single AI model, so that the trained AI model has superior generalization capability, and the terminal device does not need to switch the AI model for any MCS configuration indicated by the network device. However, such a training method requires a large dataset/signal set, involves complex model parameter adjustment, and makes it difficult to guarantee the transmission performance of corresponding data/signals.

The terminal device may also train different AI models for different MCS configurations (such as different MCS index ranges, different modulation schemes, or different code rate ranges), with each AI model targeting a subset of configurations. This not only reduces training complexity but also improves data/signal transmission performance. However, the AI models obtained based on this solution have poor generalization capability. When the network device adopts different MCS configurations, the terminal device may need to switch the corresponding AI model, so as to be able to use the AI model corresponding to the current MCS configuration for data/signal transmission.

Exemplarily, assuming there are two modulation schemes, denoted as modulation scheme 1 and modulation scheme 2, the range of modulation schemes corresponding to one or more AI models may include whether the terminal device uses the same AI model for modulation scheme 1 and modulation scheme 2. For example, the terminal device uses the same AI model for modulation scheme 1 and modulation scheme 2; for another example, the terminal device uses different AI models for modulation scheme 1 and modulation scheme 2 respectively.

With this method, different terminal devices may adopt different AI model training methods, thereby obtaining AI models with different generalization capabilities. Since the network device does not know the generalization capability of the one or more AI models used by the terminal device, it cannot determine whether the indicated MCS configuration will trigger AI model switching. Therefore, the terminal device may report the generalization capability of the one or more AI models to the network device (i.e., the terminal device may send the first capability to the network device), so that the network device may determine, based on the reported generalization capability, whether adjustment of the MCS configuration (such as adjusting the MCS index range, modulation scheme, or code rate range) will trigger AI model switching on the terminal device side.

In another possible implementation, the transport block size configuration range corresponding to one or more AI models may include whether the terminal device uses the same AI model for different values of the transport block size configuration.

Training of an AI model relies on the transport block size configuration of uplink and downlink data/signals, and the number of antenna ports and the number of transmission layers have impact on the input of training data/signals for the AI model. That is, the terminal device may train different AI models for different transport block size configurations.

The terminal device may train all transport block size configurations supported in the protocol (such as a transport block size range, etc.) on a single AI model, so that the trained AI model has superior generalization capability, and the terminal device does not need to switch the AI model for any transport block size configuration indicated by the network device. However, such a training method requires a large dataset/signal set, involves complex model parameter adjustment, and makes it difficult to guarantee the transmission performance of corresponding data/signals.

The terminal device may also train different AI models for different transport block size configurations (such as different transport block size ranges), with each AI model targeting a subset of configurations. This not only reduces training complexity but also improves data/signal transmission performance. However, the AI models obtained based on this solution have poor generalization capability. When the network device adopts different transport block size configurations, the terminal device may need to switch the corresponding AI model, so as to be able to use the AI model corresponding to the current transport block size configuration for data/signal transmission.

Exemplarily, assuming the transport block size has two values, denoted as value 1 and value 2, the transport block size configuration range corresponding to one or more AI models may include whether the terminal device uses the same AI model for the two values of transport block size. For example, the terminal device uses the same AI model for value 1 and value 2; for another example, the terminal device uses different AI models for value 1 and value 2 respectively.

With this method, different terminal devices may adopt different AI model training methods, thereby obtaining AI models with different generalization capabilities. Since the network device does not know the generalization capability of the one or more AI models used by the terminal device, it cannot determine whether the indicated transport block size configuration will trigger AI model switching. Therefore, the terminal device may report the generalization capability of the one or more AI models to the network device (i.e., the terminal device may send the first capability to the network device), so that the network device may determine, based on the reported generalization capability, whether adjustment of the transport block size configuration (such as adjusting the transport block size range) will trigger AI model switching on the terminal device side.

In another possible implementation, the transmission layer number configuration range corresponding to one or more AI models may include whether the terminal device uses the same AI model for different values of the transmission layer number configuration.

Since data/signal transmission and reception may be performed based on transmission layers, training of an AI model relies on the value of the transmission layer number configuration, and the transmission layer number configuration may have impact on the input of training data/signals for the AI model. That is, under different transmission layer number configurations, the terminal device may train different AI models for data/signal transmission or reception.

The terminal device may train all transmission layer number configurations (such as a transmission layer number range, etc.) on a single AI model, so that the trained AI model has superior generalization capability, and the terminal device does not need to switch the AI model for any transmission layer number configuration indicated by the network device. However, such a training method requires a large dataset/signal set, involves complex model parameter adjustment, and makes it difficult to guarantee the transmission performance of corresponding data/signals.

The terminal device may also train different AI models for different transmission layer number configurations (such as different transmission layer number ranges), with each AI model targeting a subset of configurations. This not only reduces training complexity but also improves data/signal transmission performance. However, the AI models obtained based on this solution have poor generalization capability. When the network device adopts different transmission layer number configurations, the terminal device may need to switch the corresponding AI model, so as to be able to use the AI model corresponding to the current transmission layer number configuration for data/signal transmission.

Exemplarily, assuming the number of transmission layers has two values, denoted as value 1 and value 2, the range of transmission layer number configurations corresponding to one or more AI models may include whether the terminal device uses the same AI model for the two values of the number of transmission layers. For example, the terminal device uses the same AI model for value 1 and value 2; for another example, the terminal device uses different AI models for value 1 and value 2 respectively.

With this method, different terminal devices may adopt different AI model training methods, thereby obtaining AI models with different generalization capabilities. Since the network device does not know the generalization capability of the one or more AI models used by the terminal device, it cannot determine whether the indicated transmission layer number configuration will trigger AI model switching. Therefore, the terminal device may report the generalization capability of the one or more AI models to the network device (i.e., the terminal device may send the first capability to the network device), so that the network device may determine, based on the reported generalization capability, whether adjustment of the transmission layer number configuration (such as adjusting the transmission layer number range) will trigger AI model switching on the terminal device side.

In another possible implementation, the transmission bandwidth configuration range corresponding to one or more AI models may include whether the terminal device uses the same AI model for different values of the transmission bandwidth configuration.

Since data/signal transmission and reception may be performed based on transmission bandwidth, training of an AI model relies on the value of the transmission bandwidth configuration, and the transmission bandwidth configuration has impact on the input of training data/signals for the AI model. That is, under different transmission bandwidth configurations, the terminal device may train different AI models for data/signal transmission or reception.

The terminal device may train all transmission bandwidth configurations (such as a transmission bandwidth range, etc.) on a single AI model, so that the trained AI model has superior generalization capability, and the terminal device does not need to switch the AI model for any transmission bandwidth configuration indicated by the network device. However, such a training method requires a large dataset/signal set, involves complex model parameter adjustment, and makes it difficult to guarantee the transmission performance of corresponding data/signals.

The terminal device may also train different AI models for different transmission bandwidth configurations (such as different transmission bandwidth ranges), with each AI model targeting a subset of configurations. This not only reduces training complexity but also improves data/signal transmission performance. However, the AI models obtained based on this solution have poor generalization capability. When the network device adopts different transmission bandwidth configurations, the terminal device may need to switch the corresponding AI model, so as to be able to use the AI model corresponding to the current transmission bandwidth configuration for data/signal transmission.

Exemplarily, assuming the transmission bandwidth has two values, denoted as value 1 and value 2, the transmission bandwidth configuration range corresponding to one or more AI models may include whether the terminal device uses the same AI model for the two values of transmission bandwidth. For example, the terminal device uses the same AI model for value 1 and value 2; for another example, the terminal device uses different AI models for value 1 and value 2 respectively.

With this method, different terminal devices may adopt different AI model training methods, thereby obtaining AI models with different generalization capabilities. Since the network device does not know the generalization capability of the one or more AI models used by the terminal device, it cannot determine whether the indicated transmission bandwidth configuration will trigger AI model switching. Therefore, the terminal device may report the generalization capability of the one or more AI models to the network device (i.e., the terminal device may send the first capability to the network device), so that the network device may determine, based on the reported generalization capability, whether adjustment of the transmission bandwidth configuration (such as adjusting the transmission bandwidth range) will trigger AI model switching on the terminal device side.

In another possible implementation, the antenna port number configuration range corresponding to one or more AI models may include whether the terminal device uses the same AI model for different values of the antenna port number configuration.

Since data/signal transmission and reception may be performed based on antenna ports, training of an AI model relies on the value of the antenna port number configuration, and the antenna port number configuration has impact on the input of training data/signals for the AI model. That is, under different antenna port number configurations, the terminal device may train different AI models for data/signal transmission or reception.

The terminal device may train all antenna port number configurations (such as a range of the number of antenna ports, etc.) on a single AI model, so that the trained AI model has superior generalization capability, and the terminal device does not need to switch the AI model for any antenna port number configuration indicated by the network device. However, such a training method requires a large dataset/signal set, involves complex model parameter adjustment, and makes it difficult to guarantee the transmission performance of corresponding data/signals.

The terminal device may also train different AI models for different antenna port number configurations (such as different antenna port number ranges), with each AI model targeting a subset of configurations. This not only reduces training complexity but also improves data/signal transmission performance. However, the AI models obtained based on this solution have poor generalization capability. When the network device adopts different antenna port number configurations, the terminal device may need to switch the corresponding AI model, so as to be able to use the AI model corresponding to the current antenna port number configuration for data/signal transmission.

Exemplarily, assuming the number of antenna ports has two values, denoted as value 1 and value 2, the antenna port number configuration range corresponding to one or more AI models may include whether the terminal device uses the same AI model for the two values of antenna port numbers. For example, the terminal device uses the same AI model for value 1 and value 2; for another example, the terminal device uses different AI models for value 1 and value 2 respectively.

With this method, different terminal devices may adopt different AI model training methods, thereby obtaining AI models with different generalization capabilities. Since the network device does not know the generalization capability of the one or more AI models used by the terminal device, it cannot determine whether the indicated antenna port number configuration will trigger AI model switching. Therefore, the terminal device may report the generalization capability of the one or more AI models to the network device (i.e., the terminal device may send the first capability to the network device), so that the network device may determine, based on the reported generalization capability, whether adjustment of the antenna port number configuration (such as adjusting the antenna port number range) will trigger AI model switching on the terminal device side.

In another possible implementation, the carrier frequency configuration range corresponding to one or more AI models may include whether the terminal device uses the same AI model for different values of the carrier frequency configuration.

Since data/signal transmission and reception may be performed based on carrier frequency, training of an AI model relies on the value of the carrier frequency configuration, and the carrier frequency configuration has impact on the input of training data/signals for the AI model. That is, under different carrier frequency configurations, the terminal device may train different AI models for data/signal transmission or reception.

The terminal device may train all carrier frequency configurations (such as a carrier frequency range, etc.) on a single AI model, so that the trained AI model has superior generalization capability, and the terminal device does not need to switch the AI model for any carrier frequency configuration indicated by the network device. However, such a training method requires a large dataset/signal set, involves complex model parameter adjustment, and makes it difficult to guarantee the transmission performance of corresponding data/signals.

The terminal device may also train different AI models for different carrier frequency configurations (such as different carrier frequency ranges), with each AI model targeting a subset of configurations. This not only reduces training complexity but also improves data/signal transmission performance. However, the AI models obtained based on this solution have poor generalization capability. When the network device adopts different carrier frequency configurations, the terminal device may need to switch the corresponding AI model, so as to be able to use the AI model corresponding to the current carrier frequency configuration for data/signal transmission.

Exemplarily, assuming the carrier frequency has two values, denoted as value 1 and value 2, the carrier frequency configuration range corresponding to one or more AI models may include whether the terminal device uses the same AI model for the two values of carrier frequency. For example, the terminal device uses the same AI model for value 1 and value 2; for another example, the terminal device uses different AI models for value 1 and value 2 respectively.

With this method, different terminal devices may adopt different AI model training methods, thereby obtaining AI models with different generalization capabilities. Since the network device does not know the generalization capability of the one or more AI models used by the terminal device, it cannot determine whether the indicated carrier frequency configuration will trigger AI model switching. Therefore, the terminal device may report the generalization capability of the one or more AI models to the network device (i.e., the terminal device may send the first capability to the network device), so that the network device may determine, based on the reported generalization capability, whether adjustment of the carrier frequency configuration (such as adjusting the carrier frequency range) will trigger AI model switching on the terminal device side.

In another possible implementation, the subcarrier spacing configuration range corresponding to one or more AI models may include whether the terminal device uses the same AI model for different values of the subcarrier spacing configuration.

Since data/signal transmission and reception may be performed based on subcarrier spacing, training of an AI model relies on the value of the subcarrier spacing configuration, and the subcarrier spacing configuration has impact on the input of training data/signals for the AI model. That is, under different subcarrier spacing configurations, the terminal device may train different AI models for data/signal transmission or reception.

The terminal device may train all subcarrier spacing configurations (such as a subcarrier spacing range, etc.) on a single AI model, so that the trained AI model has superior generalization capability, and the terminal device does not need to switch the AI model for any subcarrier spacing configuration indicated by the network device. However, such a training method requires a large dataset/signal set, involves complex model parameter adjustment, and makes it difficult to guarantee the transmission performance of corresponding data/signals.

The terminal device may also train different AI models for different subcarrier spacing configurations (such as different subcarrier spacing ranges), with each AI model targeting a subset of configurations. This not only reduces training complexity but also improves data/signal transmission performance. However, the AI models obtained based on this solution have poor generalization capability. When the network device adopts different subcarrier spacing configurations, the terminal device may need to switch the corresponding AI model, so as to be able to use the AI model corresponding to the current subcarrier spacing configuration for data/signal transmission.

Exemplarily, assuming the subcarrier spacing has two values, denoted as value 1 and value 2, the subcarrier spacing configuration range corresponding to one or more AI models may include whether the terminal device uses the same AI model for the two values of subcarrier spacing. For example, the terminal device uses the same AI model for value 1 and value 2; for another example, the terminal device uses different AI models for value 1 and value 2 respectively.

With this method, different terminal devices may adopt different AI model training methods, thereby obtaining AI models with different generalization capabilities. Since the network device does not know the generalization capability of the one or more AI models used by the terminal device, it cannot determine whether the indicated subcarrier spacing configuration will trigger AI model switching. Therefore, the terminal device may report the generalization capability of the one or more AI models to the network device (i.e., the terminal device may send the first capability to the network device), so that the network device may determine, based on the reported generalization capability, whether adjustment of the subcarrier spacing configuration (such as adjusting the subcarrier spacing range) will trigger AI model switching on the terminal device side.

In another possible implementation, the TCI state configuration range corresponding to one or more AI models may include whether the terminal device uses the same AI model for different values of the TCI state configuration.

Since data/signal transmission and reception may be performed based on TCI states, training of an AI model relies on the value of the TCI state configuration, and the TCI state configuration has impact on the input of training data/signals for the AI model. That is, under different TCI state configurations, the terminal device may train different AI models for data/signal transmission or reception.

The terminal device may train all TCI state configurations on a single AI model, so that the trained AI model has superior generalization capability, and the terminal device does not need to switch the AI model for any TCI state configuration indicated by the network device. However, such a training method requires a large dataset/signal set, involves complex model parameter adjustment, and makes it difficult to guarantee the transmission performance of corresponding data/signals.

The terminal device may also train different AI models for different TCI state configurations (such as a single TCI state and multiple TCI states), with each AI model targeting a subset of configurations. This not only reduces training complexity but also improves data/signal transmission performance. However, the AI models obtained based on this solution have poor generalization capability. When the network device adopts different TCI state configurations, the terminal device may need to switch the corresponding AI model, so as to be able to use the AI model corresponding to the current TCI state configuration for data/signal transmission.

Exemplarily, the TCI state configuration range corresponding to one or more AI models may include whether the terminal device uses the same AI model for a single TCI state and multiple TCI states. For example, the terminal device uses the same AI model for a single TCI state and multiple TCI states; for another example, the terminal device uses different AI models for a single TCI state and multiple TCI states respectively.

With this method, different terminal devices may adopt different AI model training methods, thereby obtaining AI models with different generalization capabilities. Since the network device does not know the generalization capability of the one or more AI models used by the terminal device, it cannot determine whether the indicated TCI state configuration will trigger AI model switching. Therefore, the terminal device may report the generalization capability of the one or more AI models to the network device (i.e., the terminal device may send the first capability to the network device), so that the network device may determine, based on the reported generalization capability, whether adjustment of the TCI state configuration will trigger AI model switching on the terminal device side.

In another possible implementation, the cell ID configuration range corresponding to one or more AI models may include whether the terminal device uses the same AI model for different values of the cell ID configuration.

Since a terminal device is required to access a cell before transmitting and receiving data/signals, data/signal transmission occurs between the terminal device and its serving cell. Therefore, training of an AI model may be cell-based, relying on the value of the cell ID configuration, and the cell ID configuration has impact on the input of training data/signals for the AI model. That is, when the serving cell changes, e.g., after the terminal device accesses a cell with a different cell ID, the AI model used may also differ.

The terminal device may train all cell ID configurations (such as a cell ID range, etc.) on a single AI model, so that the trained AI model has superior generalization capability, and the terminal device does not need to switch the AI model for any cell ID configuration indicated by the network device. However, such a training method requires a large dataset/signal set, involves complex model parameter adjustment, and makes it difficult to guarantee the transmission performance of corresponding data/signals.

The terminal device may also train different AI models for different cell ID configurations (such as different cell ID ranges), with each AI model targeting a subset of configurations. This not only reduces training complexity but also improves data/signal transmission performance. However, the AI models obtained based on this solution have poor generalization capability. When the network device adopts different cell ID configurations, the terminal device may need to switch the corresponding AI model, so that the AI model corresponding to the current cell ID configuration can be used for data/signal transmission.

Exemplarily, assuming there are two cell IDs, denoted as ID1 and ID2, the cell ID configuration range corresponding to one or more AI models may include whether the terminal device uses the same AI model for ID1 and ID2. For example, the terminal device uses the same AI model for ID1 and ID2; for another example, the terminal device uses different AI models for ID1 and ID2 respectively.

With this method, different terminal devices may adopt different AI model training methods, thereby obtaining AI models with different generalization capabilities. Since the network device does not know the generalization capability of the one or more AI models used by the terminal device, it cannot determine whether the indicated cell ID configuration will trigger AI model switching. Therefore, the terminal device may report the generalization capability of the one or more AI models to the network device (i.e., the terminal device may send the first capability to the network device), so that the network device may determine, based on the reported generalization capability, whether adjustment of the cell ID configuration (such as adjusting the cell ID range) will trigger AI model switching on the terminal device side.

In another possible implementation, the MIMO transmission scheme configuration range corresponding to one or more AI models may include whether the terminal device uses the same AI model for different MIMO transmission scheme configurations.

Since data/signal transmission/reception or CSI measurement by a terminal device is performed based on a certain MIMO transmission scheme, if an AI model is used for such functions, the AI model is required to be trained under assumptions of a specific MIMO transmission scheme. The MIMO transmission scheme configuration has impact on the input of training data/signals for the AI model as well as CSI measurement results. That is, under different MIMO transmission scheme configurations, the terminal device may train different AI models for data/signal transmission/reception or CSI measurement.

The terminal device may train all MIMO transmission scheme configurations on a single AI model, so that the trained AI model has superior generalization capability, and the terminal device does not need to switch the AI model for any MIMO transmission scheme configuration indicated by the network device. However, such a training method requires a large dataset/signal set, involves complex model parameter adjustment, and makes it difficult to guarantee the transmission performance of corresponding data/signals and the accuracy of CSI measurement.

The terminal device may also train different AI models for different MIMO transmission scheme configurations (such as single Transmit/Receive Point (TRP) transmission scheme and multi-TRP coordination scheme, or open-loop transmission scheme and closed-loop transmission scheme), with each AI model targeting a subset of configurations. This not only reduces training complexity but also improves data/signal transmission performance or CSI measurement accuracy. However, the AI models obtained based on this solution have poor generalization capability. When the network device adopts different MIMO transmission scheme configurations, the terminal device may need to switch the corresponding AI model, so that the AI model corresponding to the current MIMO transmission scheme configuration can be used for data/signal transmission or CSI measurement.

Exemplarily, the TCI state configuration range corresponding to one or more AI models may include whether the terminal device uses the same AI model for a single-TRP transmission scheme and a multi-TRP coordination scheme. For example, the terminal device uses the same AI model for the single-TRP transmission scheme and the multi-TRP coordination scheme; for another example, the terminal device uses different AI models for the single-TRP transmission scheme and the multi-TRP coordination scheme respectively.

With this method, different terminal devices may adopt different AI model training methods, thereby obtaining AI models with different generalization capabilities. Since the network device does not know the generalization capability of the one or more AI models used by the terminal device, it cannot determine whether the indicated MIMO transmission scheme configuration will trigger AI model switching. Therefore, the terminal device may report the generalization capability of the one or more AI models to the network device (i.e., the terminal device may send the first capability to the network device), so that the network device may determine, based on the reported generalization capability, whether adjustment of the MIMO transmission scheme configuration will trigger AI model switching on the terminal device side.

S420: The network device sends a parameter configuration to the terminal device based on the first capability.

Correspondingly, the terminal device may receive the parameter configuration from the network device.

The parameter configuration is used for communication between the terminal device and the network device.

Exemplarily, the parameter configuration may be a DMRS configuration, which may indicate an ID of a DMRS base sequence.

Exemplarily, the parameter configuration may be a CSI-RS configuration, which may indicate the number of CSI-RS ports.

Exemplarily, the parameter configuration may be an MCS configuration and a CSI report content configuration, where the MCS configuration may indicate an MCS index, and the CSI report content configuration may indicate RSRP reporting or CSI reporting.

In some embodiments, a first AI model corresponding to a value of the parameter configuration is used for communication between the terminal device and the network device.

The first AI model belongs to the one or more AI models.

Based on different types of parameter configurations, determining the parameter configuration by the network device based on the first capability may include one or more of the following possible implementations.

In a possible implementation, the network device may determine the DMRS configuration according to the DMRS configuration range corresponding to the one or more AI models reported by the terminal device.

In a case where the terminal device reports that the one or more AI models are applicable to any DMRS configuration, the network device may determine that adjustment of the DMRS configuration does not need to consider AI model switching.

In a case where the terminal device reports that the one or more AI models are applicable to a certain DMRS configuration (such as a DMRS sequence ID), the network device does not need to consider AI model switching when determining the DMRS configuration.

In a case where the terminal device reports that the one or more AI models are trained separately for different values of a certain DMRS configuration (such as the number of DMRS symbols), the network device needs to consider possible AI model switching on the terminal device side when indicating the DMRS configuration. For example, the network device avoids dynamically adjusting the DMRS configuration as much as possible to prevent dynamic AI model switching on the terminal device side that exceeds the capability of the terminal device (it is default that terminal devices do not support dynamic AI model switching, as deployment of an AI model requires a certain amount of time).

In another possible implementation, the network device may determine the CSI-RS configuration according to the CSI-RS configuration range corresponding to the one or more AI models reported by the terminal device.

In a case where the terminal device reports that the one or more AI models are applicable to any CSI-RS configuration, the network device may determine that adjustment of the CSI-RS configuration does not need to consider AI model switching.

In a case where the terminal device reports that the one or more AI models are applicable to a certain CSI-RS configuration (such as the number of CSI-RS ports), the network device does not need to consider AI model switching when determining the CSI-RS configuration.

In a case where the terminal device reports that the one or more AI models are trained separately for different values of a certain CSI-RS configuration (such as the number of CSI-RS symbols), the network device needs to consider possible AI model switching on the terminal device side when indicating the CSI-RS configuration. For example, the network device avoids dynamically adjusting the CSI-RS configuration as much as possible to prevent dynamic AI model switching on the terminal device side that exceeds the capability of the terminal device.

In another possible implementation, the network device may determine the CSI report content configuration according to the CSI report content configuration range corresponding to the one or more AI models reported by the terminal device.

In a case where the terminal device reports that the one or more AI models are applicable to any CSI report content configuration, the network device may determine that adjustment of the CSI report content configuration does not need to consider AI model switching.

In a case where the terminal device reports that the one or more AI models are applicable to a certain CSI report content configuration (such as CSI prediction or CSI compression), the network device does not need to consider AI model switching when determining the CSI report content configuration.

In a case where the terminal device reports that the one or more AI models are trained separately for different values of a certain CSI report content configuration (such as CSI prediction or CSI compression), the network device needs to consider possible AI model switching on the terminal device side when indicating the CSI report content configuration. For example, the network device avoids dynamically adjusting the CSI report content configuration as much as possible to prevent dynamic AI model switching on the terminal device side that exceeds the capability of the terminal device.

In another possible implementation, the network device may determine the MCS configuration according to the MCS configuration range corresponding to the one or more AI models reported by the terminal device.

In a case where the terminal device reports that the one or more AI models are applicable to any MCS configuration, the network device may determine that adjustment of the MCS configuration does not need to consider AI model switching.

In a case where the terminal device reports that the one or more AI models are applicable to a certain MCS configuration (such as a modulation scheme or a code rate range), the network device does not need to consider AI model switching when determining the MCS configuration.

In a case where the terminal device reports that the one or more AI models are trained separately for different values of a certain MCS configuration (such as a modulation scheme or a code rate range), the network device needs to consider possible AI model switching on the terminal device side when indicating the MCS configuration. For example, the network device avoids dynamically adjusting the MCS configuration as much as possible to prevent dynamic AI model switching on the terminal device side that exceeds the capability of the terminal device.

In another possible implementation, the network device may determine the transport block size configuration according to the transport block size configuration range corresponding to the one or more AI models reported by the terminal device.

In a case where the terminal device reports that the one or more AI models are applicable to any transport block size configuration, the network device may determine that adjustment of the transport block size configuration does not need to consider AI model switching.

In a case where the terminal device reports that the one or more AI models are applicable to a certain transport block size configuration (such as a transport block size range), the network device does not need to consider AI model switching when determining the transport block size configuration.

In a case where the terminal device reports that the one or more AI models are trained separately for different values of a certain transport block size configuration (such as a transport block size range), the network device needs to consider possible AI model switching on the terminal device side when indicating the transport block size configuration. For example, the network device avoids dynamically adjusting the transport block size configuration as much as possible to prevent dynamic AI model switching on the terminal device side that exceeds the capability of the terminal device.

In another possible implementation, the network device may determine the transmission layer number configuration according to the transmission layer number configuration range corresponding to the one or more AI models reported by the terminal device.

In a case where the terminal device reports that the one or more AI models are applicable to any transmission layer number configuration, the network device may determine that adjustment of the transmission layer number configuration does not need to consider AI model switching.

In a case where the terminal device reports that the one or more AI models are applicable to a certain transmission layer number configuration (such as a transmission layer number range), the network device does not need to consider AI model switching when determining the transmission layer number configuration.

In a case where the terminal device reports that the one or more AI models are trained separately for different values of a certain transmission layer number configuration (such as transmission layer number range), the network device needs to consider possible AI model switching on the terminal device side when indicating the transmission layer number configuration. For example, the network device avoids dynamically adjusting the transmission layer number configuration as much as possible to prevent dynamic AI model switching on the terminal device side that exceeds the capability of the terminal device.

In another possible implementation, the network device may determine the transmission bandwidth configuration according to the transmission bandwidth configuration range corresponding to the one or more AI models reported by the terminal device.

In a case where the terminal device reports that the one or more AI models are applicable to any transmission bandwidth configuration, the network device may determine that adjustment of the transmission bandwidth configuration does not need to consider AI model switching.

In a case where the terminal device reports that the one or more AI models are applicable to a certain transmission bandwidth configuration (such as transmission bandwidth range), the network device does not need to consider AI model switching when determining the transmission bandwidth configuration.

In a case where the terminal device reports that the one or more AI models are trained separately for different values of a certain transmission bandwidth configuration (such as a transmission bandwidth range), the network device needs to consider possible AI model switching on the terminal device side when indicating the transmission bandwidth configuration. For example, the network device avoids dynamically adjusting the transmission bandwidth configuration as much as possible to prevent dynamic AI model switching on the terminal device side that exceeds the capability of the terminal device.

In another possible implementation, the network device may determine the antenna port number configuration according to the antenna port number configuration range corresponding to the one or more AI models reported by the terminal device.

In a case where the terminal device reports that the one or more AI models are applicable to any antenna port number configuration, the network device may determine that adjustment of the antenna port number configuration does not need to consider AI model switching.

In a case where the terminal device reports that the one or more AI models are applicable to a certain antenna port number configuration (such as an antenna port number range), the network device does not need to consider AI model switching when determining the antenna port number configuration.

In a case where the terminal device reports that the one or more AI models are trained separately for different values of a certain antenna port number configuration (such as an antenna port number range), the network device needs to consider possible AI model switching on the terminal device side when indicating the antenna port number configuration. For example, the network device avoids dynamically adjusting the antenna port number configuration as much as possible to prevent dynamic AI model switching on the terminal device side that exceeds the capability of the terminal device.

In another possible implementation, the network device may determine the carrier frequency configuration according to the carrier frequency configuration range corresponding to the one or more AI models reported by the terminal device.

In a case where the terminal device reports that the one or more AI models are applicable to any carrier frequency configuration, the network device may determine that adjustment of the carrier frequency configuration does not need to consider AI model switching.

In a case where the terminal device reports that the one or more AI models are applicable to a certain carrier frequency configuration (such as a carrier frequency range), the network device does not need to consider AI model switching when determining the carrier frequency configuration.

In a case where the terminal device reports that the one or more AI models are trained separately for different values of a certain carrier frequency configuration (such as a carrier frequency range), the network device needs to consider possible AI model switching on the terminal device side when indicating the carrier frequency configuration. For example, the network device avoids dynamically adjusting the carrier frequency configuration as much as possible to prevent dynamic AI model switching on the terminal device side that exceeds the capability of the terminal device.

Exemplarily, in a case where AI models are trained separately for Frequency Range 1 (FR1) and FR2, the network device should avoid dynamic switching between FR1 and FR2 as much as possible to prevent dynamic AI model switching on the terminal device side that exceeds the capability of the terminal device.

In another possible implementation, the network device may determine the subcarrier spacing configuration according to the subcarrier spacing configuration range corresponding to the one or more AI models reported by the terminal device.

In a case where the terminal device reports that the one or more AI models are applicable to any subcarrier spacing configuration, the network device may determine that adjustment of the subcarrier spacing configuration does not need to consider AI model switching.

In a case where the terminal device reports that the one or more AI models are applicable to a certain subcarrier spacing configuration (such as a subcarrier spacing range), the network device does not need to consider AI model switching when determining the subcarrier spacing configuration.

In a case where the terminal device reports that the one or more AI models are trained separately for different values of a certain subcarrier spacing configuration (such as a subcarrier spacing range), the network device needs to consider possible AI model switching on the terminal device side when indicating the subcarrier spacing configuration. For example, the network device avoids dynamically adjusting the subcarrier spacing configuration as much as possible to prevent dynamic AI model switching on the terminal device side that exceeds the capability of the terminal device.

In another possible implementation, the network device may determine the TCI state configuration according to the TCI state configuration range corresponding to the one or more AI models reported by the terminal device.

In a case where the terminal device reports that the one or more AI models are applicable to any TCI state configuration, the network device may determine that adjustment of the TCI state configuration does not need to consider AI model switching.

In a case where the terminal device reports that the one or more AI models are applicable to a certain TCI state configuration, the network device does not need to consider AI model switching when determining the TCI state configuration.

In a case where the terminal device reports that the one or more AI models are trained separately for different values of a certain TCI state configuration (such as a single TCI state and multiple TCI states), the network device needs to consider possible AI model switching on the terminal device side when indicating the TCI state configuration. For example, the network device avoids dynamically adjusting the TCI state configuration as much as possible to prevent dynamic AI model switching on the terminal device side that exceeds the capability of the terminal device.

In another possible implementation, the network device may determine the cell ID configuration according to the cell ID configuration range corresponding to the one or more AI models reported by the terminal device.

In a case where the terminal device reports that the one or more AI models are applicable to any cell ID configuration, the network device may determine that adjustment of the cell ID configuration does not need to consider AI model switching, and therefore no time needs to be reserved for AI model switching on the terminal device side during cell ID switching.

In a case where the terminal device reports that the one or more AI models are applicable to a certain cell ID configuration (such as a cell ID range), the network device does not need to consider AI model switching when determining the cell ID configuration, and therefore no time needs to be reserved for AI model switching on the terminal device side during cell ID switching under the cell ID configuration.

In a case where the terminal device reports that the one or more AI models are trained separately for different values of a certain cell ID configuration (such as a cell ID range), the network device needs to consider possible AI model switching on the terminal device side when indicating the cell ID configuration. For example, the network device avoids dynamically adjusting the cell ID configuration as much as possible to prevent dynamic AI model switching on the terminal device side that exceeds the capability of the terminal device, and time needs to be reserved for AI model switching on the terminal device side during cell ID switching.

In another possible implementation, the network device may determine the MIMO transmission scheme configuration according to the MIMO transmission scheme configuration range corresponding to the one or more AI models reported by the terminal device.

In a case where the terminal device reports that the one or more AI models are applicable to any MIMO transmission scheme configuration, the network device may determine that adjustment of the MIMO transmission scheme configuration does not need to consider AI model switching.

In a case where the terminal device reports that the one or more AI models are applicable to a certain MIMO transmission scheme configuration, the network device does not need to consider AI model switching when determining the MIMO transmission scheme configuration.

In a case where the terminal device reports that the one or more AI models are trained separately for different values of a certain MIMO transmission scheme configuration (such as a single TRP transmission scheme and a multi-TRP transmission scheme), the network device needs to consider possible AI model switching on the terminal device side when indicating the MIMO transmission scheme configuration. For example, the network device avoids dynamically adjusting the MIMO transmission scheme configuration as much as possible to prevent dynamic AI model switching on the terminal device side that exceeds the capability of the terminal device.

With this method, when determining the parameter configuration based on the first capability, the network device may take into account AI model switching of the terminal device caused by adjustment of the parameter configuration, so as to reasonably determine signaling and a range used for adjustment of the parameter configuration. That is, the network device may determine an appropriate parameter configuration according to the first capability reported by the terminal device, so as to avoid AI model switching (such as dynamic AI model switching) on the terminal device side that exceeds the capability of the terminal device, or performance loss caused by frequent AI model switching, thereby ensuring performance of uplink or downlink transmission based on the AI models.

In some embodiments, the method may further include that: the terminal device may send a second capability to the network device, where the second capability is used to indicate whether the terminal device supports one or more of the following:
switching between AI models based on Downlink Control Information (DCI) signaling;
switching between AI models based on Media Access Control (MAC) signaling; and
switching between AI models based on Radio Resource Control (RRC) signaling.

Correspondingly, the network device may receive the second capability from the terminal device.

It should be noted that the AI models herein generally refer to AI models used on the terminal device side, which may be the one or more AI models or other AI models, which is not limited in the embodiments of the present disclosure.

Exemplarily, the terminal device may support switching between AI models based on RRC signaling, and does not support switching between AI models based on DCI signaling or MAC signaling.

Exemplarily, the terminal device may support switching between AI models based on RRC signaling and MAC signaling, and does not support switching between AI models based on DCI signaling.

Exemplarily, the terminal device may support switching between AI models based on DCI signaling, RRC signaling and MAC signaling.

With this method, the terminal device may send the second capability to the network device, and the network device may learn whether the terminal device can support AI model switching based on certain signaling (such as DCI signaling), so as to avoid AI model switching that exceeds the capability of the terminal device and ensure performance of AI model-based uplink and downlink transmission.

In some embodiments, the operation that the network device sends the parameter configuration to the terminal device based on the first capability may include that: the network device sends the parameter configuration to the terminal device based on the first capability and the second capability.

In a case where a first AI model corresponding to a value of the parameter configuration and a second AI model corresponding to a first value are different AI models, switching between the first AI model and the second AI model does not exceed the second capability; the first value is a parameter value before the network device sends the parameter configuration.

That is, AI model switching caused by the parameter configuration does not exceed the second capability sent by the terminal device.

It should be noted that, in a case where the terminal device cannot support AI model switching based on certain signaling (i.e., AI model switching based on the signaling exceeds the second capability), if the network device uses the signaling to perform parameter configuration, the value of the parameter configuration cannot cause AI model switching on the terminal device side.

Exemplarily, in a case where the terminal device does not support AI model switching based on DCI signaling and the parameter configuration is indicated via DCI signaling, the parameter configuration cannot cause the terminal device to perform AI model switching. For example, in a case where the terminal device does not support AI model switching based on DCI signaling and a CSI report content configuration is indicated via DCI signaling, the network device cannot adjust the CSI report content configuration via DCI signaling to cause the terminal device to perform AI model switching.

Exemplarily, in a case where the terminal device supports AI model switching based on RRC signaling and the parameter configuration is indicated by RRC signaling, the parameter configuration may cause the terminal device to perform AI model switching (such as switching from the second AI model to the first AI model). For example, different CSI-RS configurations correspond to different AI models, and in a case where the terminal device supports AI model switching based on RRC signaling and a CSI-RS configuration is indicated by RRC signaling, the terminal device may switch from the second AI model to the first AI model based on the CSI-RS configuration.

With this method, the network device may send the parameter configuration to the terminal device, and AI model switching caused by the parameter configuration does not exceed the second capability. Therefore, after receiving the parameter configuration, the terminal device can avoid AI model switching that exceeds its own capability and ensure performance of AI model-based uplink and downlink transmission.

In some embodiments, the method may further include that: in a case where the first AI model corresponding to the value of the parameter configuration and the second AI model corresponding to the first value are different AI models, the terminal device does not expect switching between the first AI model and the second AI model to exceed the second capability; the first value is a parameter value before the terminal device receives the parameter configuration.

That is, the terminal device does not expect AI model switching caused by the parameter configuration to exceed the second capability sent by the terminal device.

That is, the terminal device expects AI model switching caused by the parameter configuration to be within the second capability sent by the terminal device.

Exemplarily, the terminal device does not expect AI model switching caused by a transport block size configuration to exceed the second capability sent by the terminal device. For example, in a case where the terminal device does not support AI model switching based on DCI signaling and the transport block size configuration is indicated via DCI signaling, the transport block size configuration cannot cause the terminal device to perform AI model switching, and switching can only be performed within a transport block size range corresponding to the same AI model; for another example, in a case where the terminal device does not support AI model switching based on DCI signaling or MAC signaling and the transport block size configuration is indicated via DCI signaling and MAC signaling, the transport block size configuration cannot cause the terminal device to perform AI model switching, and switching can only be performed within a transport block size range corresponding to the same AI model.

Exemplarily, the terminal device does not expect AI model switching caused by a transmission layer number configuration or an antenna port number configuration to exceed the second capability sent by the terminal device. For example, in a case where the terminal device does not support AI model switching based on DCI signaling and the transmission layer number configuration or the antenna port number configuration is indicated via DCI signaling, the transmission layer number configuration or the antenna port number configuration cannot cause the terminal device to perform AI model switching, and switching can only be performed within a transmission layer number range or an antenna port number range corresponding to the same AI model; for another example, in a case where the terminal device does not support AI model switching based on DCI signaling or MAC signaling and the transmission layer number configuration or the antenna port number configuration is indicated via DCI signaling and MAC signaling, the transmission layer number configuration or the antenna port number configuration cannot cause the terminal device to perform AI model switching, and switching can only be performed within a transmission layer number range or an antenna port number range corresponding to the same AI model.

Exemplarily, the terminal device does not expect AI model switching caused by a transmission bandwidth configuration to exceed the second capability sent by the terminal device. For example, in a case where the terminal device does not support AI model switching based on DCI signaling and the transmission bandwidth configuration is indicated via DCI signaling, the transmission bandwidth configuration cannot cause the terminal device to perform AI model switching, and switching can only be performed within a transmission bandwidth range corresponding to the same AI model; for another example, in a case where the terminal device does not support AI model switching based on DCI signaling or MAC signaling and the transmission bandwidth configuration is indicated via DCI signaling and MAC signaling, the transmission bandwidth configuration cannot cause the terminal device to perform AI model switching, and switching can only be performed within a transmission bandwidth range corresponding to the same AI model.

Exemplarily, the terminal device does not expect AI model switching caused by a MIMO transmission scheme configuration to exceed the second capability sent by the terminal device. For example, in a case where the terminal device does not support AI model switching based on DCI signaling and the MIMO transmission scheme configuration is indicated via DCI signaling, the MIMO transmission scheme configuration cannot cause the terminal device to perform AI model switching, and switching can only be performed within a MIMO transmission scheme range corresponding to the same AI model; for another example, in a case where the terminal device does not support AI model switching based on DCI signaling or MAC signaling and the MIMO transmission scheme configuration is indicated via DCI signaling and MAC signaling, the MIMO transmission scheme configuration cannot cause the terminal device to perform AI model switching, and switching can only be performed within a MIMO transmission scheme range corresponding to the same AI model.

In the above method, when AI model switching caused by the parameter configuration exceeds the second capability sent by the terminal device, the terminal device may adopt a previous AI model for communication with the network device without performing AI model switching; or, the terminal device may not adopt an AI model for communication with the network device, but perform communication in a traditional non-AI manner; or, the terminal device may treat such a configuration as an error configuration, and thus not perform communication with the network device.

With this method, the terminal device does not expect AI model switching caused by the parameter configuration to exceed the second capability sent by the terminal device, so that when performing AI model switching based on the parameter configuration, the terminal device can avoid AI model switching that exceeds its own capability and ensure performance of AI model-based uplink and downlink transmission.

In some embodiments, in a case where the parameter configuration is indicated via DCI signaling and/or MAC signaling, the first AI model corresponding to the value of the parameter configuration is the same as the second AI model corresponding to the first value.

The first value is a parameter value before the network device sends the parameter configuration.

It should be noted that, in a case where the parameter configuration is indicated (such as dynamically indicated) via DCI signaling and/or MAC signaling, the parameter configuration cannot cause AI model switching based on DCI signaling and/or MAC signaling on the terminal device side. That is, a parameter value indicated by the parameter configuration and an original parameter value (i.e., the first value) need to correspond to the same AI model.

The network device may indicate, through RRC signaling, a parameter configuration corresponding to different AI models.

Exemplarily, in a case where a DMRS configuration is indicated via DCI signaling and/or MAC signaling, the DMRS configuration cannot cause AI model switching based on DCI signaling and/or MAC signaling on the terminal device side. That is, a parameter value indicated by the DMRS configuration and an original parameter value need to correspond to the same AI model. For example, in a case where the terminal device reports that different DMRS port sets correspond to different AI models, DMRS ports indicated by the network device through DCI signaling and/or MAC signaling need to correspond to ports in a port set of a same AI model, and switching between port sets corresponding to different AI models may be performed through higher-layer signaling (such as RRC signaling).

Exemplarily, in a case where a CSI-RS configuration is indicated via DCI signaling and/or MAC signaling (for example, aperiodic CSI reporting is triggered by DCI, different CSI reports correspond to different CSI-RS resource configurations, and the CSI-RS resource configurations are determined based on DCI in this case), the CSI-RS configuration cannot cause AI model switching based on DCI signaling and/or MAC signaling on the terminal device side. That is, a parameter value indicated by the CSI-RS configuration and an original parameter value need to correspond to the same AI model. For example, in a case where the terminal device reports that different AI models correspond to different CSI-RS base sequences, CSI-RS base sequences indicated by the network device through DCI signaling and/or MAC signaling need to correspond to a same AI model, and switching between CSI-RS base sequences corresponding to different AI models may be performed through higher-layer signaling (such as RRC signaling).

Exemplarily, in a case where a CSI report content configuration is indicated via DCI signaling and/or MAC signaling (for example, aperiodic CSI reporting is triggered by DCI, different CSI reports correspond to different CSI report contents, and the CSI report contents are determined based on DCI in this case), the CSI report content configuration cannot cause AI model switching based on DCI signaling and/or MAC signaling on the terminal device side. That is, a parameter value indicated by the CSI report content configuration and an original parameter value need to correspond to the same AI model. For example, in a case where the terminal device reports that different AI models are respectively used for RSRP reporting and CSI reporting, the CSI report content configuration indicated by the network device through DCI signaling and/or MAC signaling needs to correspond to a same AI model, and switching between CSI report content configurations corresponding to different AI models may be performed through higher-layer signaling (such as RRC signaling).

Exemplarily, in a case where an MCS configuration or a transport block size configuration is indicated via DCI signaling and/or MAC signaling, the MCS configuration or the transport block size configuration cannot cause AI model switching based on DCI signaling and/or MAC signaling on the terminal device side. That is, a parameter value indicated by the MCS configuration or the transport block size configuration and an original parameter value need to correspond to the same AI model. For example, in a case where the terminal device reports that different AI models are used for different modulation schemes, modulation schemes indicated by the network device through DCI signaling and/or MAC signaling need to correspond to a same AI model, and modulation schemes corresponding to different AI models may be switched through higher-layer signaling (such as RRC signaling).

Exemplarily, in a case where a transmission layer number configuration or an antenna port number configuration is indicated via DCI signaling and/or MAC signaling, the transmission layer number configuration or the antenna port number configuration cannot cause AI model switching based on DCI signaling and/or MAC signaling on the terminal device side. That is, a parameter value indicated by the transmission layer number configuration or the antenna port number configuration and an original parameter value need to correspond to the same AI model. For example, in a case where the terminal device reports that different AI models are used for different antenna port numbers, antenna port numbers indicated by the network device through DCI signaling and/or MAC signaling need to correspond to a same AI model, and antenna port numbers corresponding to different AI models may be switched through higher-layer signaling (such as RRC signaling).

Exemplarily, in a case where a transmission bandwidth configuration, a carrier frequency configuration or a subcarrier spacing configuration is indicated via DCI signaling and/or MAC signaling, the transmission bandwidth configuration, the carrier frequency configuration or the subcarrier spacing configuration cannot cause AI model switching based on DCI signaling and/or MAC signaling on the terminal device side. That is, a parameter value indicated by the transmission bandwidth configuration, the carrier frequency configuration or the subcarrier spacing configuration and an original parameter value need to correspond to the same AI model. For example, in a case where the terminal device reports that different AI models are used for different transmission bandwidths, transmission bandwidths indicated by the network device through DCI signaling and/or MAC signaling need to correspond to a same AI model, and transmission bandwidths corresponding to different AI models may be switched through higher-layer signaling (such as RRC signaling).

Exemplarily, in a case where a MIMO transmission scheme configuration is indicated via DCI signaling and/or MAC signaling, the MIMO transmission scheme configuration cannot cause AI model switching based on DCI signaling and/or MAC signaling on the terminal device side. That is, a parameter value indicated by the MIMO transmission scheme configuration and an original parameter value need to correspond to the same AI model. For example, in a case where the terminal device reports that different AI models are used for a single TRP transmission scheme and a multi-TRP coordination scheme, the MIMO transmission scheme configuration indicated by the network device through DCI signaling and/or MAC signaling needs to correspond to a same AI model, and MIMO transmission scheme configurations corresponding to different AI models may be switched through higher-layer signaling (such as RRC signaling).

With this method, in a case where the parameter configuration is indicated via DCI signaling and/or MAC signaling, the first AI model is the same as the second AI model corresponding to the first value, which can avoid AI model switching that exceeds its own capability and ensure performance of AI model-based uplink and downlink transmission.

In some embodiments, the method may further include that: in a case where the parameter configuration is indicated via DCI signaling and/or MAC signaling, the terminal device does not expect the first AI model corresponding to the value of the parameter configuration to be different from the second AI model corresponding to the first value.

That is, in a case where the parameter configuration is indicated via DCI signaling and/or MAC signaling, the terminal device expects the first AI model corresponding to the value of the parameter configuration to be the same as the second AI model corresponding to the first value.

The first value is a parameter value before the terminal device receives the parameter configuration.

Exemplarily, in a case where a DMRS configuration is indicated via DCI signaling and/or MAC signaling, the terminal device does not expect a parameter value indicated by the DMRS configuration and an original parameter value (i.e., the first value) to correspond to different AI models, that is, the DMRS configuration cannot cause AI model switching based on the DCI signaling and/or MAC signaling on the terminal device side. A DMRS configuration indicated by the network device through RRC signaling may correspond to different AI models.

For example, in a case where the terminal device reports that different DMRS port sets correspond to different AI models, when the network device indicates a DMRS configuration through DCI signaling, the terminal device can perform dynamic switching between DMRS ports under a same DMRS port set, but cannot perform dynamic switching between DMRS ports under different DMRS port sets.

Exemplarily, in a case where a CSI-RS configuration is indicated via DCI signaling and/or MAC signaling, the terminal device does not expect a parameter value indicated by the CSI-RS configuration and an original parameter value (i.e., the first value) to correspond to different AI models, that is, the CSI-RS configuration cannot cause AI model switching based on DCI signaling and/or MAC signaling on the terminal device side. A CSI-RS configuration indicated by the network device through RRC signaling may correspond to different AI models.

For example, in a case where the terminal reports that different CSI-RS port numbers adopt different AI models, when the network device triggers aperiodic CSI reporting through DCI, the CSI-RS port number used for CSI reporting cannot be dynamically adjusted (for example, multiple CSI reports triggered in a same time adopt different CSI-RS port quantities).

Exemplarily, in a case where a CSI report content configuration is indicated via DCI signaling and/or MAC signaling, the terminal device does not expect a parameter value indicated by the CSI report content configuration and an original parameter value (i.e., the first value) to correspond to different AI models, that is, the CSI report content configuration cannot cause AI model switching based on DCI signaling and/or MAC signaling on the terminal device side. A CSI report content configuration indicated by the network device through RRC signaling may correspond to different AI models.

For example, in a case where the terminal device reports that different CSI report contents adopt different AI models, when the network device triggers aperiodic CSI reporting through DCI signaling, CSI report contents of CSI reporting cannot be dynamically adjusted (for example, multiple CSI reports triggered in a same time adopt different CSI report contents).

Exemplarily, in a case where an MCS configuration or a transport block size configuration is indicated via DCI signaling and/or MAC signaling, the terminal device does not expect a parameter value indicated by the MCS configuration or the transport block size configuration and an original parameter value (i.e., the first value) to correspond to different AI models, that is, the MCS configuration or the transport block size configuration cannot cause AI model switching based on DCI signaling and/or MAC signaling on the terminal device side. An MCS configuration or a transport block size configuration indicated by the network device through RRC signaling may correspond to different AI models.

For example, in a case where the terminal device reports that different modulation schemes adopt different AI models, when the network device indicates an MCS through DCI signaling, the terminal device can perform dynamic switching between MCSs under a same modulation scheme, but cannot perform dynamic switching between MCSs under different modulation schemes.

Exemplarily, in a case where an antenna port number configuration or a transmission layer number configuration is indicated via DCI signaling and/or MAC signaling, the terminal device does not expect a parameter value indicated by the antenna port number configuration or the transmission layer number configuration and an original parameter value (i.e., the first value) to correspond to different AI models, that is, the antenna port number configuration or the transmission layer number configuration cannot cause AI model switching based on DCI signaling and/or MAC signaling on the terminal device side. An antenna port number configuration or a transmission layer number configuration indicated by the network device through RRC signaling may correspond to different AI models.

For example, in a case where the terminal device reports that different antenna port numbers adopt different AI models, if the network device indicates an antenna port number through DCI signaling, the terminal device cannot perform dynamic switching between different antenna port numbers.

Exemplarily, in a case where a transmission bandwidth configuration, a carrier frequency configuration or a subcarrier spacing configuration is indicated via DCI signaling and/or MAC signaling, the terminal device does not expect a parameter value indicated by the transmission bandwidth configuration, the carrier frequency configuration or the subcarrier spacing configuration and an original parameter value (i.e., the first value) to correspond to different AI models, that is, the transmission bandwidth configuration, the carrier frequency configuration or the subcarrier spacing configuration cannot cause AI model switching based on DCI signaling and/or MAC signaling on the terminal device side. A transmission bandwidth configuration, a carrier frequency configuration or a subcarrier spacing configuration indicated by the network device through RRC signaling may correspond to different AI models.

For example, in a case where the terminal device reports that different subcarrier spacings adopt different AI models, when the network device indicates Bandwidth Part (BWP) switching through DCI signaling (different BWPs may use different subcarrier spacings), the terminal device cannot perform dynamic switching between different subcarrier spacings, that is, the indicated BWP and an original BWP need to adopt a same subcarrier spacing.

Exemplarily, in a case where a MIMO transmission scheme configuration is indicated via DCI signaling and/or MAC signaling, the terminal device does not expect a MIMO transmission scheme indicated by the parameter configuration and an original MIMO transmission scheme to correspond to different AI models, that is, the MIMO transmission scheme configuration cannot cause AI model switching based on the DCI signaling and/or MAC signaling on the terminal device side. A MIMO transmission scheme configuration indicated by the network device through RRC signaling may correspond to different AI models.

For example, in a case where the terminal device reports that open-loop transmission and closed-loop transmission adopt different AI models, when the network device indicates a MIMO transmission scheme through DCI signaling, dynamic switching between open-loop transmission and closed-loop transmission cannot be performed.

In some embodiments, the terminal device may determine, according to a cell ID configured by the network device, whether to perform cell switching and whether cell switching causes AI model switching. If cell switching may cause AI model switching, the terminal device needs to reserve time for performing AI model switching; otherwise, the terminal device may still adopt an original AI model for data transmission or reception.

In the above method, when the first AI model is different from the second AI model corresponding to the first value, the terminal device may adopt the previous second AI model for communication with the network device without performing AI model switching; or, the terminal device may not adopt an AI model for communication with the network device, but perform communication in a traditional non-AI manner; or, the terminal device may treat such a configuration as an error configuration, and thus not perform communication with the network device.

With this method, in a case where the parameter configuration is indicated via DCI signaling and/or MAC signaling, the terminal device does not expect the first AI model to be different from the second AI model corresponding to the first value, so that AI model switching that exceeds its own capability can be avoided and performance of AI model-based uplink and downlink transmission can be ensured.

S430: The terminal device performs communication with the network device based on the parameter configuration.

In some embodiments, the operation that the terminal device performs communication with the network device based on the parameter configuration may include that: the terminal device performs communication with the network device based on the first AI model corresponding to the value of the parameter configuration.

The first AI model belongs to the one or more AI models.

In some embodiments, the number of first AI models corresponding to the value of the parameter configuration is one.

Exemplarily, a parameter value indicated by a DMRS configuration cannot correspond to two different AI models, otherwise the terminal device cannot determine which AI model to adopt for channel estimation or data monitoring.

Exemplarily, a parameter value indicated by a CSI-RS configuration cannot correspond to two different AI models, otherwise the terminal device cannot determine which AI model to adopt for CSI feedback.

Exemplarily, a CSI report content configuration cannot correspond to two different AI models, otherwise the terminal device cannot determine which AI model to adopt for CSI feedback.

Exemplarily, an MCS configuration or a transport block size configuration cannot correspond to two different AI models, otherwise the terminal device cannot determine which AI model to adopt for data detection.

Exemplarily, a transmission layer number configuration or an antenna port number configuration cannot correspond to two different AI models, otherwise the terminal device cannot determine which AI model to adopt for data detection.

Exemplarily, a transmission bandwidth configuration, a subcarrier spacing configuration or a carrier frequency configuration cannot correspond to two different AI models, otherwise the terminal device cannot determine which AI model to adopt for data detection.

Exemplarily, a TCI state configuration cannot correspond to two different AI models, otherwise the terminal device cannot determine which AI model to adopt for data detection.

Exemplarily, a cell ID configuration cannot correspond to two different AI models, otherwise the terminal device cannot determine which AI model to adopt for data detection.

Exemplarily, the network device cannot indicate simultaneous transmission or reception of two signals, where MIMO transmission schemes adopted by the two signals correspond to different AI models, otherwise the terminal device cannot adopt two AI models at the same time for signal transmission or reception.

With this method, in a case where the number of first AI models is one, the terminal device can learn which AI model to adopt to perform a corresponding function (such as CSI feedback), so that performance of AI model-based uplink and downlink transmission can be ensured.

In some embodiments, the terminal device does not expect the first AI model corresponding to the value of the parameter configuration to include at least two different AI models.

That is, the terminal device expects the number of first AI models corresponding to the value of the parameter configuration to be one.

Exemplarily, at least for a terminal device without multi-model capability, the terminal device does not expect a parameter value indicated by a DMRS configuration to correspond to two different AI models, otherwise the terminal device cannot determine which AI model to adopt for channel estimation or data monitoring. For example, in a case where different DMRS port sets correspond to different AI models, the network device cannot indicate ports in two DMRS port sets at the same time.

Exemplarily, at least for a terminal device without multi-model capability, the terminal device does not expect a parameter value indicated by a CSI-RS configuration to correspond to two different AI models, otherwise the terminal device cannot determine which AI model to adopt for CSI feedback. For example, in a case where different AI models are adopted for different CSI-RS port numbers, when the network device activates semi-persistent CSI reporting through MAC signaling, multiple CSI-RS resources for a same CSI report measurement cannot correspond to different AI models (for example, a bandwidth of one CSI-RS resource is greater than a first threshold and a bandwidth of another CSI-RS resource is smaller than the first threshold, where the first threshold may be a predefined parameter value or a parameter value set in another manner, which is not limited in the embodiments of the present disclosure).

Exemplarily, at least for a terminal device without multi-model capability, the terminal device does not expect CSI report contents indicated by one CSI report content configuration to correspond to two different AI models, otherwise the terminal device cannot determine which AI model to adopt for CSI feedback. For example, in a case where the terminal device reports that different AI models are adopted for different CSI report contents, when the network device activates semi-persistent CSI reporting through MAC signaling, multiple CSI report contents for a same CSI report measurement cannot correspond to different AI models.

Exemplarily, at least for a terminal device without multi-model capability, the terminal device does not expect a parameter value indicated by an MCS configuration or a transport block size configuration to correspond to two different AI models, otherwise the terminal device cannot determine which AI model to adopt for data detection. For example, in a case where different code rate ranges (such as greater than 1/3 and less than 1/3) use different AI models, when the network device indicates MCSs of two codewords through DCI, the MCSs of the two codewords cannot indicate code rate ranges corresponding to different AI models (for example, the code rate of one AI model is greater than 1/3 and the code rate of another AI model is less than 1/3).

Exemplarily, at least for a terminal device without multi-model capability, the terminal device does not expect a parameter value indicated by an antenna port number configuration or a transmission layer number configuration to correspond to two different AI models, otherwise the terminal device cannot determine which AI model to adopt for data detection. For example, in a case where different AI models are adopted for different antenna port numbers, if the terminal device is scheduled through multiple DCIs at the same time to perform uplink or downlink transmission, the multiple DCIs cannot indicate two different antenna port numbers at the same time; in a case where different AI models are adopted for different transmission layer numbers, if the terminal device is scheduled through multiple DCIs at the same time to perform uplink or downlink transmission at the same time, the multiple DCIs cannot indicate two different transmission layer numbers at the same time.

Exemplarily, at least for a terminal device without multi-model capability, the terminal device does not expect a parameter value indicated by a transmission bandwidth configuration, a carrier frequency configuration or a subcarrier spacing configuration to correspond to two different AI models, otherwise the terminal device cannot determine which AI model to adopt for data detection. For example, in a case where different transmission bandwidth ranges correspond to different AI models, the network device cannot indicate two transmission bandwidth ranges at the same time.

Exemplarily, at least for a terminal device without multi-model capability, the terminal device does not expect a parameter value indicated by a TCI state configuration to correspond to two different AI models, otherwise the terminal device cannot determine which AI model to adopt for data detection. For example, in a case where different AI models are used for a single TCI state and multiple TCI states respectively, the network device cannot indicate a single TCI state and multiple TCI states at the same time.

Exemplarily, at least for a terminal device without multi-model capability, the terminal device does not expect a parameter value indicated by a cell ID configuration to correspond to two different AI models, otherwise the terminal device cannot determine which AI model to adopt for data detection. For example, in a case where different cell ID ranges correspond to different AI models, the network device cannot indicate two cell ID ranges at the same time.

Exemplarily, at least for a terminal device without multi-model capability, the terminal device does not expect the network device to indicate simultaneous transmission or reception of two signals, where MIMO transmission schemes adopted by the two signals correspond to different AI models, otherwise the terminal device cannot determine which AI model to adopt for transmission or reception of these signals. For example, the network device cannot indicate the terminal device to simultaneously receive two Physical Downlink Shared Channels (PDSCHs), where the two PDSCHs adopt a single TRP transmission scheme and a multi-TRP transmission scheme respectively and correspond to different AI models.

In the above method, when the parameter configuration of the network device corresponds to two different AI models, the terminal device may not adopt an AI model for communication with the network device, but perform communication with the network device in a traditional non-AI manner; or, the terminal device may treat such a configuration as an error configuration, and thus not perform communication with the network device.

With this method, the terminal device does not expect the first AI model to include at least two different AI models, so that the terminal device can learn which AI model to adopt to perform a corresponding function (such as CSI feedback), thereby ensuring performance of AI model-based uplink and downlink transmission.

Embodiments of the present disclosure provide a communication method, in which a terminal device may send a first capability to a network device, the first capability being used to represent a parameter configuration range corresponding to one or more AI models; the terminal device may receive a parameter configuration from the network device, and perform communication with the network device based on a first AI model corresponding to the parameter configuration, where the first AI model belongs to the one or more AI models. In this way, by sending the first capability to the network device, the terminal device enables the network device to perform reasonable parameter configuration, avoids AI model switching performed by the terminal device based on the parameter configuration from exceeding the capability of the terminal device (such as dynamic AI model switching), and avoids frequent AI model switching caused by the parameter configuration as much as possible, thereby ensuring performance of AI model-based uplink and downlink transmission.

Based on S410, in a case where functions of the one or more AI models are different, the representation manner of the first capability may include one or more of the following.

Manner #A: In a case where the one or more AI models are used for channel estimation or data reception, the first capability may represent a DMRS configuration range corresponding to the one or more AI models.

In some embodiments, the one or more AI models may be used for downlink channel estimation or downlink data reception. For example, in a case where the one or more AI models are used for downlink channel estimation, the one or more AI models take received signals and/or pilot sequences as input, and output a channel estimation result. In a case where the one or more AI models are used for downlink data reception, the one or more AI models take received signals and/or pilot sequences as input, and output detected data bits.

In some embodiments, the DMRS configuration range corresponding to the one or more AI models may include one or more of the following:
one AI model corresponds to all DMRS configurations;
different AI models correspond to different DMRS base sequences;
different AI models correspond to different DMRS CDM groups;
different AI models correspond to different DMRS port multiplexing modes;
different AI models correspond to different numbers of DMRS symbols; and
different AI models correspond to different DMRS port sets.

It should be noted that, in a case where the number of the one or more AI models is one, the one AI model may correspond to all DMRS configurations.

Exemplarily, the one AI model may correspond to all DMRS base sequences, all DMRS CDM groups, all DMRS port multiplexing modes, all numbers of DMRS symbols, all DMRS port sets, and so on.

Further, in a case where the number of first AI models is one, the one AI model may be the first AI model.

It should be noted that, in a case where the number of the one or more AI models is multiple, the multiple AI models may be different AI models, and each of the multiple AI models may correspond to a part of DMRS configurations.

Exemplarily, different AI models may correspond to different DMRS base sequences. For example, different AI models may correspond to different DMRS sequence IDs.

Exemplarily, different AI models may correspond to different DMRS CDM groups. For example, a CDM multiplexing mode is adopted within one DMRS CDM group, and Frequency Division Multiplexing (FDM)/Time Division Multiplexing (TDM) multiplexing modes are adopted between different DMRS CDM groups.

Exemplarily, different AI models may correspond to different DMRS port multiplexing modes. The DMRS port multiplexing mode may be CDM/FDM/TDM.

Exemplarily, different AI models may correspond to different DMRS port sets. For example, DMRS ports may be divided into several DMRS port sets, different AI models may correspond to different DMRS port sets, and ports within one DMRS port set use the same AI model; for another example, each AI model corresponds to one DMRS port, and different AI models correspond to different DMRS ports.

Further, in a case where the first AI model includes at least two different AI models, the multiple AI models may include the first AI model.

It should be noted that, in a case where the first capability represents a DMRS configuration range corresponding to the one or more AI models, the first capability (such as 2 bits) may indicate one or more of: per UE (i.e., all DMRS configurations share one AI model), per Sequence (i.e., one AI model corresponds to one DMRS base sequence, and different AI models are used for different DMRS base sequences), and per Port (i.e., one AI model corresponds to one DMRS port, and different AI models are used for different DMRS ports); alternatively, the first capability (such as 1 bit) may indicate whether all DMRS configurations share one AI model.

It should be understood that the terminal device may report, to the network device via a Bitmap, a DMRS configuration range corresponding to the one or more AI models, where each bit reported by the terminal device represents whether the terminal device uses the same AI model for different values of the DMRS configuration, that is, whether adjustment of the DMRS configuration requires the terminal device to perform AI model switching, where one bit corresponds to one DMRS configuration.

Exemplarily, the terminal device may report 3-bit information, where a first bit indicates whether the terminal device uses the same AI model for different DMRS base sequences, a second bit indicates whether the terminal device uses the same AI model for different numbers of DMRS symbols, and a third bit indicates whether the terminal device uses the same AI model for different DMRS port sets. Here, 0 represents using different AI models and 1 represents using the same AI model; or 0 represents using the same AI model and 1 represents using different AI models. Based on the 3-bit information reported by the terminal device, the network device may determine whether adjustment of a certain DMRS configuration (such as a DMRS Sequence ID or the number of DMRS symbols) causes AI model switching on the terminal device side.

With this method, in a case where the first capability represents a DMRS configuration range corresponding to the one or more AI models, after the terminal device sends the first capability to the network device, the network device may subsequently indicate a DMRS configuration to the terminal device based on the first capability, so that AI model switching based on the DMRS configuration can be prevented from exceeding the capability of the terminal device (such as dynamic AI model switching), the frequency of AI model switching can be reduced, and performance of AI model-based uplink and downlink transmission can be ensured.

Manner #B: In a case where the one or more AI models are used for CSI measurement, the first capability may represent a CSI-RS configuration range corresponding to the one or more AI models, and/or a CSI report content configuration range corresponding to the one or more AI models.

In some embodiments, the one or more AI models may be used for CSI measurement. For example, the one or more AI models take downlink received signals and/or CSI-RS sequences as input, and output a CSI measurement result, such as RSRP or Precoding Matrix Indicator (PMI) bits.

In some embodiments, the CSI-RS configuration range corresponding to the one or more AI models may include one or more of the following:
one AI model corresponds to all CSI-RS configurations;
different AI models correspond to different CSI-RS base sequences;
different AI models correspond to different CSI-RS port number sets;
different AI models correspond to different CSI-RS port multiplexing modes;
different AI models correspond to different numbers of CSI-RS symbols; and
different AI models correspond to different CSI-RS transmission bandwidths.

It should be noted that, in a case where the number of the one or more AI models is one, the one AI model may correspond to all CSI-RS configurations.

Exemplarily, the one AI model may correspond to all CSI-RS base sequences, all CSI-RS port number sets, all CSI-RS port multiplexing modes, all numbers of CSI-RS symbols, all CSI-RS transmission bandwidths, and so on.

Further, in a case where the number of first AI models is one, the one AI model may be the first AI model.

It should be noted that, in a case where the number of the one or more AI models is multiple, the multiple AI models may be different AI models, and each of the multiple AI models may correspond to a part of CSI-RS configurations.

Exemplarily, different AI models may correspond to different CSI-RS base sequences. For example, different AI models may correspond to different CSI-RS sequence IDs.

Exemplarily, different AI models may correspond to different CSI-RS port number sets. For example, one AI model corresponds to {2, 4, 8} CSI-RS ports, another AI model corresponds to {12, 16, 20, 24} CSI-RS ports, and another AI model corresponds to {32, 64, 128} CSI-RS ports; for another example, each AI model corresponds to one CSI-RS port number, and different AI models correspond to different CSI-RS port numbers.

Exemplarily, different AI models may correspond to different CSI-RS port multiplexing modes. The CSI-RS port multiplexing mode may be CDM/FDM/TDM.

Exemplarily, different AI models may correspond to different numbers of CSI-RS symbols. The number of CSI-RS symbols may be configured via RRC signaling.

Exemplarily, different AI models may correspond to different CSI-RS transmission bandwidths. For example, one AI model corresponds to a case where the CSI-RS transmission bandwidth is less than a second threshold, and another AI model corresponds to a case where the CSI-RS transmission bandwidth is greater than or equal to the second threshold.

The second threshold may be a predefined parameter value or a parameter value set in another manner, which is not limited in the embodiments of the present disclosure.

Further, in a case where the first AI model includes at least two different AI models, the multiple AI models may include the first AI model.

It should be noted that, in a case where the first capability represents a CSI-RS configuration range corresponding to the one or more AI models, the first capability (such as 2 bits) may indicate one or more of: per UE (i.e., all CSI-RS configurations share one AI model), per Sequence (i.e., one AI model corresponds to one CSI-RS base sequence, and different AI models are used for different CSI-RS base sequences), and per Port Number (i.e., one AI model corresponds to one CSI-RS port number, and different AI models are used for different CSI-RS port numbers); alternatively, the first capability (such as 1 bit) may indicate whether all CSI-RS configurations share one AI model.

It should be understood that the terminal device may report, to the network device via a Bitmap, a CSI-RS configuration range corresponding to the one or more AI models, where each bit reported by the terminal device represents whether the terminal device uses the same AI model for different values of the CSI-RS configuration, that is, whether adjustment of the CSI-RS configuration requires the terminal device to perform AI model switching, where one bit corresponds to one CSI-RS configuration.

Exemplarily, the terminal device may report 3-bit information, where a first bit indicates whether the terminal device uses the same AI model for different CSI-RS base sequences, a second bit indicates whether the terminal device uses the same AI model for different CSI-RS port numbers, and a third bit indicates whether the terminal device uses the same AI model for different CSI-RS transmission bandwidths. Here, 0 represents using different AI models and 1 represents using the same AI model; or 0 represents using the same AI model and 1 represents using different AI models. Based on the 3-bit information reported by the terminal device, the network device may determine whether adjustment of a certain CSI-RS configuration (such as a CSI-RS port number or a CSI-RS transmission bandwidth) causes AI model switching on the terminal device side.

With this method, in a case where the first capability represents a CSI-RS configuration range corresponding to the one or more AI models, after the terminal device sends the first capability to the network device, the network device may subsequently indicate a CSI-RS configuration to the terminal device based on the first capability, so that AI model switching based on the CSI-RS configuration can be prevented from exceeding the capability of the terminal device (such as dynamic AI model switching), the frequency of AI model switching can be reduced, and performance of AI model-based uplink and downlink transmission can be ensured.

In some embodiments, the CSI report content configuration range corresponding to the one or more AI models may include one or more of the following:
one AI model is used for RSRP reporting and CSI reporting;
different AI models are used for RSRP reporting and CSI reporting respectively;
one AI model is used for CSI compression and CSI prediction;
different AI models are used for CSI compression and CSI prediction respectively;
one AI model is used for CSI compression, CSI prediction, as well as CSI prediction and compression; and
different AI models are used for CSI compression, CSI prediction, as well as CSI prediction and compression respectively.

It should be noted that, in a case where the number of the one or more AI models is one, the one AI model may be used for RSRP reporting and CSI reporting; and/or the one AI model may be used for CSI compression, CSI prediction, as well as CSI prediction and compression.

Further, in a case where the number of first AI models is one, the one AI model may be the first AI model.

It should be noted that, in a case where the number of the one or more AI models is multiple, the multiple AI models may be different AI models, and each AI model of the multiple AI models may correspond to a part of CSI report contents.

Further, in a case where the first AI model includes at least two different AI models, the multiple AI models may include the first AI model.

It should be noted that, in a case where the first capability represents a CSI report content configuration range corresponding to the one or more AI models, the first capability (such as 1 bit) may indicate whether a same AI model is used for CSI compression and CSI prediction in CSI reporting; and/or the first capability (such as 1 bit) may indicate whether a same AI model is used for RSRP reporting and CSI reporting; and/or the first capability (such as 1 bit) may indicate whether a same AI model is used for CSI compression, CSI prediction, as well as CSI prediction and compression.

It should be understood that the terminal device may report, to the network device via a Bitmap, a CSI report content configuration range corresponding to the one or more AI models, where each bit reported by the terminal device represents whether the terminal device uses the same AI model for different values of the CSI report content configuration, that is, whether adjustment of the CSI report content configuration requires the terminal device to perform AI model switching, where one bit corresponds to one CSI report content configuration.

Exemplarily, the terminal device may report 2-bit information, where a first bit indicates whether different AI models are used for RSRP reporting and CSI reporting respectively, and a second bit indicates whether different AI models are used for CSI compression and CSI prediction respectively. Here, 0 represents using different AI models and 1 represents using the same AI model; or 0 represents using the same AI model and 1 represents using different AI models. Based on the 2-bit information reported by the terminal device, the network device may determine whether adjustment of a certain CSI report content configuration causes AI model switching on the terminal device side.

With this method, in a case where the first capability represents a CSI report content configuration range corresponding to the one or more AI models, after the terminal device sends the first capability to the network device, the network device may subsequently indicate a CSI report content configuration to the terminal device based on the first capability, so that AI model switching based on the CSI report content configuration can be prevented from exceeding the capability of the terminal device (such as dynamic AI model switching), the frequency of AI model switching can be reduced, and performance of AI model-based uplink and downlink transmission can be ensured.

Manner #C: In a case where the one or more AI models are used for data transmission or data reception, the first capability may represent one or more of the following:
a MCS configuration range corresponding to the one or more AI models;
a transport block size configuration range corresponding to the one or more AI models;
a transmission layer number configuration range corresponding to the one or more AI models;
a transmission bandwidth configuration range corresponding to the one or more AI models;
an antenna port number configuration range corresponding to the one or more AI models;
a carrier frequency configuration range corresponding to the one or more AI models;
a subcarrier spacing configuration range corresponding to the one or more AI models;
a TCI state configuration range corresponding to the one or more AI models; and
a cell ID configuration range corresponding to the one or more AI models.

In some embodiments, the one or more AI models may be used for data transmission or data reception. The data reception includes channel decoding and/or demodulation, and the data transmission includes channel coding and/or modulation. For example, for downlink transmission, the one or more AI models take downlink received signals as input, and output a data detection result, such as a source bit stream; and for uplink transmission, the one or more AI models take to-be-transmitted data as input, and output modulated and coded transmission signals.

In some embodiments, the MCS configuration range corresponding to the one or more AI models includes one or more of the following:
one AI model is used for all MCSs;
different AI models are used for different MCSs;
MCS index ranges applicable to different AI models;
one AI model is used for all modulation schemes;
different AI models are used for different modulation schemes;
modulation scheme sets applicable to different AI models;
one AI model is used for all code rate ranges; and
code rate ranges applicable to different AI models.

It should be noted that, in a case where the number of the one or more AI models is one, the one AI model may be used for all MCSs; and/or the one AI model may be used for all modulation schemes; and/or the one AI model may be used for all code rate ranges.

Exemplarily, one AI model may be used for all MCSs. For example, the same AI model is used on the terminal device side for all MCSs supported by the protocol. Each MCS corresponds to one modulation scheme and one code rate.

Exemplarily, one AI model may be used for all modulation schemes. For example, one AI model may be used for Quadrature Phase Shift Keying (QPSK), 16 Quadrature Amplitude Modulation (QAM), and 64QAM.

Exemplarily, one AI model may be used for all code rate ranges. For example, the same AI model is used on the terminal device side for all code rate ranges supported by the protocol.

Further, in a case where the number of first AI models is one, the one AI model may be the first AI model.

It should be noted that, in a case where the number of the one or more AI models is multiple, the multiple AI models may be different AI models, and each AI model of the multiple AI models may correspond to a part of MCS configurations.

Exemplarily, different AI models may be used for different MCSs. For example, different AI models are used on the terminal device side for different MCSs supported by the protocol.

Exemplarily, MCS index ranges are applicable to different AI models. For example, an MCS index range of 0-12 may correspond to one AI model, and an MCS index range of 12-27 may correspond to another AI model.

Exemplarily, different AI models may be used for different modulation schemes. For example, different AI models may be used for QPSK, 16QAM, 64QAM, and 256QAM respectively.

Exemplarily, modulation scheme sets are applicable to different AI models. For example, one model supports data transmission and reception of QPSK and 16QAM, and another AI model supports data transmission and reception of 64QAM and 256QAM.

Exemplarily, code rate ranges are applicable to different AI models. For example, a code rate applicable to one AI model is less than a third threshold (such as 1/3), and a code rate applicable to another AI model is greater than the third threshold.

The third threshold may be a predefined parameter value or a parameter value set in another manner, which is not limited in the embodiments of the present disclosure.

Further, in a case where the first AI model includes at least two different AI models, the multiple AI models may include the first AI model.

It should be noted that, in a case where the first capability represents a MCS configuration range corresponding to the one or more AI models, the first capability (such as 2 bits) may indicate one or more of: per UE (i.e., all MCS configurations share one AI model), per Modulation Order (i.e., one AI model corresponds to one modulation scheme, and different AI models correspond to different modulation schemes), and per MCS (i.e., one AI model corresponds to one MCS, and different AI models correspond to different MCSs).

Exemplarily, the first capability may also be indicated through one or more of the following manners:
1-bit information, configured to indicate whether a same AI model is used for different MCSs;
1-bit information, configured to indicate whether a same AI model is used for different modulation schemes;
1-bit information, configured to indicate whether a same AI model is used for different code rates;
N1-bit information, configured to indicate MCS index ranges respectively supported by different AI models;
N2-bit information, configured to indicate modulation schemes respectively supported by different AI models; and
N3-bit information, configured to indicate code rate ranges respectively supported by different AI models.

It should be understood that the terminal device may report, to the network device via a Bitmap, a MCS configuration range corresponding to the one or more AI models, where each bit reported by the terminal device represents whether the terminal device uses the same AI model for different values of the MCS configuration, that is, whether adjustment of the MCS configuration requires the terminal device to perform AI model switching, where one bit corresponds to one MCS configuration.

Exemplarily, the terminal device may report 2-bit information, where a first bit indicates whether the terminal device uses the same AI model for different modulation schemes, and a second bit indicates whether the terminal device uses the same AI model for different code rate ranges. Here, 0 represents using different AI models and 1 represents using the same AI model; or 0 represents using the same AI model and 1 represents using different AI models. Based on the 2-bit information reported by the terminal device, the network device may determine whether adjustment of a certain MCS configuration (such as a modulation scheme or a code rate range) causes AI model switching on the terminal device side.

With this method, in a case where the first capability represents a MCS configuration range corresponding to the one or more AI models, after the terminal device sends the first capability to the network device, the network device may subsequently indicate an MCS configuration to the terminal device based on the first capability, so that AI model switching based on the MCS configuration can be prevented from exceeding the capability of the terminal device (such as dynamic AI model switching), the frequency of AI model switching can be reduced, and performance of AI model-based uplink and downlink transmission can be ensured.

In some embodiments, the transport block size configuration range corresponding to the one or more AI models may include one or more of the following:
one AI model used for all transport block sizes;
different AI models used for different transport block sizes; and
transport block size ranges applicable to different AI models.

It should be noted that, in a case where the number of the one or more AI models is one, the one AI model may be used for all transport block sizes.

Further, in a case where the number of first AI models is one, the one AI model may be the first AI model.

It should be noted that, in a case where the number of the one or more AI models is multiple, the multiple AI models may be different AI models, and transport block size ranges applicable to the different AI models may be different. For example, a transport block size applicable to one AI model is greater than a fourth threshold, and a transport block size applicable to another AI model is less than the fourth threshold.

The fourth threshold may be a predefined parameter value or a parameter value set in another manner, which is not limited in the embodiments of the present disclosure.

Further, in a case where the first AI model includes at least two different AI models, the multiple AI models may include the first AI model.

It should be noted that, in a case where the first capability represents a transport block size configuration range corresponding to the one or more AI models, the first capability may indicate whether a same AI model is used for different transport block sizes; and/or the first capability may indicate transport block size ranges applicable to different AI models.

It should be understood that the terminal device may report, to the network device via a Bitmap, a transport block size configuration range corresponding to the one or more AI models, where each bit reported by the terminal device represents whether the terminal device uses the same AI model for different values of the transport block size configuration, that is, whether adjustment of the transport block size configuration requires the terminal device to perform AI model switching.

Exemplarily, the terminal device may report 1-bit information, which may indicate whether the terminal device uses the same AI model for different transport block sizes. Here, 0 represents using different AI models and 1 represents using the same AI model; or 0 represents using the same AI model and 1 represents using different AI models. Based on the 1-bit information reported by the terminal device, the network device may determine whether adjustment of the transport block size configuration causes AI model switching on the terminal device side.

With this method, in a case where the first capability represents a transport block size configuration range corresponding to the one or more AI models, after the terminal device sends the first capability to the network device, the network device may subsequently indicate a transport block size configuration to the terminal device based on the first capability, so that AI model switching based on the transport block size configuration can be prevented from exceeding the capability of the terminal device (such as dynamic AI model switching), the frequency of AI model switching can be reduced, and performance of AI model-based uplink and downlink transmission can be ensured.

In some embodiments, the one or more AI models may be used for data transmission or data reception. For downlink transmission, the one or more AI models take downlink received signals as input, and output a data detection result, such as a source bit stream; for uplink transmission, the one or more AI models take to-be-transmitted data as input, and output transmission signals on respective antenna ports.

In some embodiments, the antenna port number configuration range corresponding to the one or more AI models includes one or more of the following:
one AI model used for all antenna port numbers;
different AI models used for different antenna port numbers; and
antenna port number ranges applicable to different AI models.

It should be noted that, in a case where the number of the one or more AI models is one, the one AI model may be used for all antenna port numbers.

Further, in a case where the number of first AI models is one, the one AI model may be the first AI model.

It should be noted that, in a case where the number of the one or more AI models is multiple, the multiple AI models may be different AI models, and the different AI models may be used for different antenna port numbers. For example, an antenna port number applicable to one AI model is greater than a fifth threshold, and an antenna port number applicable to another AI model is less than the fifth threshold.

The fifth threshold may be a predefined parameter value or a parameter value set in another manner, which is not limited in the embodiments of the present disclosure.

Further, in a case where the first AI model includes at least two different AI models, the multiple AI models may include the first AI model.

It should be noted that, in a case where the first capability represents an antenna port number configuration range corresponding to the one or more AI models, the first capability may indicate whether a same AI model is used for different quantities of antenna ports; and/or the first capability may indicate antenna port number ranges applicable to different AI models.

Exemplarily, the terminal device may indicate antenna port numbers applicable to the supported AI models in a Bitmap manner, where each bit corresponds to one antenna port number. For example, the antenna port numbers may be 2, 4, 8, 12, and so on.

It should be understood that the terminal device may report, to the network device via a Bitmap, an antenna port number configuration range corresponding to the one or more AI models, where each bit reported by the terminal device represents whether the terminal device uses the same AI model for different values of the antenna port number configuration, that is, whether adjustment of the antenna port number configuration requires the terminal device to perform AI model switching.

Exemplarily, the terminal device may report 1-bit information, which may indicate whether the terminal device uses the same AI model for different antenna port numbers. Here, 0 represents using different AI models and 1 represents using the same AI model; or 0 represents using the same AI model and 1 represents using different AI models. Based on the 1-bit information reported by the terminal device, the network device may determine whether adjustment of the antenna port number configuration causes AI model switching on the terminal device side.

With this method, in a case where the first capability represents an antenna port number configuration range corresponding to the one or more AI models, after the terminal device sends the first capability to the network device, the network device may subsequently indicate an antenna port number configuration to the terminal device based on the first capability, so that AI model switching based on the antenna port number configuration can be prevented from exceeding the capability of the terminal device (such as dynamic AI model switching), the frequency of AI model switching can be reduced, and performance of AI model-based uplink and downlink transmission can be ensured.

In some embodiments, the transmission layer number configuration range corresponding to the one or more AI models may include one or more of the following:
one AI model used for all transmission layer numbers;
different AI models used for different transmission layer numbers; and
transmission layer number ranges applicable to different AI models.

It should be noted that, in a case where the number of the one or more AI models is one, the one AI model may be used for all transmission layer numbers.

Further, in a case where the number of first AI models is one, the one AI model may be the first AI model.

It should be noted that, in a case where the number of the one or more AI models is multiple, the multiple AI models may be different AI models, and the different AI models may be used for different transmission layer numbers. For example, a transmission layer number applicable to one AI model is greater than a sixth threshold, and a transmission layer number applicable to another AI model is less than the sixth threshold.

The sixth threshold may be a predefined parameter value or a parameter value set in another manner, which is not limited in the embodiments of the present disclosure.

Further, in a case where the first AI model includes at least two different AI models, the multiple AI models may include the first AI model.

It should be noted that, in a case where the first capability represents a transmission layer number configuration range corresponding to the one or more AI models, the first capability may indicate whether a same AI model is used for different transmission layer numbers; and/or the first capability may indicate transmission layer number ranges applicable to different AI models.

Exemplarily, the terminal device may indicate transmission layer numbers applicable to the supported AI models in a Bitmap manner, where each bit corresponds to one transmission layer. For example, the transmission layer number range may be 1, 2, and so on.

It should be understood that the terminal device may report, to the network device via a Bitmap, a transmission layer number configuration range corresponding to the one or more AI models, where each bit reported by the terminal device represents whether the terminal device uses the same AI model for different values of the transmission layer number configuration, that is, whether adjustment of the transmission layer number configuration requires the terminal device to perform AI model switching.

Exemplarily, the terminal device may report 1-bit information which may indicate whether the terminal device uses the same AI model for different transmission layer numbers. Here, 0 represents using different AI models and 1 represents using the same AI model; or 0 represents using the same AI model and 1 represents using different AI models. Based on the 1-bit information reported by the terminal device, the network device may determine whether adjustment of the transmission layer number configuration causes AI model switching on the terminal device side.

With this method, in a case where the first capability represents a transmission layer number configuration range corresponding to the one or more AI models, after the terminal device sends the first capability to the network device, the network device may subsequently indicate a transmission layer number configuration to the terminal device based on the first capability, so that AI model switching based on the transmission layer number configuration can be prevented from exceeding the capability of the terminal device (such as dynamic AI model switching), the frequency of AI model switching can be reduced, and performance of AI model-based uplink and downlink transmission can be ensured.

In some embodiments, the one or more AI models may be used for data transmission or data reception. For example, for downlink transmission, the one or more AI models take downlink received signals as input, and output a data detection result or a channel measurement result; for uplink transmission, the one or more AI models take to-be-transmitted data or signals as input, and output transmission signals processed by a transmitter.

In some embodiments, the transmission bandwidth configuration range corresponding to the one or more AI models may include one or more of the following:
one AI model used for all transmission bandwidths;
different AI models used for different transmission bandwidths; and
transmission bandwidth ranges applicable to different AI models.

It should be noted that, in a case where the number of the one or more AI models is one, the one AI model may be used for all transmission bandwidths.

Further, in a case where the number of first AI models is one, the one AI model may be the first AI model.

It should be noted that, in a case where the number of the one or more AI models is multiple, the multiple AI models may be different AI models, and the different AI models may be used for different transmission bandwidths.

Further, in a case where the first AI model includes at least two different AI models, the multiple AI models may include the first AI model.

It should be noted that, in a case where the first capability represents a transmission bandwidth configuration range corresponding to the one or more AI models, the first capability may indicate whether a same AI model is used for different transmission bandwidths; and/or the first capability may indicate transmission bandwidth ranges applicable to different AI models.

Exemplarily, the terminal device may indicate transmission bandwidths applicable to the supported AI models in a Bitmap manner, where each bit corresponds to one transmission bandwidth. For example, the transmission bandwidth may be 5 MHz, 10 MHz, 20 MHz, 100 MHz, and so on.

It should be understood that the terminal device may report, to the network device via a Bitmap, a transmission bandwidth configuration range corresponding to the one or more AI models, where each bit reported by the terminal device represents whether the terminal device uses the same AI model for different values of the transmission bandwidth configuration, that is, whether adjustment of the transmission bandwidth configuration requires the terminal device to perform AI model switching.

Exemplarily, the terminal device may report 1-bit information which may indicate whether the terminal device uses the same AI model for different transmission bandwidths. Here, 0 represents using different AI models and 1 represents using the same AI model; or 0 represents using the same AI model and 1 represents using different AI models. Based on the 1-bit information reported by the terminal device, the network device may determine whether adjustment of the transmission bandwidth configuration causes AI model switching on the terminal device side.

With this method, in a case where the first capability represents a transmission bandwidth configuration range corresponding to the one or more AI models, after the terminal device sends the first capability to the network device, the network device may subsequently indicate a transmission bandwidth configuration to the terminal device based on the first capability, so that AI model switching based on the transmission bandwidth configuration can be prevented from exceeding the capability of the terminal device (such as dynamic AI model switching), the frequency of AI model switching can be reduced, and performance of AI model-based uplink and downlink transmission can be ensured.

In some embodiments, the carrier frequency configuration range corresponding to the one or more AI models may include one or more of the following:
one AI model used for all carrier frequencies;
different AI models used for different carrier frequencies; and
carrier frequency ranges applicable to different AI models.

It should be noted that, in a case where the number of the one or more AI models is one, the one AI model may be used for all carrier frequencies.

Further, in a case where the number of first AI models is one, the one AI model may be the first AI model.

It should be noted that, in a case where the number of the one or more AI models is multiple, the multiple AI models may be different AI models, and the different AI models may be used for different carrier frequencies.

Further, in a case where the first AI model includes at least two different AI models, the multiple AI models may include the first AI model.

It should be noted that, in a case where the first capability represents a carrier frequency configuration range corresponding to the one or more AI models, the first capability may indicate whether a same AI model is used for different carrier frequencies; and/or the first capability may indicate carrier frequency ranges applicable to different AI models.

Exemplarily, the terminal device may indicate carrier frequencies applicable to the supported AI models in a Bitmap manner, where each bit corresponds to one carrier frequency. The carrier frequencies may be predefined FR1, FR2, FR3, and so on.

It should be understood that the terminal device may report, to the network device via a Bitmap, a carrier frequency configuration range corresponding to the one or more AI models, where each bit reported by the terminal device represents whether the terminal device uses the same AI model for different values of the carrier frequency configuration, that is, whether adjustment of the carrier frequency configuration requires the terminal device to perform AI model switching.

Exemplarily, the terminal device may report 1-bit information which may indicate whether the terminal device uses the same AI model for different carrier frequencies. Here, 0 represents using different AI models and 1 represents using the same AI model; or 0 represents using the same AI model and 1 represents using different AI models. Based on the 1-bit information reported by the terminal device, the network device may determine whether adjustment of the carrier frequency configuration causes AI model switching on the terminal device side.

With this method, in a case where the first capability represents a carrier frequency configuration range corresponding to the one or more AI models, after the terminal device sends the first capability to the network device, the network device may subsequently indicate a carrier frequency configuration to the terminal device based on the first capability, so that AI model switching based on the carrier frequency configuration can be prevented from exceeding the capability of the terminal device (such as dynamic AI model switching), the frequency of AI model switching can be reduced, and performance of AI model-based uplink and downlink transmission can be ensured.

In some embodiments, the subcarrier spacing configuration range corresponding to the one or more AI models may include one or more of the following:
one AI model used for all subcarrier spacings;
different AI models used for different subcarrier spacings; and
subcarrier spacing ranges applicable to different AI models.

It should be noted that, in a case where the number of the one or more AI models is one, the one AI model may be used for all subcarrier spacings.

Further, in a case where the number of first AI models is one, the one AI model may be the first AI model.

It should be noted that, in a case where the number of the one or more AI models is multiple, the multiple AI models may be different AI models, and the different AI models may be used for different subcarrier spacings.

Further, in a case where the first AI model includes at least two different AI models, the multiple AI models may include the first AI model.

It should be noted that, in a case where the first capability represents a subcarrier spacing configuration range corresponding to the one or more AI models, the first capability may indicate whether a same AI model is used for different subcarrier spacings; and/or the first capability may indicate subcarrier spacing ranges applicable to different AI models.

Exemplarily, the terminal device may indicate subcarrier spacings applicable to the supported AI models in a Bitmap manner, where each bit corresponds to one subcarrier spacing. The subcarrier spacing may be predefined 15 kHz, 30 kHz, 120 kHz, and so on.

It should be understood that the terminal device may report, to the network device via a Bitmap, a subcarrier spacing configuration range corresponding to the one or more AI models, where each bit reported by the terminal device represents whether the terminal device uses the same AI model for different values of the subcarrier spacing configuration, that is, whether adjustment of the subcarrier spacing configuration requires the terminal device to perform AI model switching.

Exemplarily, the terminal device may report 1-bit information which may indicate whether the terminal device uses the same AI model for different subcarrier spacings. Here, 0 represents using different AI models and 1 represents using the same AI model; or 0 represents using the same AI model and 1 represents using different AI models. Based on the 1-bit information reported by the terminal device, the network device may determine whether adjustment of the subcarrier spacing configuration causes AI model switching on the terminal device side.

With this method, in a case where the first capability represents a subcarrier spacing configuration range corresponding to the one or more AI models, after the terminal device sends the first capability to the network device, the network device may subsequently indicate a subcarrier spacing configuration to the terminal device based on the first capability, so that AI model switching based on the subcarrier spacing configuration can be prevented from exceeding the capability of the terminal device (such as dynamic AI model switching), the frequency of AI model switching can be reduced, and performance of AI model-based uplink and downlink transmission can be ensured.

In some embodiments, the TCI state configuration range corresponding to the one or more AI models includes one or more of the following:
one AI model is used for all TCI states;
different AI models are used for different TCI states;
one AI model is used for a single TCI state and multiple TCI states; and
different AI models are used for a single TCI state and multiple TCI states respectively.

It should be noted that, in a case where the number of the one or more AI models is one, the one AI model may be used for all TCI states; and/or the one AI model may be used for a single TCI state and multiple TCI states.

Exemplarily, one AI model may be used for all TCI states. In a case where the network device configures different TCI states, the terminal device does not need to perform model switching, and the TCI states may be indicated via DCI signaling in this case.

Exemplarily, one AI model may be used for a single TCI state and multiple TCI states. The terminal device may adopt the same AI model for signal transmission or signal reception regardless of whether the network device configures a single TCI state or multiple TCI states for an uplink signal or a downlink signal.

Further, in a case where the number of first AI models is one, the one AI model may be the first AI model.

It should be noted that, in a case where the number of the one or more AI models is multiple, the multiple AI models may be different AI models, and each AI model of the multiple AI models may correspond to a part of TCI states.

Exemplarily, different AI models are used for different TCI states. In a case where the network device configures different TCI states, the terminal device needs to perform AI model switching. To avoid dynamic AI model switching, the TCI states may be indicated via RRC signaling or MAC signaling in this case.

Exemplarily, different AI models are used for a single TCI state and multiple TCI states respectively. In a case where the network device configures a single TCI state for an uplink signal or a downlink signal, the terminal device may adopt one AI model for signal transmission or signal reception; in a case where the network device configures multiple TCI states for an uplink signal or a downlink signal, the terminal device may adopt another AI model for signal transmission or signal reception.

Further, in a case where the first AI model includes at least two different AI models, the multiple AI models may include the first AI model.

It should be noted that, in a case where the first capability represents a TCI state configuration range corresponding to the one or more AI models, the first capability (such as 1 bit) may indicate whether a same AI model is used for different TCI states; and/or the first capability (such as 1 bit) may indicate whether a same AI model is used for a single TCI state and multiple TCI states.

It should be understood that the terminal device may report, to the network device via a Bitmap, a TCI state configuration range corresponding to the one or more AI models, where each bit reported by the terminal device represents whether the terminal device uses the same AI model for different values of the TCI state configuration, that is, whether adjustment of the TCI state configuration requires the terminal device to perform AI model switching, where one bit corresponds to one TCI state configuration.

Exemplarily, the terminal device may report 2-bit information, where a first bit indicates whether different AI models are used for different TCI states, and a second bit indicates whether different AI models are used for a single TCI state and multiple TCI states respectively. Here, 0 represents using different AI models and 1 represents using the same AI model; or 0 represents using the same AI model and 1 represents using different AI models. Based on the 2-bit information reported by the terminal device, the network device may determine whether adjustment of a certain TCI state configuration causes AI model switching on the terminal device side.

With this method, in a case where the first capability represents a TCI state configuration range corresponding to the one or more AI models, after the terminal device sends the first capability to the network device, the network device may subsequently indicate a TCI state configuration to the terminal device based on the first capability, so that AI model switching based on the TCI state configuration can be prevented from exceeding the capability of the terminal device (such as dynamic AI model switching), the frequency of AI model switching can be reduced, and performance of AI model-based uplink and downlink transmission can be ensured.

In some embodiments, the cell ID configuration range corresponding to the one or more AI models may include one or more of the following:
one AI model used for all cell IDs;
different AI models used for different cell IDs; and
cell ID ranges applicable to different AI models.

Exemplarily, the cell ID configuration may be carried by a synchronization signal of a target cell.

It should be noted that, in a case where the number of the one or more AI models is one, the one AI model may be used for all cell IDs.

Further, in a case where the number of first AI models is one, the one AI model may be the first AI model.

It should be noted that, in a case where the number of the one or more AI models is multiple, the multiple AI models may be different AI models, and the different AI models may be used for different cell IDs.

Further, in a case where the first AI model includes at least two different AI models, the multiple AI models may include the first AI model.

It should be noted that, in a case where the first capability represents a cell ID configuration range corresponding to the one or more AI models, the first capability may use 1-bit information to indicate whether the terminal device uses the same AI model for data reception or data transmission when accessing cells with different cell IDs; and/or the first capability may indicate cell ID ranges respectively applicable to different AI models supported by the terminal device, i.e., each AI model may be used for cells corresponding to a group of cell IDs.

It should be understood that the terminal device may report, to the network device via a Bitmap, a cell ID configuration range corresponding to the one or more AI models, where each bit reported by the terminal device represents whether the terminal device uses the same AI model for different values of the cell ID configuration, that is, whether adjustment of the cell ID configuration requires the terminal device to perform AI model switching.

Exemplarily, the terminal device may report 1-bit information which may indicate whether the terminal device uses the same AI model for different cell IDs. Here, 0 represents using different AI models and 1 represents using the same AI model; or 0 represents using the same AI model and 1 represents using different AI models. Based on the 1-bit information reported by the terminal device, the network device may determine whether adjustment of the cell ID configuration causes AI model switching on the terminal device side.

With this method, in a case where the first capability represents a cell ID configuration range corresponding to the one or more AI models, after the terminal device sends the first capability to the network device, the network device may subsequently indicate a cell ID configuration to the terminal device based on the first capability, so that AI model switching based on the cell ID configuration can be prevented from exceeding the capability of the terminal device (such as dynamic AI model switching), the frequency of AI model switching can be reduced, and performance of AI model-based uplink and downlink transmission can be ensured.

Manner #D: In a case where the one or more AI models are used for CSI measurement, data transmission or data reception, the first capability may represent a MIMO transmission scheme configuration range corresponding to the one or more AI models.

In some embodiments, the one or more AI models may be used for data transmission or data reception. For example, for downlink transmission, the one or more AI models take downlink received signals as input, and output a data detection result, such as a source bit stream; for uplink transmission, the one or more AI models take data to be transmitted as input, and output transmission signals on respective antenna ports; for CSI measurement, the one or more AI models take downlink received signals as input, and output a CSI measurement result, such as RSRP or PMI bits.

In some embodiments, the MIMO transmission scheme configuration range corresponding to the one or more AI models may include one or more of the following:
one AI model is used for a single-TRP transmission scheme and a multi-TRP coordination scheme;
different AI models are used for a single-TRP transmission scheme and a multi-TRP coordination scheme respectively;
one AI model is used for an open-loop transmission scheme and a closed-loop transmission scheme; and
different AI models are used for an open-loop transmission scheme and a closed-loop transmission scheme respectively.

It should be noted that MIMO transmission schemes may include a single-TRP transmission scheme, a multi-TRP coordination scheme, an open-loop transmission scheme, a closed-loop transmission scheme, and may also include other transmission schemes, which are not limited in the embodiments of the present disclosure.

It should also be noted that a single-TRP transmission scheme and/or a multi-TRP coordination scheme may be determined according to the number of TCI states configured by the network device for a certain signal or channel; or dedicated signaling (such as RRC signaling) may be used to indicate whether a multi-TRP coordination scheme is adopted. The multi-TRP coordination scheme may include one or more of the following:
a scheme of Non-Coherent Joint Transmission (NC-JT) by multiple TRPs;
a scheme of Coherent Joint Transmission (CJT) by multiple TRPs; and
a scheme of Single Frequency Network (SFN) diversity transmission by multiple TRPs;
a scheme of Repetition transmission by multiple TRPs.

It should be understood that an open-loop transmission scheme may refer to a transmission scheme that does not require the terminal device to feed back precoding information (such as PMI), and a closed-loop transmission scheme may refer to a scheme that requires the terminal device to feed back precoding information.

It should be noted that, in a case where the number of the one or more AI models is one, the one AI model may be used for a single-TRP transmission scheme and a multi-TRP coordination scheme; and/or the one AI model may be used for an open-loop transmission scheme and a closed-loop transmission scheme.

Further, in a case where the number of first AI models is one, the one AI model may be the first AI model.

It should be noted that, in a case where the number of the one or more AI models is multiple, the multiple AI models may be different AI models, and the different AI models may be used for a single-TRP transmission scheme and a multi-TRP coordination scheme respectively; and/or the different AI models may be used for an open-loop transmission scheme and a closed-loop transmission scheme respectively.

Further, in a case where the first AI model includes at least two different AI models, the multiple AI models may include the first AI model.

It should be noted that, in a case where the first capability represents a MIMO transmission scheme configuration range corresponding to the one or more AI models, the first capability (such as 1 bit) may indicate whether a same AI model is used for a single-TRP transmission scheme and a multi-TRP coordination scheme; and/or the first capability (such as 1 bit) may indicate whether a same AI model is used for an open-loop transmission scheme and a closed-loop transmission scheme.

It should be understood that the terminal device may report, to the network device via a Bitmap, a MIMO transmission scheme configuration range corresponding to the one or more AI models, where each bit reported by the terminal device represents whether the terminal device uses the same AI model for different values of the MIMO transmission scheme configuration, that is, whether adjustment of the MIMO transmission scheme configuration requires the terminal device to perform AI model switching; where one bit corresponds to one MIMO transmission scheme configuration.

Exemplarily, the terminal device may report 2-bit information, where a first bit indicates whether a same AI model is used for a single-TRP transmission scheme and a multi-TRP coordination scheme, and a second bit indicates whether a same AI model is used for an open-loop transmission scheme and a closed-loop transmission scheme. Here, 0 represents using different AI models and 1 represents using the same AI model; or 0 represents using the same AI model and 1 represents using different AI models. Based on the 2-bit information reported by the terminal device, the network device may determine whether adjustment of a certain MIMO transmission scheme configuration causes AI model switching on the terminal device side.

With this method, in a case where the first capability represents a MIMO transmission scheme configuration range corresponding to the one or more AI models, after the terminal device sends the first capability to the network device, the network device may subsequently indicate a MIMO transmission scheme configuration to the terminal device based on the first capability, so that AI model switching based on the MIMO transmission scheme configuration can be prevented from exceeding the capability of the terminal device (such as dynamic AI model switching), the frequency of AI model switching can be reduced, and performance of AI model-based uplink and downlink transmission can be ensured.

In some embodiments, in a case where a parameter configuration is indicated via DCI signaling and/or MAC signaling, and a first AI model corresponding to a value of the parameter configuration is different from a second AI model corresponding to a first value, the terminal device does not perform communication with the network device based on the first AI model.

The first value is a parameter value before the terminal device receives the parameter configuration.

Exemplarily, in a case where a DMRS configuration indicates different DMRS sequence IDs and different DMRS sequence IDs correspond to different AI models, the terminal device does not adopt an AI model for downlink channel estimation or downlink data detection.

Exemplarily, in a case where a DMRS configuration indicates different numbers of DMRS symbols and different numbers of DMRS symbols correspond to different AI models, the terminal device does not adopt an AI model for downlink channel estimation or downlink data detection.

It should be noted that most terminal devices can support dynamic switching between an AI-based transmission mode and a non-AI transmission mode, but cannot support dynamic switching between different AI models (model deployment takes time). Therefore, in a case where a parameter configuration requires the terminal device to perform AI model switching beyond the capability of the terminal device, the terminal device may fall back from the AI-based transmission mode to a non-AI transmission mode, so as to perform downlink channel estimation or downlink data detection based on the non-AI transmission mode.

With this method, in a case where a parameter configuration is indicated via DCI signaling and/or MAC signaling, and a first AI model corresponding to a value of the parameter configuration is different from a second AI model, the terminal device may not perform communication with the network device based on the first AI model, so that AI model switching can be prevented from exceeding the capability of the terminal device (such as dynamic AI model switching), and uplink and downlink transmission performance can be ensured.

In some embodiments, in a case where a first AI model corresponding to a value of a parameter configuration includes at least two different AI models, the terminal device does not perform communication with the network device based on the first AI model, where the first value is a parameter value before the terminal device receives the parameter configuration.

With this method, in a case where a first AI model corresponding to a value of a parameter configuration includes at least two different AI models, the terminal device may not perform communication with the network device based on the first AI model, so that AI model switching can be prevented from exceeding the capability of the terminal device (such as dynamic AI model switching), and uplink and downlink transmission performance can be ensured.

In some embodiments, in a case where an AI model of the terminal device does not support all DMRS configurations, transmission between the terminal device and the network device is scheduled by fallback DCI (such as DCI format 0_0 or 1_0), and the fallback DCI does not include a DMRS configuration, the terminal device may not perform communication with the network device based on the AI model, for example, the terminal device does not adopt an AI model for downlink channel estimation or downlink data detection.

In other embodiments, in a case where an AI model of the terminal device does not support all DMRS configurations, transmission between the terminal device and the network device is scheduled by fallback DCI (such as DCI format 0_0 or 1_0), and a DMRS configuration corresponding to the fallback DCI is different from a DMRS configuration corresponding to non-fallback DCI, the terminal device may not perform communication with the network device based on the AI model.

Exemplarily, most terminal devices can support dynamic switching between an AI-based transmission mode and a non-AI transmission mode, but cannot support dynamic switching between different AI models (model deployment takes time). Therefore, in a case where an AI model of the terminal device does not support all DMRS configurations, transmission scheduled by fallback DCI adopts a default DMRS configuration (such as a default number of DMRS symbols and default DMRS ports), and the default DMRS configuration is different from a DMRS configuration previously indicated via non-fallback DCI, the terminal device may not adopt AI-based channel estimation or detection for the transmission scheduled by the fallback DCI, but adopt linear filtering or a linear receiver.

In some embodiments, in a case where different AI models are adopted for different transmission layer numbers or antenna port numbers, transmission between the terminal device and the network device is scheduled by fallback DCI (such as DCI format 0_0 or 1_0), and the fallback DCI does not include a transmission layer number configuration or an antenna port number configuration, the terminal device may not perform communication with the network device based on the AI model, for example, the terminal device does not adopt an AI model for data transmission or data reception.

In other embodiments, in a case where different AI models are adopted for different transmission layer numbers or antenna port numbers, transmission between the terminal device and the network device is scheduled by fallback DCI (such as DCI format 0_0 or 1_0), and a transmission layer number configuration or antenna port number configuration corresponding to the fallback DCI is different from a transmission layer number configuration or antenna port number configuration corresponding to non-fallback DCI, the terminal device may not perform communication with the network device based on the AI model.

Exemplarily, most terminal devices can support dynamic switching between an AI-based transmission mode and a non-AI transmission mode, but cannot support dynamic switching between different AI models (model deployment takes time). Therefore, in a case where different AI models are adopted for different transmission layer numbers, a default transmission layer number configuration is adopted for transmission scheduled by fallback DCI (such as one transmission layer), and the default transmission layer number configuration is different from a transmission layer number configuration previously indicated via non-fallback DCI, the terminal device may not adopt AI-based data transmission or reception for the transmission scheduled by the fallback DCI, but adopt non-AI data transmission or reception.

In some embodiments, in a case where different AI models are adopted for different carrier frequencies or subcarrier spacings, transmission between the terminal device and the network device is scheduled by fallback DCI (such as DCI format 0_0 or 1_0), and the fallback DCI does not include a carrier frequency configuration or a subcarrier spacing configuration, the terminal device may not perform communication with the network device based on the AI model, for example, the terminal device does not adopt an AI model for data transmission or data reception.

In other embodiments, in a case where different AI models are adopted for different carrier frequencies or subcarrier spacings, transmission between the terminal device and the network device is scheduled by fallback DCI (such as DCI format 0_0 or 1_0), and a carrier frequency configuration or subcarrier spacing configuration corresponding to the fallback DCI is different from a carrier frequency configuration or subcarrier spacing configuration corresponding to non-fallback DCI, the terminal device may not perform communication with the network device based on the AI model.

Exemplarily, most terminal devices can support dynamic switching between an AI-based transmission mode and a non-AI transmission mode, but cannot support dynamic switching between different AI models (model deployment takes time). Therefore, in a case where different AI models are adopted for different carrier frequencies, a default carrier frequency configuration (such as FR1) is adopted for transmission scheduled by fallback DCI, and the default carrier frequency configuration is different from a carrier frequency configuration previously indicated via non-fallback DCI, the terminal device may not adopt AI-based data transmission or reception for the transmission scheduled by the fallback DCI, but adopt non-AI data transmission or reception.

In some embodiments, in a case where different AI models are adopted for different MIMO transmission schemes, transmission between the terminal device and the network device is scheduled by fallback DCI (such as DCI format 0_0 or 1_0), the terminal device may not perform communication with the network device based on the AI model, for example, the terminal device does not adopt an AI model for data transmission or data reception.

In other embodiments, in a case where different AI models are adopted for different MIMO transmission schemes, transmission between the terminal device and the network device is scheduled by fallback DCI (such as DCI format 0_0 or 1_0), and a MIMO transmission scheme configuration corresponding to the fallback DCI is different from a MIMO transmission scheme configuration corresponding to non-fallback DCI, the terminal device may not perform communication with the network device based on the AI model.

Exemplarily, most terminal devices can support dynamic switching between an AI-based transmission mode and a non-AI transmission mode, but cannot support dynamic switching between different AI models (model deployment takes time). Therefore, in a case where different AI models are adopted for different MIMO transmission schemes, a default single-TRP transmission scheme is adopted for transmission scheduled by fallback DCI while transmission scheduled by non-fallback DCI is configured with a multi-TRP transmission scheme, the terminal device may not adopt AI-based data transmission or reception for the transmission scheduled by the fallback DCI, but adopt non-AI data transmission or reception.

With this method, the terminal device may not perform communication with the network device based on the AI model, so that AI model switching can be prevented from exceeding the capability of the terminal device (such as dynamic AI model switching), and uplink and downlink transmission performance can be ensured.

The communication method provided by the embodiments of the present disclosure is described in detail below with reference to specific application scenarios.

Embodiments of the present disclosure provide a method for reporting generalization capability based on an AI model. A terminal device may report a parameter configuration range corresponding to an adopted AI model (i.e., a first capability), so that when performing parameter configuration, a network device may take account of AI model switching of the terminal device caused by adjustment of the parameter configuration, and reasonably determine signaling and a range for parameter configuration. With this method, the network device may determine an appropriate parameter configuration according to the first capability reported by the terminal device, and avoid performance loss caused by AI model switching (such as dynamic AI model switching) performed by the terminal device beyond its own capability or frequent AI model switching, thereby ensuring performance of uplink or downlink transmission based on the AI model.

Technical solutions provided by the embodiments of the present disclosure are described below based on different types of parameter configurations with reference to Embodiment 1 to Embodiment 8.

### Embodiment 1: DMRS Configuration

1. The terminal device may report a generalization capability of an adopted AI model, where the generalization capability is represented by a DMRS configuration range corresponding to the AI model.

In embodiments of the present disclosure, the AI model may be used for downlink channel estimation or downlink data reception. For example, in a case where the AI model is used for downlink channel estimation, the AI model takes received signals and/or pilot sequences as input and outputs a channel estimation result. In a case where the AI model is used for downlink data reception, the AI model takes received signals and/or pilot sequences as input and outputs detected data bits.

Since training of the AI model relies on DMRS received signals as input, different DMRS configurations may correspond to different AI models, and different DMRS inputs also yield different AI model outputs.

In some embodiments, the terminal device may perform training on one AI model for all DMRS configurations that may be indicated by the network device (such as different DMRS sequences, different numbers of DMRS ports, etc.), so that the trained AI model has good generalization and may be used for any DMRS configuration indicated by the network device. However, such a training method requires a large dataset, involves complex model parameter adjustment, and it is difficult to ensure the final channel estimation accuracy or detection performance.

In other embodiments, the terminal device may adopt different AI models for training for different DMRS configurations (such as different DMRS sequences, different numbers of DMRS ports, different DMRS port sets, etc.), where each AI model is only trained for a part of the configurations. In this way, not only the training complexity is reduced, but also the final channel estimation performance and detection performance may be improved. The AI model obtained by this method has poor generalization. In a case where the network device adopts different DMRS configurations, the terminal device needs to perform corresponding AI model switching, so that an AI model corresponding to a current DMRS configuration can be used for channel estimation or detection.

That is to say, different terminal devices may adopt different training methods to obtain AI models with different generalization capabilities, and such generalization capabilities are unknown to the network device. Therefore, the terminal device may report the generalization capability to the network device, so that the network device may determine whether adjustment of a DMRS configuration causes AI model switching of the terminal device.

The DMRS configuration range corresponding to the AI model may include one or more of the following:
one AI model corresponds to all DMRS configurations;
different AI models correspond to different DMRS base sequences, for example, different DMRS sequence IDs;
different AI models correspond to different DMRS Code Division Multiplexing (CDM) groups, where a CDM multiplexing mode is adopted within one CDM group, and FDM/TDM multiplexing modes are adopted between different CDM groups;
different AI models correspond to different DMRS port multiplexing modes, where the multiplexing mode may be CDM/FDM/TDM;
different AI models correspond to different numbers of DMRS symbols; and
different AI models correspond to different DMRS port sets, for example, DMRS ports may be divided into several sets, different AI models correspond to different port sets, and the same AI model is used for ports within one port set.

For example, the terminal device may report a UE capability (the UE capability includes the first capability) to the network device, where the UE capability (such as 2 bits) is used to indicate one or more of the following: the AI model is per UE (i.e., all DMRS configurations share one AI model), per Sequence (i.e., one AI model corresponds to one DMRS base sequence, and different base sequences use different AI models), and per Port (i.e., one AI model corresponds to one DMRS port, and different DMRS ports use different AI models). For another example, the UE capability (such as 1 bit) is used to indicate whether all DMRS configurations share one AI model. Based on the UE capability reported by the terminal device, the network device may determine whether adjustment of a certain DMRS configuration (such as a DMRS Sequence ID or a DMRS Port Index) causes AI model switching on the terminal device side.

In some embodiments, the DMRS configuration range corresponding to the AI model may be reported in a Bitmap manner, where each bit reported by the terminal device indicates whether the terminal device uses the same AI model for different values of the DMRS configuration, that is, whether adjustment of the DMRS configuration requires the terminal device to perform AI model switching.

Exemplarily, the terminal device may report, to the network device via a Bitmap, whether the terminal device uses the same AI model for different values of the DMRS configuration. For example, the terminal device may report 3-bit information, where a first bit indicates whether a same AI model is used for different DMRS sequences, a second bit indicates whether a same AI model is used for different numbers of DMRS symbols, and a third bit indicates whether a same AI model is used for different DMRS port sets. Here, 0 represents using different models and 1 represents using the same model. Based on the information reported by the terminal device, the network device may determine whether adjustment of a certain DMRS configuration (such as a DMRS Sequence ID or a number of DMRS symbols) causes AI model switching on the terminal device side.

2. The network device receives the generalization capability of the AI model reported by the terminal device, where the generalization capability is represented by a DMRS configuration range corresponding to the AI model.

3. According to the generalization capability, the network device may indicate a DMRS configuration related to a first AI model to the terminal device.

In some embodiments, the network device may determine a DMRS configuration according to the DMRS configuration range corresponding to the AI model reported by the terminal device.

If the terminal device reports that the adopted AI model may be used for any DMRS configuration, the network device determines that AI model switching does not need to be considered in adjustment of the DMRS configuration.

If the terminal device reports that the adopted AI model may be used for different values of a certain DMRS configuration (such as a DMRS sequence ID), the network device does not need to consider AI model switching when determining the DMRS configuration.

If the terminal device reports that the adopted AI model is trained respectively for different values of a certain DMRS configuration (such as the number of DMRS symbols), the network device needs to consider possible AI model switching on the terminal device side when configuring the DMRS configuration. For example, the network device should not dynamically adjust the DMRS configuration to avoid dynamic AI model switching on the terminal device side beyond the capability range of the terminal device (it is default that no terminal device supports dynamic AI model switching because model deployment takes a certain period of time).

For at least one function (such as channel estimation or data detection), a parameter value indicated by a DMRS configuration cannot correspond to two different AI models; otherwise, the terminal device cannot determine which AI model to adopt to implement the function.

In some embodiments, in a case where a DMRS configuration is dynamically indicated via DCI signaling (such as indicating a DMRS port via DCI signaling), the DMRS configuration cannot cause dynamic AI model switching on the terminal device side, that is, a parameter value indicated by the DMRS configuration and an original parameter value (i.e., a first value) need to correspond to the same AI model. For example, in a case where the terminal device reports that different AI models correspond to different DMRS port sets, DMRS ports indicated by the network device via DCI signaling may be ports in a port set corresponding to the same AI model, and switching between port sets corresponding to different AI models may be performed via higher-layer signaling.

In other embodiments, in a case where a DMRS configuration is indicated via DCI signaling or MAC signaling, a parameter value indicated by the DMRS configuration and an original parameter value (i.e., a first value) correspond to the same AI model, that is, the DMRS configuration cannot cause AI model switching on the terminal device side based on the DCI signaling or MAC signaling. A DMRS configuration indicated by the network device via RRC signaling may correspond to different AI models.

4. The terminal device may receive the DMRS configuration indicated by the network device, and adopt a first AI model corresponding to the DMRS configuration to perform transmission with the network device.

In some embodiments, when a DMRS configuration is indicated via DCI signaling, the terminal device does not expect the parameter value indicated by the DMRS configuration to correspond to a different AI model from the original parameter value (i.e., the first value). That is, the DMRS configuration shall not trigger dynamic AI model switching at the terminal device.

In other embodiments, when a DMRS configuration is indicated via DCI signaling or MAC signaling, the terminal device does not expect the parameter value indicated by the DMRS configuration to correspond to a different AI model from the original parameter value (i.e., the first value). That is, the DMRS configuration shall not cause AI model switching at the terminal device based on the DCI signaling or MAC signaling. A DMRS configuration indicated by the network device via RRC signaling may correspond to different AI models.

In some embodiments, when a DMRS configuration is indicated via DCI signaling and the parameter value indicated by the DMRS configuration corresponds to a different AI model from the original parameter value (i.e., the first value), the terminal device may not perform transmission with the network device using an AI model. For example, the DMRS configuration indicates different DMRS sequence IDs, and different DMRS sequences correspond to different AI models. In other words, when the DMRS configuration requires the terminal device to perform AI model switching beyond the capability of the terminal device, the terminal device may fall back from an AI-based transmission scheme to a traditional non-AI-based transmission scheme for downlink channel estimation or downlink data detection. This is because most terminal devices can support dynamic switching between AI-based and non-AI-based transmission schemes, but cannot support dynamic switching between different AI models (as model deployment takes time).

In other embodiments, when a DMRS configuration is indicated via DCI signaling or MAC signaling and the parameter value indicated by the DMRS configuration corresponds to a different AI model from the original parameter value (i.e., the first value), the terminal device may not perform transmission with the network device using an AI model. For example, the DMRS configuration indicates different numbers of DMRS symbols, and different numbers of DMRS symbols correspond to different AI models; the terminal device may not use an AI model for downlink channel estimation or downlink data detection.

For at least one function (e.g., channel estimation or data detection), the parameter value indicated by a DMRS configuration shall not correspond to two different AI models; otherwise, the terminal device cannot determine which AI model to use to implement the function. For example, when different DMRS port sets correspond to different AI models for channel estimation, the network device shall not indicate ports from two DMRS port sets simultaneously.

In some embodiments, when the AI model of the terminal device does not support all DMRS configurations, transmission between the terminal device and the network device is scheduled by fallback DCI (e.g., DCI format 0_0 or 1_0), and the fallback DCI does not include a DMRS configuration, the terminal device may not perform transmission with the network device using an AI model. For example, the terminal device does not use an AI model for downlink channel estimation or downlink data detection.

In other embodiments, when the AI model of the terminal device does not support all DMRS configurations, transmission between the terminal device and the network device is scheduled by fallback DCI (e.g., DCI format 0_0 or 1_0), and the DMRS configuration corresponding to the fallback DCI is different from that corresponding to non-fallback DCI, the terminal device may not perform transmission with the network device using an AI model. For example, when transmission scheduled by fallback DCI uses a default DMRS configuration (e.g., default number of DMRS symbols and default DMRS ports) that differs from the DMRS configuration previously indicated via non-fallback DCI, the terminal device may not perform AI-based channel estimation or detection for such transmission, but use non-AI-based linear filtering or a linear receiver. This is because most terminal devices can support dynamic switching between AI-based channel estimation and conventional channel estimation, but cannot support dynamic switching between different AI models (as model deployment takes time).

### Embodiment 2: CSI-RS Configuration

1. The terminal device may report a generalization capability of an adopted AI model, where the generalization capability is represented by a CSI-RS configuration range corresponding to the AI model.

In embodiments of the present disclosure, the AI model may be used for downlink CSI measurement. For example, the AI model takes a downlink received signal and/or a CSI-RS sequence as input, and outputs a CSI measurement result such as PMI bits.

Since CSI measurement is performed based on CSI-RS, training of the AI model relies on received CSI-RS signals as input. Different CSI-RS configurations may correspond to different AI models, and different CSI-RS signal inputs also yield different AI model outputs.

In some embodiments, the terminal device may train a single AI model for all CSI-RS configurations that may be indicated by the network device (e.g., different CSI-RS base sequences, different numbers of CSI-RS symbols, CSI-RS port counts, etc.), such that the trained AI model has strong generalization and can be applied to any CSI-RS configuration indicated by the network device. However, such a training method requires a large dataset, involves complex model parameter tuning, and makes it difficult to guarantee CSI feedback accuracy.

In other embodiments, the terminal device may train different AI models for different CSI-RS configurations (e.g., different CSI-RS sequences, different CSI-RS port counts, etc.), with each AI model targeting only a subset of configurations. This not only reduces training complexity but also improves final CSI feedback performance. The AI model obtained by this method has weak generalization. When the network device adopts a different CSI-RS configuration, the terminal device needs to perform corresponding AI model switching to use the AI model corresponding to the current CSI-RS configuration for CSI measurement.

That is, different terminal devices may adopt different training methods to obtain AI models with different generalization capabilities, which are unknown to the network device. Therefore, the terminal device may report its generalization capability to the network device, so that the network device can determine whether adjustment of the CSI-RS configuration will trigger AI model switching at the terminal device.

The CSI-RS configuration range corresponding to an AI model may include one or more of the following:
ane AI model corresponds to all CSI-RS configurations;
different AI models correspond to different CSI-RS base sequences, e.g., different CSI-RS base sequence IDs;
different AI models correspond to different sets of CSI-RS port numbers, e.g., one AI model corresponds to {2, 4, 8} CSI-RS ports, one corresponds to {12, 16, 20, 24} CSI-RS ports, and one corresponds to {32, 64, 128} CSI-RS ports; alternatively, each AI model may correspond to only one port number, with different port numbers trained using different AI models;
different AI models correspond to different CSI-RS port multiplexing modes, where the multiplexing mode may be CDM/FDM/TDM;
different AI models correspond to different numbers of CSI-RS symbols, where the number of symbols may be configured via RRC signaling; and
different AI models correspond to different CSI-RS transmission bandwidths, e.g., one AI model is used when the CSI-RS transmission bandwidth is smaller than a certain value (i.e., a second threshold), and another AI model is used when the CSI-RS transmission bandwidth is larger than the threshold.

For example, the terminal device may report a UE capability (e.g., using 2 bits) to the network device, indicating one or more of the following: per UE (one AI model shared by all CSI-RS configurations), per Sequence (one AI model per CSI-RS base sequence, different base sequences using different AI models), and per Port Number (one AI model per CSI-RS port count, different port counts using different AI models). Based on the information reported by the terminal device, the network device can determine whether adjustment of a CSI-RS configuration (e.g., CSI-RS sequence ID or CSI-RS port number) will trigger AI model switching at the terminal device.

In some embodiments, the terminal device may report to the network device via a bitmap whether the same AI model is used for different values of CSI-RS configurations, with one bit corresponding to one CSI-RS configuration. For example, the terminal device may report 3-bit information: a first bit indicating whether the same AI model is used for different CSI-RS base sequences, a second bit for indicating different CSI-RS port numbers, and a third bit for indicating different CSI-RS transmission bandwidths. Here, 1 indicates using different AI models and 0 indicates using the same AI model. Based on the reported information, the network device can determine whether adjustment of a CSI-RS configuration will trigger AI model switching at the terminal device.

2. The network device receives the generalization capability of the AI model reported by the terminal device, where the generalization capability is represented by the CSI-RS configuration range corresponding to the AI model.

3. Based on the generalization capability, the network device may indicate to the terminal device a CSI-RS configuration associated with the first AI model.

The network device may determine the CSI-RS configuration according to the CSI-RS configuration range corresponding to the AI model reported by the terminal device.

When the terminal device reports that its AI model supports any CSI-RS configuration, the network device may determine that adjustment of the CSI-RS configuration does not require consideration of AI model switching.

When the terminal device reports that its AI model supports different values of a certain CSI-RS configuration (e.g., CSI-RS port count), the network device may determine that configuration without considering AI model switching.

When the terminal device reports that its AI model is trained separately for different values of a certain CSI-RS configuration (e.g., number of CSI-RS symbols), the network device needs to consider potential AI model switching at the terminal device when indicating such configuration. For example, the network device should not dynamically adjust the CSI-RS configuration to avoid dynamic AI model switching beyond the capability of the terminal device.

The parameter value indicated by a CSI-RS configuration shall not correspond to two different AI models for CSI feedback; otherwise, the terminal device cannot determine which AI model to use.

In some embodiments, when a CSI-RS configuration is dynamically indicated via DCI signaling (e.g., aperiodic CSI reporting is triggered via DCI signaling, with different CSI reports corresponding to different CSI-RS resource configurations determined by DCI), the CSI-RS configuration shall not trigger dynamic AI model switching at the terminal device. That is, the parameter value indicated by the CSI-RS configuration and the original parameter value (i.e., the first value) shall correspond to the same AI model for CSI feedback. The above method also applies when the CSI-RS configuration is indicated via MAC CE signaling.

In other embodiments, the network device may receive an AI model switching capability (i.e., second capability) reported by the terminal device, which indicates whether the terminal device supports AI model switching based on DCI signaling, MAC signaling, or RRC signaling. When the terminal device does not support AI model switching based on certain signaling, the value of the CSI-RS configuration indicated by the network device via that signaling shall not trigger AI model switching. That is, the parameter value indicated by the CSI-RS configuration and the original parameter value (i.e., the first value) shall correspond to the same AI model.

4. The terminal device may receive the CSI-RS configuration indicated by the network device, and perform transmission with the network device using the first AI model corresponding to the CSI-RS configuration.

In some embodiments, when a CSI-RS configuration is indicated via DCI signaling, the terminal device does not expect the parameter value indicated by the CSI-RS configuration to correspond to a different AI model from the original parameter value (i.e., the first value). That is, the CSI-RS configuration shall not trigger dynamic AI model switching at the terminal device. For example, when the terminal device reports that different AI models are used for different CSI-RS port numbers, the network device shall not dynamically adjust the CSI-RS port number for CSI reporting when triggering aperiodic CSI reporting via DCI (e.g., using different CSI-RS port counts for multiple CSI reports in the same trigger). The above method also applies when CSI report content configuration (CSI-RS configuration) is indicated via MAC CE signaling.

In some embodiments, the parameter value indicated by a CSI-RS configuration shall not correspond to two different AI models, otherwise, the terminal device cannot determine which AI model to use for CSI feedback. For example, if the terminal device reports that different AI models are used for different CSI-RS port numbers, when the network device activates semi-persistent CSI reporting via MAC CE signaling, multiple CSI-RS resources for the same CSI report measurement shall not correspond to different AI models (e.g., one CSI-RS resource has bandwidth above a threshold (i.e., first threshold) and another has bandwidth below the threshold).

In other embodiments, the terminal device may report an AI model switching capability (i.e., second capability) to the network device, indicating whether it supports AI model switching based on DCI signaling, MAC signaling, or RRC signaling. The terminal device may report support for one or more of the above switching types; e.g., it may report support for AI model switching based on RRC signaling but not support for that based on DCI or MAC signaling.

The terminal device does not expect AI model switching caused by a CSI-RS configuration to exceed its reported AI model switching capability. For example, when the terminal device does not support DCI-based AI model switching and the CSI-RS configuration is indicated via DCI signaling, the CSI-RS configuration shall not trigger AI model switching at the terminal device. As another example, when the terminal device supports RRC-based AI model switching but not DCI- or MAC-based switching, CSI-RS configurations indicated by RRC signaling may correspond to different AI models, while those indicated by DCI or MAC signaling shall not trigger AI model switching.

### Embodiment 3: CSI report content configuration

1. The terminal device reports a generalization capability of an adopted AI model, where the generalization capability is represented by a CSI report content configuration range corresponding to the AI model.

In embodiments of the present disclosure, the AI model may be used for downlink CSI measurement. For example, the AI model takes a downlink received signal as input and outputs a CSI measurement result such as RSRP or PMI bits.

When the CSI report content output by the AI model differs, the AI model used may also differ, since training data of the AI model relies on CSI report content as output. The CSI report content configuration may include: RSRP reporting and CSI reporting; CSI compression and CSI prediction; or CSI compression, CSI prediction, as well as CSI prediction and compression.

In some embodiments, the terminal device may train a single AI model for all CSI report content configurations that may be indicated by the network device, such that the trained AI model has strong generalization and can be applied to any CSI report content configuration indicated by the network device. However, such a training method requires a large dataset, involves complex model parameter tuning, and makes it difficult to guarantee CSI feedback accuracy.

In other embodiments, the terminal device may train different AI models for different CSI report content configurations (e.g., RSRP reporting, PMI reporting, etc.), with each AI model targeting only one type of CSI report content. This not only reduces training complexity but also improves final CSI feedback performance. The AI model obtained by this method has weak generalization. When the network device adopts a different CSI report content configuration, the terminal device needs to perform corresponding AI model switching to use the AI model corresponding to the CSI report content configuration for CSI feedback.

That is, different terminal devices may adopt different training methods to obtain AI models with different generalization capabilities. The terminal device may report its generalization capability to the network device, so that the network device can determine whether adjustment of the CSI report content configuration will trigger AI model switching at the terminal device.

The CSI report content configuration range corresponding to an AI model may include one or more of the following:
one AI model is used for both RSRP reporting and CSI reporting;
different AI models are used for RSRP reporting and CSI reporting respectively;
one AI model is used for both CSI compression and CSI prediction;
different AI models are used for CSI compression and CSI prediction respectively;
one AI model is used for CSI compression, CSI prediction, as well as CSI prediction and compression; and
different AI models are used respectively for CSI compression, CSI prediction, as well as CSI prediction and compression.

For example, the terminal device may report a UE capability (e.g., using 1 bit) to the network device, indicating whether a same AI model is used for CSI compression and CSI prediction in CSI reporting.

In some embodiments, the terminal device may report to the network device via a bitmap whether the same AI model is used for different values of the CSI report content configuration. One bit indicates whether different AI models are used for RSRP reporting and CSI reporting, and another bit indicates whether different AI models are used for CSI compression and CSI prediction; e.g., 0 indicates using the same AI model and 1 indicates using different AI models. Based on the reported information, the network device can determine whether adjustment of the CSI report content configuration will trigger AI model switching at the terminal device.

2. The network device receives the generalization capability of the AI model reported by the terminal device, where the generalization capability is represented by the CSI report content configuration range corresponding to the AI model.

3. Based on the generalization capability, the network device may indicate to the terminal device a CSI report content configuration associated with the first AI model.

The network device may determine the CSI report content configuration according to the CSI report content configuration range corresponding to the AI model reported by the terminal device.

When the terminal device reports that its AI model supports all CSI report content configurations, the network device may determine a CSI report content configuration without considering AI model switching.

When the terminal device reports that its AI model is trained for a specific CSI report content configuration (e.g., CSI prediction or CSI compression), the network device needs to consider potential AI model switching at the terminal device when indicating such a configuration. For example, the network device should not dynamically adjust the CSI report content configuration to avoid dynamic AI model switching beyond the capability of the terminal device.

The parameter value indicated by a CSI report content configuration shall not correspond to two different AI models for CSI feedback, otherwise, the terminal device cannot determine which AI model to use.

In some embodiments, when a CSI report content configuration is dynamically indicated via DCI signaling (e.g., aperiodic CSI reporting is triggered via DCI signaling, with different CSI reports corresponding to different CSI report contents determined by DCI), the CSI report content configuration shall not trigger dynamic AI model switching at the terminal device. That is, CSI report contents triggered via DCI signaling shall correspond to the same AI model for CSI feedback. The above method also applies when the CSI report content configuration is indicated via MAC CE signaling.

4. The terminal device receives the CSI report content configuration indicated by the network device, and performs transmission with the network device using the first AI model corresponding to the CSI report content configuration.

In some embodiments, when a CSI report content configuration is indicated via DCI signaling, the terminal device does not expect the parameter value indicated by the CSI report content configuration to correspond to a different AI model from the original parameter value (i.e., the first value). That is, the CSI report content configuration shall not trigger dynamic AI model switching at the terminal device. For example, when the terminal device reports that different AI models are used for different CSI report content configurations, the network device shall not dynamically adjust the CSI report content configuration for CSI reporting when triggering aperiodic CSI reporting via DCI (e.g., using different CSI report content configurations for multiple CSI reports in the same trigger). The above method also applies when the CSI report content configuration is indicated via MAC CE signaling.

In some embodiments, the parameter value indicated by one CSI report content configuration shall not correspond to two different AI models for the same CSI feedback. For example, if the terminal device reports that different AI models are used for different values of CSI report content configuration, when the network device activates semi-persistent CSI reporting via MAC CE signaling, the parameter value indicated by the same CSI report content configuration shall not correspond to different AI models.

In other embodiments, the terminal device may report an AI model switching capability (i.e., a second capability) to the network device, indicating whether it supports AI model switching based on DCI signaling, MAC signaling, or RRC signaling. Meanwhile, the terminal device does not expect AI model switching caused by CSI report content configuration to exceed its reported AI model switching capability. For example, when different values of CSI report content configuration correspond to different AI models and the terminal device does not support DCI-based AI model switching, the network device shall not adjust the CSI report content configuration for the terminal device via DCI signaling.

### Embodiment 4: MCS Configuration or Transport Block Size Configuration

1. The terminal device may report a generalization capability of an adopted AI model, where the generalization capability is represented by a MCS configuration range or a transport block size configuration range corresponding to the AI model.

In embodiments of the present disclosure, the AI model may be used for data transmission or data reception. Data reception may include channel decoding and/or demodulation, and data transmission may include channel coding and/or modulation. For example, for downlink transmission, the AI model takes a downlink received signal as input and outputs a data detection result such as a source bit stream; for uplink transmission, the AI model takes data to be transmitted as input and outputs a modulated and coded transmission signal.

Training of the AI model may rely on MCS or transport block size of uplink and downlink data. That is, the terminal device may train different AI models under different MCS configurations or transport block size configurations.

In some embodiments, the terminal device may train a unified AI model for all MCS configurations or transport block size configurations supported by the protocol. The AI model may have strong generalization and can be applied to any MCS configuration or transport block size configuration indicated by the network device. However, such a training method requires a large dataset, involves complex model parameter tuning, and makes it difficult to guarantee corresponding transmission performance.

In other embodiments, the terminal device may train different AI models for different MCS configurations or transport block size configurations, with each AI model targeting only a subset of configurations. This not only reduces training complexity but also improves final data transmission performance. The AI model obtained by this method has weak generalization. When the network device adopts a different MCS configuration or transport block size configuration, the terminal device needs to perform corresponding AI model switching.

That is, different terminal devices may adopt different training methods to obtain AI models with different generalization capabilities. The terminal device may report such generalization capability to the network device, so that the network device can determine whether adjustment of the MCS configuration or transport block size configuration will trigger AI model switching at the terminal device.

In some embodiments, the MCS configuration range corresponding to an AI model may include one or more of the following:
one AI model used for all MCS values, e.g., the same AI model is used at the terminal device for all MCS values supported by the protocol, where each MCS corresponds to one modulation scheme and one code rate;
different AI models used for different MCS values, e.g., different AI models are used at the terminal device for different MCS values supported by the protocol;
MCS index ranges applicable to different AI models, e.g., MCS indices 0-12 correspond to one AI model, and 12-27 correspond to another;
one AI model used for all modulation schemes, e.g., a same AI model is used for QPSK, 16QAM, and 64QAM;
different AI models used for different modulation schemes, e.g., different AI models are used for QPSK, 16QAM, 64QAM, and 256QAM;
modulation scheme sets applicable to different AI models, e.g., one AI model supports data transmission and reception with QPSK and 16QAM, and another supports that with 64QAM and 256QAM;
one AI model used for all code rate ranges, e.g., a same AI model is used for all code rates supported by the protocol; and
code rate ranges applicable to different AI models, e.g., one AI model is used when the code rate is less than 1/3, and another is used when the code rate is greater than 1/3.

For example, the terminal device may report a UE capability (e.g., using 2 bits) to the network device, indicating one or more of the following: per UE (one AI model is shared by all MCS configurations), per Modulation Order (one AI model corresponds to one modulation scheme, and different AI models are used for different schemes), per MCS (one AI model corresponds to one MCS value, and different AI models are used for different MCS values). Based on the reported information, the network device can determine whether adjustment of the MCS configuration will trigger AI model switching at the terminal device.

For example, UE capability may also be indicated using one or more of the following:
1-bit information indicating whether a same AI model is used for different MCS values;
1-bit information indicating whether a same AI model is used for different modulation schemes;
1-bit information indicating whether a same AI model is used for different code rates;
N1-bit information indicating MCS ranges supported by different AI models respectively;
N2-bit information indicating modulation schemes supported by different AI models respectively; and
N3-bit information indicating code rate ranges supported by different AI models respectively.

In some embodiments, the transport block size configuration range corresponding to an AI model may include one or more of the following:
one AI model used for all transport block sizes;
different AI models used for different transport block sizes; and
transport block size ranges applicable to different AI models.

For example, the terminal device may use 1-bit information to indicate whether a same AI model is used for different transport block sizes for data transmission or reception, where 1 indicates using the same AI model for different sizes and 0 indicates using different AI models for transport block sizes above and below a certain threshold (i.e., fourth threshold).

In some embodiments, the terminal device may report to the network device via a bitmap whether a same AI model is used for different values of the MCS configuration or transport block size configuration. For example, the terminal device may report 3-bit information: a first bit indicating whether a same AI model is used for different modulation schemes, a second bit for indicating different code rate ranges, and a third bit for indicating different transport block size ranges. Here, 1 indicates using different AI models and 0 indicates using the same AI model. Based on the reported information, the network device can determine whether adjustment of the MCS configuration or transport block size configuration will trigger AI model switching at the terminal device.

2. The network device may receive the generalization capability of the AI model reported by the terminal device, where the generalization capability is represented by the MCS configuration range or transport block size configuration range corresponding to the AI model.

3. Based on the generalization capability, the network device may indicate to the terminal device an MCS configuration or transport block size configuration associated with the first AI model.

The network device may determine the MCS configuration according to the MCS configuration range corresponding to the AI model reported by the terminal device, and determine the transport block size configuration according to the transport block size configuration range corresponding to the AI model.

When the terminal device reports that its AI model supports any MCS configuration or transport block size configuration, the network device may adjust the MCS or transport block size without considering AI model switching.

When the terminal device reports that its AI model supports different modulation schemes, the network device needs to consider AI model switching when adjusting the modulation scheme.

When the terminal device reports that its AI model supports all code rate ranges, the network device may adjust the transmission code rate without considering AI model switching.

When the terminal device reports that its AI model is trained separately for different values of the MCS configuration or transport block size configuration, the network device needs to consider potential AI model switching at the terminal device when indicating such a configuration. For example, if AI models are trained separately for different modulation schemes, the network device should not dynamically adjust the modulation scheme (but may still dynamically adjust the code rate and MCS) to avoid dynamic AI model switching beyond the capability of the terminal device.

The parameter value indicated by an MCS configuration or transport block size configuration shall not correspond to two different AI models for data detection, otherwise, the terminal device cannot determine which AI model to use.

In some embodiments, when an MCS configuration or transport block size configuration is dynamically indicated via DCI signaling, the configuration shall not trigger dynamic AI model switching at the terminal device. That is, the parameter value (e.g., MCS index) indicated by the configuration and the original parameter value (i.e., the first value) shall correspond to the same AI model for data detection. This method also applies when the MCS configuration or transport block size configuration is indicated via MAC CE signaling.

In other embodiments, the network device may receive an AI model switching capability (i.e., a second capability) reported by the terminal device, indicating whether the terminal device supports AI model switching based on DCI signaling, MAC signaling, or RRC signaling. If the terminal device does not support AI model switching based on certain signaling, when the network device indicates an MCS configuration or transport block size configuration via that signaling, the parameter value indicated by the configuration and the original parameter value (i.e., the first value) shall correspond to the same AI model. That is, the value of the MCS configuration or transport block size configuration shall not trigger AI model switching at the terminal device.

4. The terminal device may receive the MCS configuration or transport block size configuration indicated by the network device, and perform transmission with the network device using the first AI model corresponding to the MCS configuration or transport block size configuration.

In some embodiments, when an MCS configuration or a transport block size configuration is indicated via DCI signaling, the terminal device does not expect the MCS indicated by the MCS configuration to correspond to a different AI model from the original MCS, namely the first value, or the terminal device does not expect the transport block size indicated by the transport block size configuration to correspond to a different AI model from the original transport block size, namely the first value. That is, the MCS configuration or the transport block size configuration shall not cause dynamic AI model switching at the terminal device. For example, when the terminal device reports that different AI models are used for different modulation schemes, if the network device indicates an MCS via DCI signaling, dynamic switching may be performed among MCS values under the same modulation scheme, i.e., different code rates, but not among MCS values of different modulation schemes. This method may also be applied to cases where the MCS configuration or the transport block size configuration is indicated via MAC CE signaling.

In some embodiments, for at least a terminal without multi-model capability, parameter values indicated by an MCS configuration or a transport block size configuration shall not correspond to two different AI models, otherwise, the terminal device cannot use two AI models simultaneously for data detection. For example, when the terminal device reports that different AI models are uses for different code rate ranges, e.g., greater than 1/3 and less than 1/3, if the network device indicates MCS values for two codewords via DCI signaling, the MCS values of the two codewords shall not correspond to code rate ranges mapped to different AI models, e.g., one code rate greater than 1/3 and one code rate less than 1/3.

In some embodiments, the terminal device may report an AI model switching capability, namely the second capability, to the network device, where the capability is configured to indicate whether the terminal device supports AI model switching based on DCI signaling, MAC signaling, or RRC signaling. The terminal device does not expect AI model switching caused by an MCS configuration or a transport block size configuration to exceed the reported AI model switching capability. For example, if the terminal device does not support AI model switching based on DCI signaling and a transport block size configuration is indicated via DCI signaling, the transport block size configuration shall not trigger AI model switching at the terminal device; for instance, switching may be performed only within a transport block size range corresponding to the same AI model.

### Embodiment 5: Antenna Port Number Configuration or Transmission Layer Number Configuration

1. The terminal device reports a generalization capability of an adopted AI model, where the generalization capability is represented by an antenna port number configuration range or transmission layer number configuration range corresponding to the AI model.

In embodiments of the present disclosure, the AI model is used for data transmission or data reception. For example, for downlink transmission, the AI model takes a downlink received signal as input and outputs a data detection result such as a source bit stream; and for uplink transmission, the AI model takes data to be transmitted as input and outputs transmission signals on respective antenna ports.

Since data transmission and reception are performed based on antenna ports and transmission layers, training of the AI model relies on the number of antenna ports and the number of transmission layers, and an antenna port number configuration and a transmission layer number configuration have impact on the input of AI model training data. That is, under different antenna port number configurations or different transmission layer number configurations, the terminal device may train different AI models for transmission or reception.

In some embodiments, the terminal device may train a unified AI model for different antenna port number configurations or transmission layer number configurations, where the AI model has favorable generalization and can be applied to different antenna port number configurations or transmission layer number configurations indicated by the network device. However, such a training method requires a large dataset, involves complex model parameter adjustment, and makes it difficult to guarantee corresponding transmission performance.

In other embodiments, the terminal device may train different AI models for different antenna port number configurations or transmission layer number configurations, with each AI model targeting only a subset of values. This not only reduces training complexity but also improves final data transmission performance. The AI model obtained by this method has poor generalization capability. When the network device adopts a different antenna port number configuration or transmission layer number configuration, the terminal device needs to perform corresponding AI model switching.

That is, different terminal devices may adopt different training methods to obtain AI models with different generalization capabilities. In this case, the terminal device may report such generalization capability to the network device, so that the network device can determine whether adjustment of an antenna port number configuration or a transmission layer number configuration will trigger AI model switching at the terminal device.

In some embodiments, the antenna port number configuration range corresponding to an AI model may include one or more of the following:
one AI model used for different numbers of antenna ports;
different AI models used for different numbers of antenna ports; and
antenna port number ranges applicable to different AI models.

For example, UE capability may be configured to indicate whether a same AI model is used for different antenna port number configurations, or to indicate antenna port number ranges applicable to different AI models. For instance, a bitmap is used to indicate antenna port numbers applicable to an AI model supported by each terminal device, with each bit corresponding to one antenna port number. For example, 11110000 indicates that the AI model is applicable to antenna port counts 2, 4, 8, and 12.

In some embodiments, the transmission layer number configuration range corresponding to an AI model may include one or more of the following:
one AI model used for all transmission layer numbers;
different AI models used for different transmission layer numbers; and
transmission layer number ranges applicable to different AI models.

For example, the UE capability may be configured to indicate whether a same AI model is used for different transmission layer numbers, or to indicate transmission layer number ranges applicable to different AI models. For instance, a bitmap is used to indicate transmission layer numbers applicable to an AI model supported by each terminal device, with each bit corresponding to one transmission layer number. For example, 1100 indicates that the AI model is applicable to transmission layer counts 1 and 2.

In some embodiments, the terminal device may report to the network device via a bitmap whether the same AI model is used for different antenna port number configurations or transmission layer number configurations. For example, the terminal device may report 2-bit information, where a first bit indicates whether a same AI model is used for different antenna port number configurations, and a second bit indicates whether a same AI model is used for different transmission layer number configurations. Here, 1 indicates using different AI models and 0 indicates using the same AI model, and vice versa. Based on the above information reported by the terminal device, the network device can determine whether adjustment of an antenna port number configuration or a transmission layer number configuration will trigger AI model switching at the terminal device.

The network device may receive the generalization capability of the AI model reported by the terminal device, where the generalization capability is represented by the antenna port number configuration range or transmission layer number configuration range corresponding to the AI model.

Based on the generalization capability, the network device may indicate to the terminal device an antenna port number configuration or a transmission layer number configuration associated with the first AI model.

The network device may determine an antenna port number configuration according to the antenna port number configuration range corresponding to the AI model reported by the terminal device, and determine a transmission layer number configuration according to the transmission layer number configuration range corresponding to the AI model reported by the terminal device.

When the terminal device reports that its AI model is applicable to any antenna port number configuration, the network device does not need to consider AI model switching when determining the antenna port number configuration.

When the terminal device reports that its AI model is applicable to any transmission layer number configuration, the network device does not need to consider AI model switching when determining the transmission layer number configuration.

When the terminal device reports that its AI model is trained separately for different values of an antenna port number configuration or a transmission layer number configuration, the network device needs to consider potential AI model switching at the terminal device caused by the antenna port number configuration or the transmission layer number configuration when indicating such configuration. For example, if AI models are trained separately for different antenna port number configurations, the network device should not dynamically adjust the antenna port number configuration to avoid dynamic AI model switching at the terminal device beyond the capability of the terminal device.

A transmission layer number configuration or an antenna port number configuration indicated by the network device shall not correspond to two different AI models for data detection, otherwise, the terminal device cannot determine which AI model to use.

In some embodiments, when an antenna port number configuration or a transmission layer number configuration is dynamically indicated via DCI signaling, the antenna port number configuration or the transmission layer number configuration shall not trigger dynamic AI model switching at the terminal device. That is, parameter value indicated by the antenna port number configuration or the transmission layer number configuration, e.g., the number of antenna ports, and original parameter value, namely the first value, shall correspond to the same AI model. The above method may also be applied to cases where the antenna port number configuration or the transmission layer number configuration is indicated via MAC CE signaling.

In some embodiments, the network device may receive an AI model switching capability, namely the second capability, reported by the terminal device, where the capability indicates whether the terminal device supports AI model switching based on DCI signaling, MAC signaling, or RRC signaling. If the terminal device does not support AI model switching based on certain signaling, when the network device indicates an antenna port number configuration or a transmission layer number configuration via that signaling, the parameter value indicated by the antenna port number configuration or the transmission layer number configuration and original parameter value, namely the first value, shall correspond to the same AI model. That is, the value of the antenna port number configuration or the transmission layer number configuration shall not trigger AI model switching at the terminal device.

The terminal device may receive the antenna port number configuration or the transmission layer number configuration indicated by the network device, and perform transmission with the network device using the first AI model corresponding to the antenna port number configuration or the transmission layer number configuration.

In some embodiments, when an antenna port number configuration or a transmission layer number configuration is indicated via DCI signaling, the terminal device does not expect the parameter value indicated by the antenna port number configuration and the original parameter value, namely the first values, to correspond to different AI models, or the terminal device does not expect the parameter value indicated by the transmission layer number configuration and the original parameter value, namely the first value, to correspond to different AI models. That is, the antenna port number configuration or the transmission layer number configuration shall not trigger dynamic AI model switching at the terminal device. For example, when the terminal device reports that different AI models are used for different antenna port number configurations, if the network device indicates an antenna port number configuration via DCI signaling, dynamic AI model switching shall not be performed between different antenna port number configurations. The above method may also be applied to cases where the antenna port number configuration or the transmission layer number configuration is indicated via MAC CE signaling.

In some embodiments, for at least a terminal device without multi-model capability, parameter values indicated by an antenna port number configuration or a transmission layer number configuration shall not correspond to two different AI models, otherwise, the terminal device cannot use two AI models simultaneously for data detection. For example, when different AI models are used for different antenna port number configurations, if the terminal device is scheduled via multiple DCI signals simultaneously to perform uplink or downlink transmission, the multiple DCI signals shall not indicate two different antenna port number configurations at the same time. When different AI models are used for different transmission layer number configurations, if the terminal device is scheduled via multiple DCI signals simultaneously to perform uplink or downlink transmission, the multiple DCI signals shall not indicate two different transmission layer number configurations at the same time.

In some embodiments, the terminal device may report an AI model switching capability, namely the second capability, to the network device, where the capability is configured to indicate whether the terminal device supports AI model switching based on DCI signaling, MAC signaling, or RRC signaling. The terminal device does not expect AI model switching caused by adjustment of a transmission layer number configuration or an antenna port number configuration to exceed its reported AI model switching capability. For example, if the terminal device does not support AI model switching based on DCI signaling and a transmission layer number configuration is indicated via DCI signaling, the transmission layer number configuration shall not trigger AI model switching at the terminal device; for instance, switching may be performed only within a transmission layer number range corresponding to the same AI model.

In some embodiments, when different AI models are used for different transmission layer number configurations or antenna port number configurations, transmission between the terminal device and the network device is scheduled by fallback DCI, e.g., DCI format 0_0 or 1_0, and the fallback DCI does not include a transmission layer number configuration or an antenna port number configuration, the terminal device may not perform transmission with the network device using an AI model. For example, the terminal device does not use an AI model for data transmission or reception. This is because most terminal devices can support dynamic switching between AI-based transmission/reception and non-AI-based transmission/reception, but cannot support dynamic switching between different AI models as model deployment takes time.

In some embodiments, when different AI models are used for different transmission layer number configurations or antenna port number configurations, transmission between the terminal device and the network device is scheduled by fallback DCI, e.g., DCI format 0_0 or 1_0, and a transmission layer number configuration or an antenna port number configuration corresponding to the fallback DCI is different from that corresponding to non-fallback DCI, the terminal device does not perform transmission with the network device using an AI model. For example, if transmission scheduled by fallback DCI uses a default transmission layer number, e.g., transmission layer number 1, and the default transmission layer number is different from a transmission layer number previously indicated via non-fallback DCI, the terminal device does not perform AI-based data transmission or reception for the transmission scheduled by the fallback DCI, but uses a non-AI-based transmission/reception method.

### Embodiment 6: Transmission Bandwidth Configuration / Carrier Frequency Configuration / Subcarrier Spacing Configuration

The terminal device reports a generalization capability of an adopted AI model, where the generalization capability is represented by a transmission bandwidth configuration range, a carrier frequency configuration range, or a subcarrier spacing configuration range corresponding to the AI model.

In embodiments of the present disclosure, the AI model is used for transmission or reception of signals such as reference signals or data. For example, for downlink transmission, the AI model takes a downlink received signal as input and outputs a data detection result or a channel measurement result; and for uplink transmission, the AI model takes data or signals to be transmitted as input and outputs transmission signals processed by a transmitter.

Since transmission and reception of data/signals are performed based on a certain transmission bandwidth, carrier frequency, or subcarrier spacing, training of the AI model relies on values of a transmission bandwidth configuration, a carrier frequency configuration, or a subcarrier spacing configuration used for transmission, and values of the transmission bandwidth configuration, the carrier frequency configuration, or the subcarrier spacing configuration have impact on the input of AI model training data. That is, under different transmission bandwidth configurations, carrier frequency configurations, or subcarrier spacing configurations, the terminal device may train different AI models for transmission or reception.

In some embodiments, the terminal device may train a unified AI model for different transmission bandwidth configurations, different carrier frequency configurations, or different subcarrier spacing configurations, where the AI model has favorable generalization and can be applied to different transmission bandwidth configurations, carrier frequency configurations, or subcarrier spacing configurations indicated by the network device. However, such a training method requires a large dataset, involves complex model parameter adjustment, and makes it difficult to guarantee corresponding transmission performance.

In other embodiments, the terminal device may train different AI models for different transmission bandwidth configurations, carrier frequency configurations, or subcarrier spacing configurations, with each AI model targeting only a subset of configurations. This not only reduces training complexity but also improves final data or signal transmission performance. The AI model obtained by this method has poor generalization. When the network device adopts a different transmission bandwidth configuration, carrier frequency configuration, or subcarrier spacing configuration, the terminal device needs to perform corresponding AI model switching. Different terminal devices may adopt different training methods to obtain AI models with different generalization capabilities. In this case, such generalization capability may be reported to the network device, so that the network device can determine whether adjustment of a transmission bandwidth configuration, a carrier frequency configuration, or a subcarrier spacing configuration will trigger AI model switching at the terminal device.

In some embodiments, the transmission bandwidth configuration range corresponding to an AI model may include one or more of the following:
one AI model used for all transmission bandwidths;
different AI models used for different transmission bandwidths; and
transmission bandwidth ranges applicable to different models.

For example, the UE capability may be configured to indicate whether a same AI model is used for different transmission bandwidth configurations, or to indicate transmission bandwidth ranges applicable to different AI models. For instance, a bitmap is used to indicate transmission bandwidths applicable to an AI model supported by each terminal device, with each bit corresponding to one transmission bandwidth. For example, the transmission bandwidth may be 5 MHz, 10 MHz, 20 MHz, 100 MHz, or the like.

In some embodiments, the carrier frequency configuration range corresponding to an AI model may include one or more of the following:
one model used for all carrier frequencies;
different AI models used for different carrier frequencies; and
carrier frequency ranges applicable to different models.

For example, the UE capability may be configured to indicate whether a same AI model is used for different carrier frequency configurations, or to indicate carrier frequency ranges applicable to different AI models. For instance, a bitmap is used to indicate carrier frequency ranges applicable to an AI model supported by each terminal device, with each bit corresponding to one carrier frequency range. For example, the carrier frequency range may be predefined FR1, FR2, FR3, or the like. Alternatively, the terminal device may indicate that one AI model is used for FR1 and another AI model is used for FR2.

In some embodiments, the subcarrier spacing configuration range corresponding to an AI model may include one or more of the following:
one AI model used for different subcarrier spacings;
different AI models used for different subcarrier spacings; and
subcarrier spacing ranges applicable to different AI models.

For example, the UE capability may be configured to indicate whether a same AI model is used for different subcarrier spacing configurations, or to indicate subcarrier spacings applicable to different AI models. For instance, a bitmap is used to indicate subcarrier spacings applicable to an AI model supported by each terminal device, with each bit corresponding to one subcarrier spacing. Alternatively, the terminal device may indicate that one AI model is used for subcarrier spacings less than or equal to 60 kHz and another AI model is used for subcarrier spacings greater than 60 kHz. For example, the subcarrier spacing may be predefined 15 kHz, 30 kHz, 120 kHz, or the like.

In some embodiments, the terminal device may report to the network device via a bitmap whether the same AI model is used for different transmission bandwidth configurations, carrier frequency configurations, or subcarrier spacing configurations. For example, the terminal device may report 3-bit information, where a first bit indicates whether a same AI model is used for different transmission bandwidth configurations, a second bit indicates whether a same AI model is used for different carrier frequency configurations, and a third bit indicates whether a same AI model is used for different subcarrier spacing configurations. Here, 1 indicates using different AI models and 0 indicates using the same AI model, and vice versa. Based on the information reported by the terminal device, the network device can determine whether adjustment of a transmission bandwidth configuration, a carrier frequency configuration, or a subcarrier spacing configuration will trigger AI model switching at the terminal device.

2. The network device may receive the generalization capability of the AI model reported by the terminal device, where the generalization capability may be represented by the transmission bandwidth configuration range, carrier frequency configuration range, or subcarrier spacing configuration range corresponding to the AI model.

3. Based on the generalization capability, the network device may indicate to the terminal device a transmission bandwidth configuration, a carrier frequency configuration, or a subcarrier spacing configuration associated with the first AI model.

The network device may determine a transmission bandwidth configuration according to the transmission bandwidth configuration range corresponding to the AI model reported by the terminal device, determine a carrier frequency configuration according to the carrier frequency configuration range corresponding to the AI model reported by the terminal device, and determine a subcarrier spacing configuration according to the subcarrier spacing configuration range corresponding to the AI model reported by the terminal device.

When the terminal device reports that its AI model is applicable to any transmission bandwidth configuration, the network device may determine that adjustment of the transmission bandwidth configuration does not require consideration of AI model switching.

When the terminal device reports that its AI model is applicable to any carrier frequency configuration, the network device determines that adjustment of the carrier frequency configuration does not require consideration of AI model switching.

When the terminal device reports that its AI model is applicable to any subcarrier spacing configuration, the network device determines that adjustment of the subcarrier spacing configuration does not require consideration of AI model switching.

When the terminal device reports that its AI model is trained separately for different values of a transmission bandwidth configuration, a carrier frequency configuration, or a subcarrier spacing configuration, the network device needs to consider potential AI model switching at the terminal device caused by the corresponding configuration when indicating the transmission bandwidth configuration, the carrier frequency configuration, or the subcarrier spacing configuration. For example, in a case where AI models are trained separately for FR1 and FR2, the network device should not dynamically switch between FR1 and FR2 to avoid dynamic AI model switching at the terminal device beyond the capability of the terminal device.

In some embodiments, when a transmission bandwidth configuration, a carrier frequency configuration, or a subcarrier spacing configuration is dynamically indicated via DCI signaling, the transmission bandwidth configuration, the carrier frequency configuration, or the subcarrier spacing configuration shall not trigger dynamic AI model switching at the terminal device. That is, the parameter value indicated by the transmission bandwidth configuration, or the carrier frequency configuration, or the subcarrier spacing configuration, e.g., subcarrier spacing, and the original parameter value, namely the first value, shall correspond to the same AI model. This method may also be applied to cases where the transmission bandwidth configuration, the carrier frequency configuration, or the subcarrier spacing configuration is indicated via MAC CE signaling.

In some embodiments, the network device may receive an AI model switching capability, namely the second capability, reported by the terminal device, where the capability is configured to indicate whether the terminal device supports AI model switching based on DCI signaling, MAC signaling, or RRC signaling. If the terminal device does not support AI model switching based on certain signaling, when the network device indicates a transmission bandwidth configuration, a carrier frequency configuration, or a subcarrier spacing configuration via that signaling, the parameter value indicated by the transmission bandwidth configuration, the carrier frequency configuration, or the subcarrier spacing configuration and the original parameter value, namely the first value, shall correspond to the same AI model. That is, the value of the transmission bandwidth configuration, the carrier frequency configuration, or the subcarrier spacing configuration shall not trigger AI model switching at the terminal device.

4. The terminal device may receive the transmission bandwidth configuration, the carrier frequency configuration, or the subcarrier spacing configuration indicated by the network device, and perform transmission with the network device using the first AI model corresponding to the transmission bandwidth configuration, the carrier frequency configuration, or the subcarrier spacing configuration.

In some embodiments, to avoid dynamic AI model switching at the terminal device, when a transmission bandwidth configuration, a carrier frequency configuration, or a subcarrier spacing configuration is indicated via DCI signaling, the terminal device does not expect the parameter value indicated by the transmission bandwidth configuration, the carrier frequency configuration, or the subcarrier spacing configuration to correspond to a different AI model from the original parameter value, namely the first value. That is, the transmission bandwidth configuration, the carrier frequency configuration, or the subcarrier spacing configuration shall not trigger dynamic AI model switching at the terminal device. For example, when the terminal reports that different AI models are used for different subcarrier spacing configurations, if the network device indicates BWP switching via DCI signaling, where different subcarrier spacings may be used for different BWPs, dynamic switching shall not be performed between different subcarrier spacings. That is, the same subcarrier spacing shall be used for the indicated BWP and the original BWP. This method may also be applied to cases where the transmission bandwidth configuration, the carrier frequency configuration, or the subcarrier spacing configuration is indicated via MAC CE signaling.

In some embodiments, the terminal device may report an AI model switching capability, namely the second capability, to the network device, where the capability is configured to indicate whether the terminal device supports AI model switching based on DCI signaling, MAC signaling, or RRC signaling. The terminal device does not expect AI model switching caused by adjustment of a transmission bandwidth configuration, a carrier frequency configuration, or a subcarrier spacing configuration to exceed its reported AI model switching capability. For example, if the terminal device does not support AI model switching based on MAC layer signaling or DCI signaling and a transmission bandwidth configuration is indicated via DCI signaling or MAC layer signaling, the transmission bandwidth configuration shall not trigger AI model switching at the terminal device; for instance, switching may be performed only within a transmission bandwidth range corresponding to the same AI model.

In some embodiments, when different AI models are used for different carrier frequency configurations or subcarrier spacing configurations, transmission between the terminal device and the network device is scheduled by fallback DCI, e.g., DCI format 0_0 or 1_0, and a carrier frequency configuration or subcarrier spacing configuration corresponding to the fallback DCI is different from that corresponding to non-fallback DCI, the terminal device may not perform transmission with the network device using an AI model. For example, if transmission scheduled by fallback DCI uses a default carrier frequency, e.g., FR1, or subcarrier spacing, e.g., 30 kHz, and the default carrier frequency or subcarrier spacing is different from a carrier frequency or subcarrier spacing previously indicated via non-fallback DCI, the terminal device does not perform AI-based transmission or reception for the transmission scheduled by the fallback DCI, but uses a non-AI-based transmission/reception method. This is because most terminal devices can support dynamic switching between AI-based transmission/reception and non-AI-based transmission/reception, but cannot support dynamic switching between different AI models as model deployment takes time.

### Embodiment 7: Cell ID Configuration

1. The terminal device reports a generalization capability of an adopted AI model, where the generalization capability is represented by a cell ID configuration range corresponding to the AI model.

In embodiments of the present disclosure, the AI model is used for transmission or reception of signals such as reference signals or data. For example, for downlink transmission, the AI model takes a downlink received signal as input and outputs a data detection result or a channel measurement result; and for uplink transmission, the AI model takes data or signals to be transmitted as input and outputs transmission signals processed by a transmitter.

Since the terminal device needs to access a cell before transmitting/receiving data/signals, signal transmission is performed between the terminal device and a serving cell. Therefore, training of the AI model may be cell-based, and when the serving cell changes, e.g., after the terminal device accesses a cell with a different cell ID, an adopted AI model may also be different. That is, the terminal device may train a unified AI model for different cells or train different models for respective cells, depending on the generalization capability of the AI model at the terminal device. Different terminal devices may adopt different training methods to obtain AI models with different generalization capabilities. In this case, such generalization capability may be reported to the network device, so that the network device can determine whether cell switching will trigger AI model switching at the terminal device.

In some embodiments, the cell ID configuration range corresponding to an AI model may include one or more of the following:
one AI model used for all cell IDs;
different AI models used for different cell IDs; and
cell ID ranges applicable to different AI models.

For example, the UE capability may use 1-bit information to indicate whether the same AI model is used for data reception when the terminal device accesses cells with different cell IDs. As another example, UE capability may indicate cell ID ranges applicable to different AI models supported by the terminal device, i.e., each AI model is applicable to cells corresponding to a group of cell IDs.

2. The network device may receive the generalization capability of the AI model reported by the terminal device, where the generalization capability may be represented by the cell ID configuration range corresponding to the AI model.

3. Based on the generalization capability, the network device may indicate to the terminal device a cell ID configuration associated with the first AI model.

The network device may determine whether cell switching will trigger AI model switching at the terminal device according to the cell ID configuration range corresponding to the AI model reported by the terminal device.

When the terminal device reports that its AI model is applicable to any cell, the network device determines that cell switching will not trigger AI model switching at the terminal device, and therefore does not need to reserve time for AI model switching at the terminal device during switching.

When the terminal device reports that different AI models are used for different cells, the network device determines that cell switching will trigger AI model switching at the terminal device, and therefore needs to reserve time for AI model switching at the terminal device during switching.

When the terminal device reports cell ID ranges applicable to different AI models, the network device may determine whether cell switching will trigger AI model switching at the terminal device according to the cell ID of a switching target cell and the cell ID of a source cell, and therefore consider reserving time for AI model switching at the terminal device during switching.

4. The terminal device may receive the cell ID configuration indicated by the network device, and perform transmission with the network device using the first AI model corresponding to the cell ID configuration.

The cell ID configuration may be carried by a synchronization signal of a target cell.

In some embodiments, the terminal device may determine whether to perform cell switching and whether cell switching will trigger AI model switching according to the cell ID configuration indicated by the network device. If cell switching may trigger AI model switching, the terminal device needs to reserve time for AI model switching; otherwise, the terminal device may still use the original AI model for data transmission or reception.

### Embodiment 8: MIMO Transmission Scheme Configuration

1. The terminal device may report a generalization capability of an adopted AI model, where the generalization capability is represented by the MIMO transmission scheme configuration range corresponding to the AI model.

In embodiments of the present disclosure, the AI model is used for downlink CSI measurement or for data transmission or reception. For example, for downlink transmission, the AI model takes a downlink received signal as input and outputs a data detection result such as a source bit stream; for uplink transmission, the AI model takes data to be transmitted as input and outputs transmission signals on respective antenna ports; and for CSI measurement, the AI model takes a downlink received signal as input and outputs a CSI measurement result such as RSRP or PMI bits.

Since data transmission/reception or CSI measurement by the terminal device is performed based on a certain MIMO transmission scheme, if an AI model is used for these functions, training needs to be performed based on assumptions of a certain MIMO transmission scheme. The terminal may train a unified AI model for different MIMO transmission scheme configurations or train different AI models for respective MIMO transmission scheme configurations, depending on the generalization capability of the AI model at the terminal device. That is, different terminal devices may adopt different training methods to obtain AI models with different generalization capabilities. In this case, such generalization capability may be reported to the network device, so that the network device can determine whether adjustment of an MIMO transmission scheme configuration will trigger AI model switching at the terminal device.

In some embodiments, the MIMO transmission scheme configuration range corresponding to an AI model may include one or more of the following:
one AI model is used for a single-TRP transmission scheme and a multi-TRP coordination scheme;
different AI models are used for a single-TRP transmission scheme and a multi-TRP coordination scheme;
one AI model is used for an open-loop transmission scheme and a closed-loop transmission scheme; and
different AI models are used for an open-loop transmission scheme and a closed-loop transmission scheme.

In embodiments of the present disclosure, the MIMO transmission scheme may include a single-TRP transmission scheme, a multi-TRP coordination scheme, an open-loop transmission scheme, a closed-loop transmission scheme, and the like.

In embodiments of the present disclosure, a single-TRP transmission scheme or a multi-TRP coordination scheme may be determined according to the number of TCI states configured by the network device for a certain signal or channel, or dedicated signaling, e.g., RRC signaling, may be used to indicate whether a multi-TRP coordination scheme is adopted. The multi-TRP coordination scheme may include an NC-JT scheme, a CJT scheme, an SFN scheme, a repetition scheme, or the like performed by multiple TRPs.

In embodiments of the present disclosure, an open-loop transmission scheme refers to a transmission scheme that does not require precoding information fed back by the terminal device, and a closed-loop transmission scheme refers to a transmission scheme that requires precoding information such as PMI fed back by the terminal device.

In some embodiments, the terminal device may report to the network device via a bitmap whether the same AI model is used for different MIMO transmission scheme configurations. For example, the terminal device may report 2-bit information, where a first bit indicates whether a same AI model is used for a single-TRP transmission scheme and a multi-TRP coordination scheme, and a second bit indicates whether a same AI model is used for an open-loop transmission scheme and a closed-loop transmission scheme. Here, 1 indicates using different AI models and 0 indicates using the same AI model, and vice versa. Based on the information reported by the terminal device, the network device can determine whether adjustment of an MIMO transmission scheme configuration will trigger AI model switching at the terminal device.

2. The network device receives the generalization capability of the AI model reported by the terminal device, where the generalization capability is represented by the MIMO transmission scheme configuration range corresponding to the AI model.

3. Based on the generalization capability, the network device may indicate to the terminal device an MIMO transmission scheme configuration associated with the first AI model.

The network device may determine, according to the MIMO transmission scheme configuration range corresponding to the AI model reported by the terminal device, an MIMO transmission scheme configuration used by the terminal device for CSI measurement or data transmission or reception.

When the terminal device reports that its AI model is applicable to any MIMO transmission scheme configuration, the network device does not need to consider AI model switching when indicating the MIMO transmission scheme configuration.

When the terminal device reports that its AI model is trained separately for different MIMO transmission scheme configurations, the network device needs to consider potential AI model switching at the terminal device caused by the indicated MIMO transmission scheme configuration. For example, in a case where AI models are trained separately for a single-TRP transmission scheme and a multi-TRP coordination scheme, the network device should not dynamically switch back and forth between the two schemes, so as to avoid dynamic AI model switching at the terminal device beyond the capability of the terminal device.

In some embodiments, the network device may not indicate simultaneous transmission or reception of two signals whose adopted MIMO transmission scheme configurations correspond to different AI models, otherwise, the terminal device cannot use two AI models simultaneously for transmission or reception of these signals.

In some embodiments, when an MIMO transmission scheme configuration is dynamically indicated via DCI signaling, the MIMO transmission scheme configuration shall not cause dynamic AI model switching at the terminal device. That is, the parameter value indicated by the MIMO transmission scheme configuration and the original parameter value, namely the first value, shall correspond to the same AI model. This method may also be applied to cases where the MIMO transmission scheme configuration is indicated via MAC CE signaling.

In other embodiments, the network device may receive an AI model switching capability, namely the second capability, reported by the terminal device, where the capability is configured to indicate whether the terminal device supports AI model switching based on DCI signaling, MAC signaling, or RRC signaling. If the terminal device does not support AI model switching based on certain signaling, when the network device configures an MIMO transmission scheme via that signaling, the parameter value indicated by the MIMO transmission scheme configuration and the original parameter value, namely the first value, shall correspond to the same AI model. That is, the value of the MIMO transmission scheme configuration shall not trigger AI model switching at the terminal device.

4. The terminal device may receive the MIMO transmission scheme configuration indicated by the network device, and perform transmission with the network device using the first AI model corresponding to the MIMO transmission scheme configuration.

In some embodiments, when an MIMO transmission scheme configuration is indicated via DCI signaling, the terminal device does not expect the parameter value indicated by the MIMO transmission scheme configuration to correspond to a different AI model from the original parameter value, namely the first value. That is, the MIMO transmission scheme configuration shall not cause dynamic AI model switching at the terminal device. For example, if different AI models are used for the terminal reports that an open-loop transmission scheme and a closed-loop transmission scheme, the network device may not dynamically switch between the open-loop transmission scheme and the closed-loop transmission scheme when indicating an MIMO transmission scheme configuration via DCI signaling. This method may also be applied to cases where the MIMO transmission scheme configuration is indicated via MAC CE signaling.

In some embodiments, for at least a terminal device without multi-model capability, the terminal device does not expect the network device to indicate simultaneous transmission or reception of two signals whose adopted MIMO transmission scheme configurations correspond to different AI models, otherwise, the terminal device cannot use two AI models simultaneously for transmission or reception of these signals. For example, the network device may not indicate the terminal device to simultaneously receive two PDSCHs that adopt a single-TRP transmission scheme and a multi-TRP coordination scheme respectively and correspond to different AI models.

In some embodiments, the terminal device may report an AI model switching capability to the network device, where the capability is configured to indicate whether the terminal device supports AI model switching based on DCI signaling, MAC signaling, or RRC signaling. The terminal device does not expect AI model switching caused by adjustment of an MIMO transmission scheme configuration to exceed its reported AI model switching capability. For example, when the terminal device does not support AI model switching based on DCI signaling and an MIMO transmission scheme configuration is indicated via DCI signaling, the MIMO transmission scheme configuration shall not trigger AI model switching at the terminal device; for instance, switching may be performed only within an MIMO transmission scheme range corresponding to the same AI model.

In some embodiments, when different MIMO transmission scheme configurations use different AI models and data transmission between the terminal device and the network device is scheduled by fallback DCI, e.g., DCI format 0_0 or 1_0, the terminal device may not perform data transmission with the network device using an AI model. For example, the terminal device does not use an AI model for data transmission or reception.

In some embodiments, when different MIMO transmission scheme configurations correspond to different AI models, transmission between the terminal device and the network device is scheduled by fallback DCI, e.g., DCI format 0_0 or 1_0, and an MIMO transmission scheme configuration assumed by the fallback DCI is different from an MIMO transmission scheme configuration corresponding to non-fallback DCI, the terminal device may not perform transmission with the network device using an AI model. For example, when transmission scheduled by fallback DCI adopts a default single-TRP transmission scheme while transmission scheduled by non-fallback DCI is configured with a multi-TRP coordination scheme, the terminal device does not perform AI-based data transmission but uses a non-AI-based transmission/reception method for the transmission scheduled by the fallback DCI. This is because most terminal devices can support dynamic switching between AI-based transmission/reception and non-AI-based transmission/reception, but cannot support dynamic switching between different AI models as model deployment takes time.

Embodiments of the present disclosure provide a communication method. A network device may determine an appropriate parameter configuration according to the generalization capability of an AI model reported by a terminal device, so as to avoid AI model switching beyond the capability of the terminal device, such as dynamic AI model switching or simultaneous transmission based on multiple AI models, or performance loss caused by frequent AI model switching, thereby ensuring performance of AI-based uplink or downlink transmission.

FIG. 5 is a schematic structural diagram of a terminal apparatus according to an embodiment of the present disclosure, applied to a terminal device. As shown in FIG. 5, the terminal apparatus may execute the method in the foregoing embodiments.

A first communication unit is configured to transmit a first capability to a network device, where the first capability is used to represent a parameter configuration range corresponding to one or more AI models supported by the terminal device.

The first communication unit is further configured to receive a parameter configuration from the network device and perform communication with the network device based on the parameter configuration.

In some embodiments, the first communication unit is further configured to perform communication with the network device based on a first AI model corresponding to a value of the parameter configuration, where the first AI model belongs to the one or more AI models.

FIG. 6 is a schematic structural diagram of a network apparatus according to an embodiment of the present disclosure, applied to a network device. As shown in FIG. 6, the network apparatus may execute the method in the foregoing embodiments.

A second communication unit is configured to receive a first capability from a terminal device, where the first capability is used to represent a parameter configuration range corresponding to one or more AI models supported by the terminal device.

The second communication unit is further configured to transmit a parameter configuration to the terminal device based on the first capability, where the parameter configuration is used for communication between the terminal device and the network device.

Those skilled in the art should understand that relevant descriptions of the above communication apparatus in the embodiments of the present disclosure may be understood with reference to relevant descriptions of the communication method in the embodiments of the present disclosure.

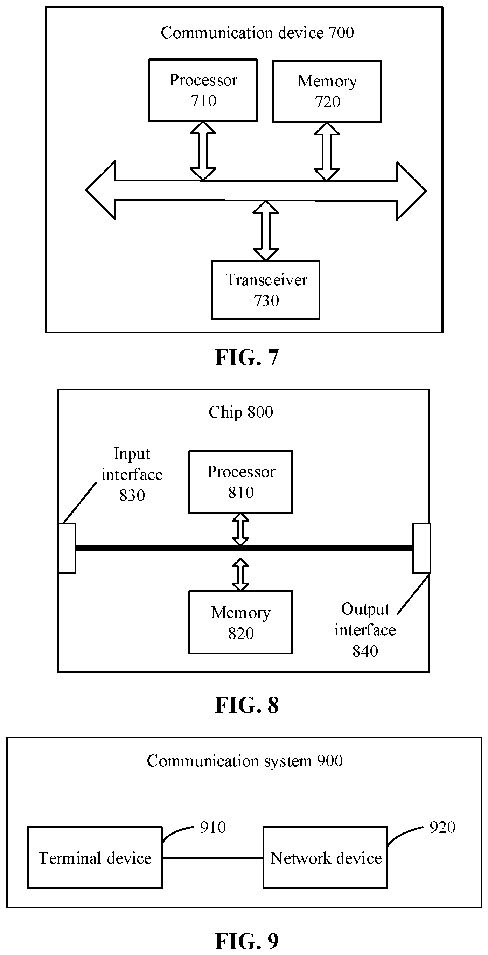

FIG. 7 is a schematic structural diagram of a communication device according to an embodiment of the present disclosure. The communication device may be a terminal device or a network device. The communication device shown in FIG. 7 may include a processor, a memory, and a transceiver. The processor is configured to invoke a program in the memory to execute the method in the foregoing embodiments, and control the transceiver to receive and transmit information during execution of the method.

FIG. 8 is a schematic structural diagram of a chip according to an embodiment of the present disclosure. The chip shown in FIG. 8 includes a processor, a memory, an input interface, and an output interface. The processor may invoke and run a computer program from the memory to implement the method in the embodiments of the present disclosure, and control the input interface to receive information and the output interface to transmit information during execution of the method.

FIG. 9 is a schematic block diagram of a communication system according to an embodiment of the present disclosure. As shown in FIG. 9, the communication system includes a terminal device and a network device. The terminal device may be configured to implement corresponding functions implemented by the terminal device in the above method, and the network device may be configured to implement corresponding functions implemented by the network device in the above method. For brevity, details are not described herein again.

It may be understood that the memory in the embodiments of the present disclosure may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM), used as an external cache. By way of example and not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memory of the systems and methods described herein is intended to include, but is not limited to, these and any other suitable types of memories.

The foregoing descriptions are merely specific implementations of the present disclosure, but the protection scope of the present disclosure is not limited thereto. Any variation or replacement that a person skilled in the art may readily think of within the technical scope disclosed by the present disclosure shall fall within the protection scope of the present disclosure. Therefore, the protection scope of the present disclosure shall be subject to the protection scope of the claims.

## Claims

1. A communication method, implemented by a terminal device, the method comprising:
transmitting a first capability to a network device, wherein the first capability is indicative of a parameter configuration range corresponding to one or more Artificial Intelligence (AI) models supported by the terminal device;
receiving a parameter configuration from the network device; and
communicating with the network device based on the parameter configuration.

2. The method of claim 1, wherein the parameter configuration range corresponding to the one or more AI models comprises: whether the terminal device uses a same AI model for different values of the parameter configuration.

3. The method of claim 1 or 2, wherein the parameter configuration comprises a configuration of one or more of following parameters: Demodulation Reference Signal (DMRS), Channel State Information Reference Signal (CSI-RS), Channel State Information (CSI) report content, Modulation and Coding Scheme (MCS), transport block size, number of transmission layers, transmission bandwidth, number of antenna ports, carrier frequency, subcarrier spacing, Transmission Configuration Indicator (TCI) state, cell identifier (ID), and Multiple-Input Multiple-Output (MIMO) transmission scheme.

4. The method of any one of claims 1 to 3, wherein when the one or more AI models are used for channel estimation or data reception, the first capability is indicative of a DMRS configuration range corresponding to the one or more AI models.

5. The method of claim 4, wherein the DMRS configuration range corresponding to the one or more AI models comprises one or more of:
one AI model corresponding to all DMRS configurations;
different AI models corresponding to different DMRS base sequences;
different AI models corresponding to different DMRS Code Division Multiplexing (CDM) groups;
different AI models corresponding to different DMRS port multiplexing schemes;
different AI models corresponding to different numbers of DMRS symbols; and
different AI models corresponding to different DMRS port sets.

6. The method of any one of claims 1 to 5, wherein when the one or more AI models are used for CSI measurement, the first capability is indicative of a CSI-RS configuration range corresponding to the one or more AI models, and/or a CSI report content configuration range corresponding to the one or more AI models.

7. The method of claim 6, wherein the CSI-RS configuration range corresponding to the one or more AI models comprises one or more of:
one AI model corresponding to all CSI-RS configurations;
different AI models corresponding to different CSI-RS base sequences;
different AI models corresponding to different sets of numbers of CSI-RS ports;
different AI models corresponding to different CSI-RS port multiplexing schemes;
different AI models corresponding to different numbers of CSI-RS symbols; and
different AI models corresponding to different CSI-RS transmission bandwidths.

8. The method of claim 6 or 7, wherein the CSI report content configuration range corresponding to the one or more AI models comprises one or more of:
one AI model for Reference Signal Received Power (RSRP) reporting and CSI reporting;
different AI models respectively for RSRP reporting and CSI reporting;
one AI model for CSI compression and CSI prediction;
different AI models respectively for CSI compression and CSI prediction;
one AI model for CSI compression, CSI prediction, and CSI prediction-and-compression; and
different AI models respectively for CSI compression, CSI prediction, and CSI prediction-and-compression.

9. The method of any one of claims 1 to 8, wherein when the one or more AI models are used for data transmission or data reception, the first capability is indicative of one or more of:
a MCS configuration range corresponding to the one or more AI models;
a transport block size configuration range corresponding to the one or more AI models;
a transmission layer number configuration range corresponding to the one or more AI models;
a transmission bandwidth configuration range corresponding to the one or more AI models;
an antenna port number configuration range corresponding to the one or more AI models;
a carrier frequency configuration range corresponding to the one or more AI models;
a subcarrier spacing configuration range corresponding to the one or more AI models;
a TCI state configuration range corresponding to the one or more AI models; and
a cell ID configuration range corresponding to the one or more AI models.

10. The method of claim 9, wherein the MCS configuration range corresponding to the one or more AI models comprises one or more of:
one AI model for all MCSs;
different AI models for different MCSs;
MCS index ranges applicable to different AI models;
one AI model for all modulation schemes;
different AI models for different modulation schemes;
modulation scheme sets applicable to different AI models;
one AI model for all code rate ranges; and
code rate ranges applicable to different AI models.

11. The method of claim 9 or 10, wherein the transport block size configuration range corresponding to the one or more AI models comprises one or more of:
one AI model for all transport block sizes;
different AI models for different transport block sizes; and
transport block size ranges applicable to different AI models.

12. The method of any one of claims 9 to 11, wherein the transmission layer number configuration range corresponding to the one or more AI models comprises one or more of:
one AI model for all numbers of transmission layers;
different AI models for different numbers of transmission layers; and
transmission layer number ranges applicable to different AI models.

13. The method of any one of claims 9 to 12, wherein the transmission bandwidth configuration range corresponding to the one or more AI models comprises one or more of:
one AI model for all transmission bandwidths;
different AI models for different transmission bandwidths; and
transmission bandwidth ranges applicable to different AI models.

14. The method of any one of claims 9 to 13, wherein the antenna port number configuration range corresponding to the one or more AI models comprises one or more of:
one AI model for all numbers of antenna ports;
different AI models for different numbers of antenna ports; and
antenna port number ranges applicable to different AI models.

15. The method of any one of claims 9 to 14, wherein the carrier frequency configuration range corresponding to the one or more AI models comprises one or more of:
one AI model for all carrier frequencies;
different AI models for different carrier frequencies; and
carrier frequency ranges applicable to different AI models.

16. The method of any one of claims 9 to 15, wherein the subcarrier spacing configuration range corresponding to the one or more AI models comprises one or more of:
one AI model for all subcarrier spacings;
different AI models for different subcarrier spacings; and
subcarrier spacing ranges applicable to different AI models.

17. The method of any one of claims 9 to 16, wherein the TCI state configuration range corresponding to the one or more AI models comprises one or more of:
one AI model for all TCI states;
different AI models for different TCI states;
one AI model for a single TCI state and multiple TCI states; and
different AI models respectively for a single TCI state and multiple TCI states.

18. The method of any one of claims 9 to 17, wherein the cell ID configuration range corresponding to the one or more AI models comprises one or more of:
one AI model for all cell IDs;
different AI models for different cell IDs; and
cell ID ranges applicable to different AI models.

19. The method of any one of claims 1 to 18, wherein when the one or more AI models are used for CSI measurement, data transmission or data reception, the first capability is indicative of a MIMO transmission scheme configuration range corresponding to the one or more AI models.

20. The method of claim 19, wherein the MIMO transmission scheme configuration range corresponding to the one or more AI models comprises one or more of:
one AI model for a single Transmission Reception Point (TRP) transmission scheme and a multi-TRP coordination scheme;
different AI models respectively for a single TRP transmission scheme and a multi-TRP coordination scheme;
one AI model for an open-loop transmission scheme and a closed-loop transmission scheme; and
different AI models respectively for an open-loop transmission scheme and a closed-loop transmission scheme.

21. The method of any one of claims 1 to 20, wherein communicating with the network device based on the parameter configuration comprises:
communicating with the network device based on a first AI model corresponding to a value of the parameter configuration, wherein the first AI model belongs to the one or more AI models.

22. The method of any one of claims 1 to 21, further comprising:
transmitting a second capability to the network device, wherein the second capability is indicative of whether the terminal device supports one or more of:
switching between AI models based on Downlink Control Information (DCI) signaling;
switching between AI models based on Medium Access Control (MAC) signaling; and
switching between AI models based on Radio Resource Control (RRC) signaling.

23. The method of claim 22, further comprising:
refraining from expecting switching between a first AI model corresponding to a value of the parameter configuration and a second AI model corresponding to a first value to exceed the second capability, when the first AI model and the second AI model are different, wherein the first value is a parameter value prior to reception of the parameter configuration.

24. The method of any one of claims 21 to 23, further comprising:
refraining from expecting the first AI model corresponding to the value of the parameter configuration to include at least two different AI models.

25. The method of any one of claims 21 to 24, further comprising:
refraining from expecting the first AI model corresponding to the value of the parameter configuration to be different from a second AI model corresponding to a first value, when the parameter configuration is indicated via DCI signaling and/or MAC signaling, wherein the first value is a parameter value prior to reception of the parameter configuration.

26. The method of any one of claims 1 to 20, wherein
when the parameter configuration is indicated via DCI signaling and/or MAC signaling, and a first AI model corresponding to a value of the parameter configuration is different from a second AI model corresponding to a first value, the terminal device does not communicate with the network device based on the first AI model, wherein the first value is a parameter value prior to reception of the parameter configuration.

27. The method of any one of claims 1 to 20, wherein
when a first AI model corresponding to a value of the parameter configuration comprises at least two different AI models, the terminal device does not communicate with the network device based on the first AI model, wherein the first value is a parameter value prior to reception of the parameter configuration.

28. A communication method, implemented by a network device, the method comprising:
receiving a first capability from a terminal device, wherein the first capability is indicative of a parameter configuration range corresponding to one or more Artificial Intelligence (AI) models supported by the terminal device; and
transmitting a parameter configuration to the terminal device based on the first capability, wherein the parameter configuration is used for communication between the terminal device and the network device.

29. The method of claim 28, wherein the parameter configuration range corresponding to the one or more AI models comprises: whether the terminal device uses a same AI model for different values of the parameter configuration.

30. The method of claim 28 or 29, wherein the parameter configuration comprises a configuration of one or more of following parameters: Demodulation Reference Signal (DMRS), Channel State Information Reference Signal (CSI-RS), Channel State Information (CSI) report content, Modulation and Coding Scheme (MCS), transport block size, number of transmission layers, transmission bandwidth, number of antenna ports, carrier frequency, subcarrier spacing, Transmission Configuration Indicator (TCI) state, cell identifier (ID), and Multiple-Input Multiple-Output (MIMO) transmission scheme.

31. The method of any one of claims 28 to 30, wherein when the one or more AI models are used for channel estimation or data reception, the first capability is indicative of a DMRS configuration range corresponding to the one or more AI models.

32. The method of claim 31, wherein the DMRS configuration range corresponding to the one or more AI models comprises one or more of:
one AI model corresponding to all DMRS configurations;
different AI models corresponding to different DMRS base sequences;
different AI models corresponding to different DMRS Code Division Multiplexing (CDM) groups;
different AI models corresponding to different DMRS port multiplexing schemes;
different AI models corresponding to different numbers of DMRS symbols; and
different AI models corresponding to different DMRS port sets.

33. The method of any one of claims 28 to 32, wherein when the one or more AI models are used for CSI measurement, the first capability is indicative of a CSI-RS configuration range corresponding to the one or more AI models, and/or a CSI report content configuration range corresponding to the one or more AI models.

34. The method of claim 33, wherein the CSI-RS configuration range corresponding to the one or more AI models comprises one or more of:
one AI model corresponding to all CSI-RS configurations;
different AI models corresponding to different CSI-RS base sequences;
different AI models corresponding to different sets of numbers of CSI-RS ports;
different AI models corresponding to different CSI-RS port multiplexing schemes;
different AI models corresponding to different numbers of CSI-RS symbols; and
different AI models corresponding to different CSI-RS transmission bandwidths.

35. The method of claim 33 or 34, wherein the CSI report content configuration range corresponding to the one or more AI models comprises one or more of:
one AI model for Reference Signal Received Power (RSRP) reporting and CSI reporting;
different AI models respectively for RSRP reporting and CSI reporting;
one AI model for CSI compression and CSI prediction;
different AI models respectively for CSI compression and CSI prediction;
one AI model for CSI compression, CSI prediction, and CSI prediction-and-compression; and
different AI models respectively for CSI compression, CSI prediction, and CSI prediction-and-compression.

36. The method of any one of claims 28 to 35, wherein when the one or more AI models are used for data transmission or data reception, the first capability is indicative of one or more of:
a MCS configuration range corresponding to the one or more AI models;
a transport block size configuration range corresponding to the one or more AI models;
a transmission layer number configuration range corresponding to the one or more AI models;
a transmission bandwidth configuration range corresponding to the one or more AI models;
an antenna port number configuration range corresponding to the one or more AI models;
a carrier frequency configuration range corresponding to the one or more AI models;
a subcarrier spacing configuration range corresponding to the one or more AI models;
a TCI state configuration range corresponding to the one or more AI models; and
a cell ID configuration range corresponding to the one or more AI models.

37. The method of claim 36, wherein the MCS configuration range corresponding to the one or more AI models comprises one or more of:
one AI model for all MCSs;
different AI models for different MCSs;
MCS index ranges applicable to different AI models;
one AI model for all modulation schemes;
different AI models for different modulation schemes;
modulation scheme sets applicable to different AI models;
one AI model for all code rate ranges; and
code rate ranges applicable to different AI models.

38. The method of claim 36 or 37, wherein the transport block size configuration range corresponding to the one or more AI models comprises one or more of:
one AI model for all transport block sizes;
different AI models for different transport block sizes; and
transport block size ranges applicable to different AI models.

39. The method of any one of claims 36 to 38, wherein the transmission layer number configuration range corresponding to the one or more AI models comprises one or more of:
one AI model for all numbers of transmission layers;
different AI models for different numbers of transmission layers; and
transmission layer number ranges applicable to different AI models.

40. The method of any one of claims 36 to 39, wherein the transmission bandwidth configuration range corresponding to the one or more AI models comprises one or more of:
one AI model for all transmission bandwidths;
different AI models for different transmission bandwidths; and
transmission bandwidth ranges applicable to different AI models.

41. The method of any one of claims 36 to 40, wherein the antenna port number configuration range corresponding to the one or more AI models comprises one or more of:
one AI model for all numbers of antenna ports;
different AI models for different numbers of antenna ports; and
antenna port number ranges applicable to different AI models.

42. The method of any one of claims 36 to 41, wherein the carrier frequency configuration range corresponding to the one or more AI models comprises one or more of:
one AI model for all carrier frequencies;
different AI models for different carrier frequencies; and
carrier frequency ranges applicable to different AI models.

43. The method of any one of claims 36 to 42, wherein the subcarrier spacing configuration range corresponding to the one or more AI models comprises one or more of:
one AI model for all subcarrier spacings;
different AI models for different subcarrier spacings; and
subcarrier spacing ranges applicable to different AI models.

44. The method of any one of claims 36 to 43, wherein the TCI state configuration range corresponding to the one or more AI models comprises one or more of:
one AI model for all TCI states;
different AI models for different TCI states;
one AI model for a single TCI state and multiple TCI states; and
different AI models respectively for a single TCI state and multiple TCI states.

45. The method of any one of claims 36 to 44, wherein the cell ID configuration range corresponding to the one or more AI models comprises one or more of:
one AI model for all cell IDs;
different AI models for different cell IDs; and
cell ID ranges applicable to different AI models.

46. The method of any one of claims 28 to 45, wherein when the one or more AI models are used for CSI measurement, data transmission or data reception, the first capability is indicative of a MIMO transmission scheme configuration range corresponding to the one or more AI models.

47. The method of claim 46, wherein the MIMO transmission scheme configuration range corresponding to the one or more AI models comprises one or more of:
one AI model for a single TRP transmission scheme and a multi-TRP coordination scheme;
different AI models respectively for a single TRP transmission scheme and a multi-TRP coordination scheme;
one AI model for an open-loop transmission scheme and a closed-loop transmission scheme; and
different AI models respectively for an open-loop transmission scheme and a closed-loop transmission scheme.

48. The method of any one of claims 28 to 47, wherein a first AI model corresponding to a value of the parameter configuration is used for communication between the terminal device and the network device, wherein the first AI model belongs to the one or more AI models.

49. The method of claim 48, wherein a number of the first AI model corresponding to the value of the parameter configuration is one.

50. The method of any one of claims 28 to 49, further comprising:
receiving a second capability from the terminal device, wherein the second capability is indicative of whether the terminal device supports one or more of:
switching between AI models based on Downlink Control Information (DCI) signaling;
switching between AI models based on Medium Access Control (MAC) signaling; and
switching between AI models based on Radio Resource Control (RRC) signaling.

51. The method of claim 50, wherein transmitting the parameter configuration to the terminal device based on the first capability comprises:
transmitting the parameter configuration to the terminal device based on the first capability and the second capability,
wherein when a first AI model corresponding to a value of the parameter configuration is different from a second AI model corresponding to a first value, switching between the first AI model and the second AI model does not exceed the second capability, the first value being a parameter value prior to transmission of the parameter configuration.

52. The method of any one of claims 48 to 50, wherein when the parameter configuration is indicated via DCI signaling and/or MAC signaling, the first AI model corresponding to the value of the parameter configuration is a same AI model as a second AI model corresponding to a first value, wherein the first value is a parameter value prior to transmission of the parameter configuration.

53. A terminal apparatus, comprising:
a first communication unit, configured to:
transmit first capability to a network device, wherein the first capability is indicative of a parameter configuration range corresponding to one or more AI models supported by the terminal device; and
receive a parameter configuration from the network device, and to communicate with the network device based on the parameter configuration.

54. A network apparatus, comprising:
a second communication unit, configured to:
receive first capability from a terminal device, wherein the first capability is indicative of a parameter configuration range corresponding to one or more AI models supported by the terminal device; and
transmit a parameter configuration to the terminal device based on the first capability, wherein the parameter configuration is used for communication between the terminal device and the network device.

55. A terminal device, comprising:
a memory, configured to store a computer program;
a processor, coupled to the memory, configured to invoke and run the computer program from the memory to implement the method of any one of claims 1 to 27; and
a transceiver configured to receive and transmit information during information exchange with other external devices.

56. A network device, comprising:
a memory, configured to store a computer program;
a processor, coupled to the memory, configured to invoke and run the computer program from the memory to implement the method of any one of claims 28 to 52; and
a transceiver, configured to receive and transmit information during information exchange with other external devices.

57. A chip, the chip comprising:
a memory, configured to store a computer program;
a processor, coupled to the memory, configured to invoke and run the computer program from the memory to cause a device equipped with the chip to perform the method of any one of claims 1 to 27, or to perform the method of any one of claims 28 to 52; and
a transceiver, configured to receive and transmit information during information exchange with a device or another chip.

58. A non-transitory computer-readable storage medium, having stored a computer program thereon that, when executed by at least one processor, implements the method of any one of claims 1 to 27 or implements the method of any one of claims 28 to 52.
